(19) Europäisches Patentamt
European Patent Office
Office européen des brevets

(11) **EP 3 171 241 A1**

(12) **EUROPEAN PATENT APPLICATION**
published in accordance with Art. 153(4) EPC

(43) Date of publication:
24.05.2017 Bulletin 2017/21

(51) Int Cl.:
*G05D 1/02* (2006.01)　　　*A01B 69/00* (2006.01)

(21) Application number: 15822571.4

(22) Date of filing: 15.04.2015

(86) International application number:
PCT/JP2015/061542

(87) International publication number:
WO 2016/009688 (21.01.2016 Gazette 2016/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 16.07.2014 JP 2014146163

(71) Applicant: Ricoh Company, Ltd.
Tokyo 143-8555 (JP)

(72) Inventors:
• MATSUMURA, Shohei
Tokyo 143-8555 (JP)
• TOMII, Yasuhiro
Tokyo 143-8555 (JP)
• NOGUCHI, Takashi
Tokyo 143-8555 (JP)
• MASUDA, Kensuke
Tokyo 143-8555 (JP)
• OSHIKIRI, Kohji
Tokyo 143-8555 (JP)
• DENDA, Takeshi
Tokyo 143-8555 (JP)

(74) Representative: Schwabe - Sandmair - Marx
Patentanwälte Rechtsanwalt
Partnerschaft mbB
Joseph-Wild-Straße 20
81829 München (DE)

(54) **SYSTEM, MACHINE, CONTROL METHOD, AND PROGRAM**

(57) The present invention includes a first operation device (104, 106A) configured to perform an operation with respect to a first target; at least one sensor (110, 112, 113) configured to acquire analog information from the first target; and a control device configured to identify the first target based on at least one type of first digital information among a plurality of types of digital information relating to the first target acquired from the analog information acquired by the at least one sensor, and control the operation by the first operation device with respect to the first target identified based on at least one type of second digital information different from the first digital information among the plurality of types of the digital information.

FIG.3

## Description

[Technical Field]

The present invention relates to a system, a machine, a control method, and a program.

[Background Art]

There is known a technology for automatically moving and performing a task by using a machine. For example, in Patent Document 1, a crop sensing head of a reflection base/sensor including and a light source and a detector is coupled to a vehicle, and this vehicle is used to collect crop data of the crop by passing the crop sensing head near the crop. Based on this crop data, the amount of material required by the crop (for example, fertilizer, seeds, nutrition, water, chemicals, etc.) is obtained, and the amount of material to be sprayed from a dispenser connected to the vehicle is adjusted. The material spraying amount is adjusted by changing the speed of the vehicle. When the spraying amount is to be increased, the vehicle speed is decreased, and when the spraying amount is to be decreased, the vehicle speed is increased. The speed is automatically adjusted.

However, this technology requires the tasks of firstly scanning all of the plots in the field by the vehicle to which the crop head is coupled, and then spraying the material to the crop while automatically controlling the movement of the vehicle to which the dispenser is coupled. Therefore, for the task of spraying the material, the vehicle needs to travel in the farm land at least twice. Furthermore, the spraying amount of the material is adjusted by changing the speed of the vehicle, and therefore it is difficult to precisely spray the material according to the status of the individual crops. As described above, it is considered that there is room for a further increase in the efficiency such as reducing the overall task time, and precisely supplying the material based on accurate information for each of the individual targets. Furthermore, even more originality and ingenuity are needed to further increase the efficiency of the overall system by increasing the efficiency of the movement and tasks as described above.

[Prior Art]

[Patent document 1]

Japanese Translation of PCT International Application Publication No. JP-T-2010-517567

[Disclosure of Invention]

[Problems to be Solved by the Invention]

In view of the above, an object of the present invention is to provide a device capable of increasing the efficiency of the overall system.

[Means to Solve the Problems]

A system according to the present invention includes a first operation device configured to perform an operation with respect to a first target; at least one sensor configured to acquire analog information from the first target; and a control device configured to identify the first target based on at least one type of first digital information among a plurality of types of digital information relating to the first target acquired from the analog information acquired by the at least one sensor, and control the operation by the first operation device with respect to the first target identified based on at least one type of second digital information different from the first digital information among the plurality of types of the digital information.

[Effects of Invention]

According to the present invention, the efficiency of the overall system can be increased.

[Brief Description of Drawings]

FIG. 1 is a diagram schematically indicating a configuration of a system in a farm land (agricultural land) according to an embodiment of the present invention.

FIG. 2 is a diagram schematically indicating an information communication system configuration including a server device implementing overall control according to an embodiment of the present invention.

FIG. 3 is a diagram indicating an agricultural machine that is an example of a machine according to an embodiment of the present invention.

FIG. 4 is a diagram indicating another example of the agricultural machine that is an example of a machine according to an embodiment of the present invention.

FIG. 5 is a diagram indicating an example of a transmission device for moving the machine according to an embodiment of the present invention.

FIG. 6 is a diagram indicating another example of the transmission device for moving the machine according to an embodiment of the present invention.

FIG. 7 is a diagram indicating the external view of a stereo camera device that is one type of a sensor device according to an embodiment of the present invention.

FIG. 8 is a diagram indicating a configuration of the stereo camera device according to an embodiment of the present invention.

FIG. 9 indicates a functional block diagram of a function of FPGA installed in the stereo camera device according to an embodiment of the present invention.

FIG. 10 is as schematic diagram for describing the principle for performing ranging by the stereo camera device according to an embodiment of the present invention.

FIG. 11A indicates a reference image according to an embodiment of the present invention.

FIG. 11B indicates a parallax image obtained by an edge detection method with respect to the reference image of FIG. 11A as a comparison target according to an embodiment of the present invention.

FIG. 11C is a conceptual diagram indicating a parallax image obtained by an SGM method with respect to the reference image of FIG. 11A according to an embodiment of the present invention.

FIG. 12A is a conceptual diagram indicating a reference pixel in a reference image captured by the stereo camera device according to an embodiment of the present invention.

FIG. 12B is a diagram for describing a process of detecting a cost (degree of coincidence or dissimilarity, similarity) in a specified range in a comparison image with respect to an area (predetermined reference pixel) included in the reference image, by the stereo camera device according to an embodiment of the present invention.

FIG. 13 is a diagram indicating a relationship between a shift amount and a cost value acquired by the stereo camera device according to an embodiment of the present invention.

FIG. 14 is a diagram schematically expressing a process of combining costs by the stereo camera device according to an embodiment of the present invention.

FIG. 15 is a diagram indicating a relationship between a shift amount and the combined cost values acquired by the stereo camera device according to an embodiment of the present invention.

FIG. 16 is a diagram indicating a configuration of a laser radar device according to an embodiment of the present invention.

FIG. 17 is a diagram indicating an external view of a multispectral camera device (colorimetric camera device) according to an embodiment of the present invention.

FIG. 18 is a diagram indicating a configuration of a multispectral camera device (colorimetric camera device) according to an embodiment of the present invention.

FIG. 19 is a diagram indicating a filter and an aperture that can be installed in the multispectral camera device according to an embodiment of the present invention.

FIG. 20 is a diagram indicating a captured image captured by the multispectral camera device according to an embodiment of the present invention.

FIG. 21 is an enlarged view of a macro-pixel in a captured image captured by the multispectral camera device according to an embodiment of the present invention.

FIG. 22 is a diagram indicating a relationship between the wavelength and the spectral reflectance that can be measured by the multispectral camera device according to an embodiment of the present invention.

FIG. 23A indicates another example of a filter and an aperture that can be installed in the multispectral camera device according to an embodiment of the present invention.

FIG. 23B indicates another example of a filter and an aperture that can be installed in the multispectral camera device according to an embodiment of the present invention.

FIG. 24 is a diagram indicating a typical spectral reflection spectrum with respect to a leaf of a plant.

FIG. 25 is a diagram indicating an example of a monitoring device using the multispectral camera device according to an embodiment of the present invention.

FIG. 26 is a diagram indicating a monitoring device using a celestial sphere camera device according to an embodiment of the present invention.

FIG. 27 is a diagram indicating an external view of the celestial sphere camera device according to an embodiment of the present invention.

FIG. 28 is a diagram indicating an optical system of the celestial sphere camera device according to an embodiment of the present invention.

FIG. 29 is a diagram indicating a configuration of the celestial sphere camera device according to an embodiment of the present invention.

FIG. 30A is a diagram for describing a hemispheric image (back side) captured by the celestial sphere camera device according to an embodiment of the present invention.

FIG. 30B is a diagram for describing a hemispheric image (back side) captured by the celestial sphere camera device according to an embodiment of the present invention.

FIG. 30C is a diagram for describing an equidistant cylindrical image in which an image captured by the celestial sphere camera device is expressed by equidistant cylindrical projection according to an embodiment of the present invention.

FIG. 31 is a diagram indicating another example of a monitoring device using the celestial sphere camera device according to an embodiment of the present invention.

FIG. 32 is a flowchart for describing a process of an initial setting form performing automatic control in the system according to an embodiment of the present invention.

FIG. 33 is a flowchart for describing a subsequent process of an initial setting for performing automatic control in the system according to an embodiment of the present invention.

FIG. 34 is a flowchart for describing an overall process of the movement and the task of the agricultural machine by automatic control in the system according to an embodiment of the present invention.

FIG. 35A is a flowchart for describing details of the processes of steps S162, S170, and S180 in the flowchart indicated in FIG. 34 in the system according to an embodiment of the present invention.

FIG. 35B indicates a reference image among the images captured by the stereo camera device in the process of step S202 in FIG. 35A.

FIG. 36 is a flowchart for describing a subsequent process of the flowchart indicated in FIG. 35.

FIG. 37A is a flowchart for describing details of a process in a case where the process of step S224 of the flowchart indicated in FIG. 35 is simply a movement in the system according to an embodiment of the present invention.

FIG. 37B is a flowchart for describing details of a process in a case where the process of step S224 of the flowchart indicated in FIG. 35 includes continuous tasks in the system according to an embodiment of the present invention.

FIG. 38 indicates the agricultural machine provided for leveling the farm land as an example of the machine for performing continuous tasks according to an embodiment of the present invention.

FIG. 39 is a schematic diagram indicating a levelling task by the agricultural machine according to an embodiment of the present invention.

FIG. 40 is a flowchart for describing details of a process of step S262 in the flowchart indicated in FIG. 37B performed by the agricultural machine that performs a levelling task according to an embodiment of the present invention.

FIG. 41A is a schematic diagram of a bird's-eye view of a relationship between the rotation of a laser radar device for emitting a laser and the position of a laser receiving device, with respect to the agricultural machine that performs a levelling task according to an embodiment of the present invention.

FIG. 41B is a schematic diagram of a bird's-eye view of a relationship between the rotation of a laser radar device for emitting a laser and the position of a laser receiving device, with respect to the agricultural machine that performs a levelling task according to an embodiment of the present invention.

FIG. 41C is a schematic diagram of a bird's-eye view of a relationship between the rotation of a laser radar device for emitting a laser and the position of a laser receiving device, with respect to the agricultural machine that performs a levelling task according to an embodiment of the present invention.

FIG. 42 is a schematic diagram indicating another example of performing a leveling task by the agricultural machine according to an embodiment of the present invention.

FIG. 43 is a schematic diagram indicating a part of the system configuration for identifying a place where a task is needed and to use the agricultural machine to perform a task in the place, according to an embodiment of the present invention.

FIG. 44 is a diagram indicating how the task (fertilizer application) is performed using the agricultural machine according to an embodiment of the present invention.

FIG. 45A is a diagram indicating a fertilizer application device as a task device used by the agricultural machine according to an embodiment of the present invention.

FIG. 45B is a cross-sectional view of the fertilizer application device according to an embodiment of the present invention.

FIG. 46 is a flowchart of a process by the servicer device for identifying the place to perform a task based on information from a monitoring device according to an embodiment of the present invention.

FIG. 47 is a diagram indicating a flowchart for describing details of the process of step S224 in the flowchart of FIG. 35 when performing a task upon determining whether a task is needed for each target by the agricultural machine according to an embodiment of the present invention.

FIG. 48 is a diagram indicating operations when the electrically driven agricultural machine interrupts a task and charges the battery according to an embodiment of the present invention.

FIG. 49 is a diagram indicating a flowchart relevant to operations executed when the agricultural machine is unable to execute an operation that has been initially scheduled because the remaining amount of fuel or a task resource becomes low according to an embodiment of the present invention.

FIG. 50A is a diagram schematically indicating the measurement of a distance to a target used for matching positions in order to accurately position the agricultural machine at a task interruption position according to an embodiment of the present invention.

FIG. 50B is a diagram schematically indicating the measurement of a distance to a target used for matching positions in order to accurately position the agricultural machine at a task interruption position according to an embodiment of the present invention.

FIG. 51 is a diagram indicating a state immediately after charging a battery using a noncontact charging device by an electrically driven agricultural machine according to an embodiment of the present invention.

FIG. 52 is a diagram indicating detecting an abnormality such as a destructive animal and chasing off the destructive animal in the system according to an embodiment of the present invention.

FIG. 53 is a diagram schematically indicating a bird's-eye view of the state indicated in FIG. 52 in the system according to an embodiment of the present invention.

FIG. 54 is a flowchart indicating a process performed when an abnormality occurs in the system according to an embodiment of the present invention.

FIG. 55 is a flowchart indicating a subsequent process of the flowchart indicated in FIG. 54 according to an embodiment of the present invention.

FIG. 56 is a diagram indicating an image of an abnormality (destructive animal) detected by the agricultural machine and information of a distance and a size displayed by being superimposed on the image according to an embodiment of the present invention.

FIG. 57 is a diagram indicating a mobile sprinkler moving and performing a task (water spraying) as another example of the agricultural machine according to an embodiment of the present invention.

FIG. 58 is a diagram indicating a quadcopter moving (flying) and performing a task (scattering) as another example of the agricultural machine according to an embodiment of the present invention.

FIG. 59 is a diagram indicating another example of the information communication system according to an embodiment of the present invention.

FIG. 60 is a diagram indicating an example of a construction task machine as another example of a movable machine (task machine) instead of the agricultural machine according to another embodiment of the present invention.

[Reference Signs List]

| 100 | agricultural machine |
| 100A, 100C | tractor |
| 110 | stereo camera device |
| 112 112-2 | laser radar device |
| 113 | multispectral camera device |
| 310 | cost calculating unit |
| 320 | cost combining unit |
| 330 | parallax value deriving unit |
| 350, 360 | crop |
| 500, 555 | farm land monitoring device |
| 501 | celestial sphere camera device |
| 550 | state monitoring device |
| 704 | server |
| 705 | video server |
| 706, 708 | database |
| 707 | operation management server |
| 710, 712 | user terminal |
| 850 | sprinkler |

| 1100 | helicopter |
| 1500 | overall system |
| 1501 | system |
| 1502 | information communication system |

[Best Mode for Carrying Out the Invention]

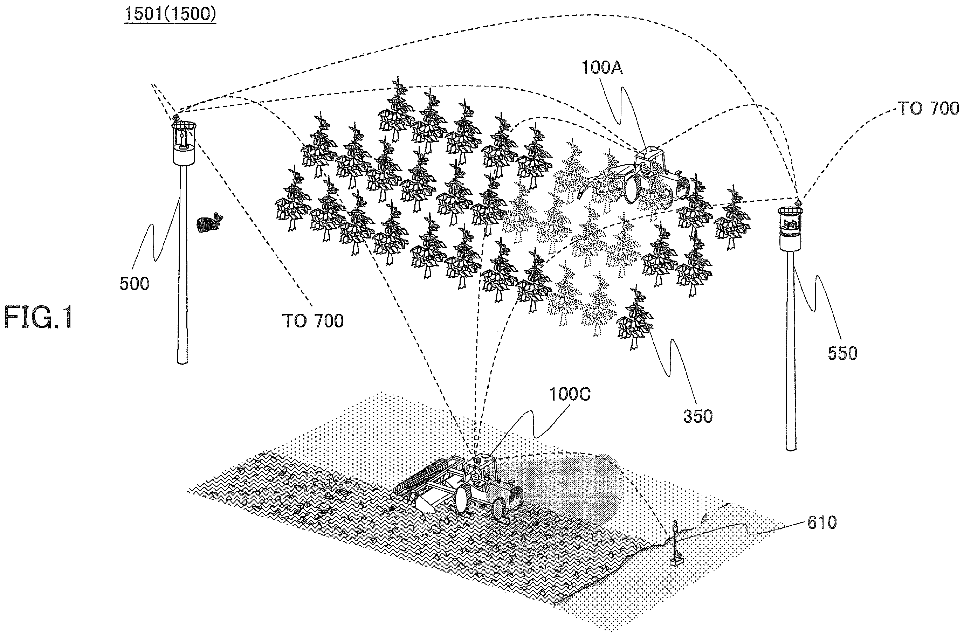

In the following, a description is given of an embodiment of the present invention by using FIGS. 1 through 60. The present embodiment indicates examples of a movable body itself, including travelling machines such as an agricultural machine and a construction machine, a flight machine, a ship, a submarine machine, and a robot, etc., that performs tasks while moving and performs tasks after moving, and a system for directly or indirectly controlling these movable bodies to execute a desired task. In the present embodiment, various movable bodies may be applied as described above; however, here, a description is given of basic configurations and operations with respect to an agricultural machine, by which the movements and the contents of tasks are intuitively easily understandable.

[Overview of overall system]

<System configuration in farm land>

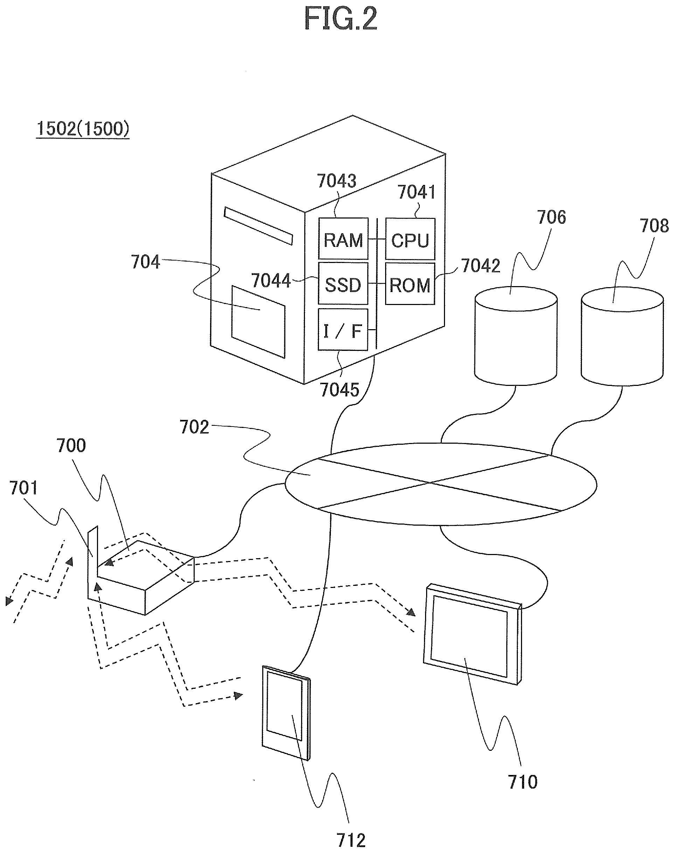

An issue to be addressed in agricultural work in a farm land is to increase the efficiency of the movement of an agricultural machine such as a tractor and tasks using the agricultural machine. These movements and tasks are preferably automatically controlled, without using manpower as much as possible. FIG. 1 indicates a configuration of a system 1501 in a farm land to which the present embodiment is applied. An overall system 1500 according to the present embodiment includes the entirety of the system 1501 of FIG. 1 and an information communication system 1502 of FIG. 2. In the following, a description with respect to the overall system 1500 may be a description with respect to the system 1501 or the information communication system 1502, and a description with respect to the system 1501 or the information communication system 1502 may be a description with respect to the overall system 1500.

The farm land of FIG. 1 includes a tractor as an agricultural machine 100, a crop 350, a farm land monitoring device 500 using a celestial sphere camera, a state monitoring device 550 using a multispectral camera (or a colorimetric camera), and a laser reception position feedback device (laser reception device) 610 for performing a ground making (ground leveling) task in the farm land. The configurations and operations of the respective machines and devices are described below in detail.

The dashed lines in the figure indicate the transmission and reception of information by wireless communication, and the agricultural machine 100, the farm land monitoring device 500, and the state monitoring device 550, etc., construct a wireless communication network. This wireless communication is connected to a wireless access point 700 of the information communication system 1502 indicated in FIG. 2. As described above, the information communication system 1502 operates in cooperation with the agricultural machine 100, the farm land monitoring device 500, and the state monitoring device 550, etc., and therefore manual operations are minimized to initial settings, etc., and subsequently, the movements and tasks by the agricultural machine 100 can be performed according to automatic control. Accordingly, the efficiency of tasks can be increased. Operations of the information communication system 1502 using these wireless communications are described below in detail.

Note that the farm land of FIG. 1 is an outdoor farm land; however, the farm land is not so limited. Greenhouse cultivation using a vinyl hothouse or other cases where crops are produced indoors are also included in the present embodiment.

The overall system 1500 according to the present embodiment is constructed by the system 1501 in the farm land and the information communication system 1502 described next. The overall system 1500 performs efficient agricultural work by using these machines and devices while omitting manual operations as much as possible.

Note that alphabetical letters such as A, B, and C are appended after the reference numerals in the figures (numbers in the figures), for the purpose of distinguishing functions that are basically the same but partially different, with respect to the device, the machine or the component, etc., denoted by the reference numeral. In the descriptions of the embodiments, when there is no need for distinguishing these functions, the alphabetical letters are omitted. In this case, all of the machines and devices denoted by alphabetical letters are targets of the description.

Furthermore, an element having a hyphen and a number indicated after a reference numeral has a different configuration from an element that is denoted only by the reference numeral, although the function is the same or similar. In the following descriptions, when the elements are not intended to be distinguished, the hyphen and the number after the reference numeral are omitted. In this case, all of the machines and devices denoted by only the reference numeral and denoted by the reference numeral and a hyphen and a number are targets of the description.

Furthermore, in the following descriptions, when reference numerals are continuously expressed with a comma in between the reference numerals, as in "user terminal 710, 712", this basically means "a certain reference numeral and/or another reference numeral" or "at least one of all of the reference numerals". The above example means "user terminal 710 and/or 712" or "at least one of user terminals 710 and 712".

<Information communication system configuration>

FIG. 2 indicates a configuration of the information communication system to which the present embodiment is applied. The present information communication system 1502 includes the wireless access point 700, the Internet 702, a server 704, a database 706, a database 708, a user terminal 710, and a user terminal 712.

The wireless access point 700, the server 704, and the databases 706, 708 are connected to the Internet 702 in a wired manner; however, the connection is not so limited, the connection may be made in a wireless manner. Furthermore, the user terminal 710, 712 may be directly connected to the Internet 702 in a wired or wireless manner, or may be connected to the Internet 702 via the wireless access point 700 or other relay devices.

The wireless access point 700 is an outdoor long-distance wireless LAN access point performing information communication with machines and devices in the farm land, and includes a directional antenna 701. When information is not communicated from a particular direction, a non-directional antenna may be used as the directional antenna 701. Furthermore, the wireless access point 700 is a router type, and includes a routing function and a network address translation (NAT) function. By the routing function, the wireless access point 700 is able to select and optimum path and send a packet, when sending a packet to a destination host in a TCP/IP network. Furthermore, by the NAT function, a router and a gateway at the boundary between two TCP/IP networks can automatically convert both IP addresses and transfer data. By these functions, information can be efficiently communicated with the server 704, etc.

As the wireless standard, a standard conforming with the IEEE 802.11 series that is a reference standard is used; however, the standard is not so limited. For example, the W-CDMA (UMTS) method, the CDMA2000 1X method, and the Long Term Evolution (LTE) method, etc., that are used in a mobile communication system may be used.

The server 704 includes a CPU 7041, a ROM 7042, a RAM 7043, a Solid State Drive (SSD) 7044, and an interface (I/F) 7045. Note that in addition to the SSD 7044, or instead of the SSD 7044, a hard disk may be provided. The CPU 7041 is the subject that executes programs in the server 704. In the ROM 7042, contents to be processed by the CPU 7041 immediately after the power is turned on, and a group of instructions that are minimum requirements, are recorded. The RAM 7043 is a memory for temporarily storing data to be processed by the CPU 7041. The server 704 functions as a control device for controlling the agricultural machine 100 and various devices including the farm land monitoring device 500, 555 and the state monitoring device 550.

The server 704 performs information communication with the agricultural machine 100, the farm land monitoring device 500, and the state monitoring device 550 indicated in FIG. 1, via the wireless access point 700. Furthermore, the server 704 also performs information communication with the databases 706, 708, and the user terminal 710, 712. The operations executed by the server 704 are described below. The operations executed by the server 704 are executed as the CPU 7041 loads a program stored in the SSD 7044 into the RAM, and the CPU 7041 executes the program based on the data loaded in the RAM. Note that the programs stored in the SSD 7044 can be updated. Furthermore, the programs may be stored in a portable recording medium such as a CD-ROM, a DVD-ROM, an SD card, and a USB memory; in this case, the programs are read from these media by the server 704 and the programs are executed. Furthermore, the server 704 is connected to the Internet 702 via the interface.

Here, the overall system 1500 exchanges information by wireless communication, and therefore an issue to be addressed is to accurately send and receive information and secure the security with respect to the information that is sent and received. For this reason, the server 704 determines whether the agricultural machine 100 and the user terminal 710, 712, etc., are positioned in a particular area such as the farm land or an information communication related facility, based on position information acquired from the agricultural machine 100 and the user terminal 710, 712, etc. When these devices are positioned in a particular area, the server 704 performs an authentication process with the agricultural machine 100 and the user terminal 710, 712, etc., and only when the authentication is successful, the server 704 applies the overall system 1500 according to the present embodiment. That is, the information that is communicated in the overall system 1500 is encrypted, and only when the authentication is successful, a key for decryption is given, and meaningful information communication becomes possible. On the other hand, when the authentication is unsuccessful, the information cannot be decrypted, and therefore meaningful information communication is not possible, and the overall system 1500 cannot be used. As described above, the safety of the overall system 1500 is increased. Furthermore, assuming that the agricultural machine 100 is stolen, if the agricultural machine 100 cannot be used when the authentication is not successful, theft can be effectively prevented. Note that the authentication process may be performed, regardless of whether the device for using the information communication system 1502 is positioned within a particular area. The authentication may be performed as the user ID and the password of the user are input as in the present embodiment, or a unique ID of a machine or a device may be used in the case of the agricultural machine 100, the farm land monitoring device 500, and the state monitoring device 550. Furthermore, when safety is not considered, there is no need for the processes of authentication, encryption, or decryption.

Furthermore, when the overall system 1500 or part of the overall system 1500 is provided to a user, it is preferable to accurately and easily perceive the usage of the overall system 1500 and to efficiently charge a usage fee, etc., of the overall system 1500 to the user. For this reason, the server 704 also performs the charging process (issuing a bill) described below. As described above, the server 704 performs many processes, and therefore a high-performance, robust computer is used. However, the processes performed by the server 704 as described above or described below, may be divided among a plurality of servers (computers). For example, the processes may be divided among a server for management, a server for authentication/analysis, and a server for managing the charging, of the overall system 1500.

Furthermore, the system is established as a plurality of elements operate in cooperation with each other as in the case of the overall system 1500, and therefore an issue to be addressed is to quickly attend to failures of elements in the system. In order to address this issue, the server 704 monitors whether failures such as breakdowns occur in the agricultural machine 100, the farm land monitoring device 500, 555, and the state monitoring device 550. When a failure is detected, the server 704 automatically reports the failure to the provider of the overall system 1500 including the information communication system 1502 or to the service provider according to the overall system 1500 and the user terminal 710, 712. Note that when the agricultural machine 100, etc., detects a failure such as a breakdown, the agricultural machine 100 may report the failure to the server 704, without waiting for a query from the server 704. As described above, the overall system 1500 is able to attend to failure, and therefore when a defect occurs in the system, the service provider, etc., is able to quickly perceive the situation, and attend to the defect.

One issue to be addressed in the overall system 1500 is to accurately recognize an obstacle in the travelling direction and the crop that is the target of the task, for automatic travelling. Thus, in order to accurately and quickly perform this recognition process, the database 706 stores various kinds of data. The server 704 uses the data stored in the database 706 to perform the recognition process described below. The data that is stored in the database 706 is mainly image data (standard pattern, etc., used for the recognition process) and information indicating the attribute and type of the image data and the action of the agricultural machine 100 corresponding to the type. The image data and the data indicating the attribute and type, etc., are stored in a state of being associated with each other. Note that the database 706 may store content data for providing information via the Internet 702. In this case also, the image data and data indicating the attribute and type of the image data, etc., are associated with each other. As this kind of stored data increases, the precision of the recognition process will increase.

In addition to the above recognition process, it is important to store the task information and the state of the crop that is the task target in the farm land, and efficiently perform the above charging process and future tasks. Therefore, the database 708 is a storage location for storing information sent from the farm land, mainly from the agricultural machine 100, the farm land monitoring device 500, and the state monitoring device 550, etc. For example, the information includes the start time, the interruption time, and the end time of a task, information of a location where a task is needed, the task position such as the location where a fertilizer has been applied and the year/month/date/time of the task, a Normalized Difference Vegetation Index NDVI described below, and pest information. By storing these kinds of information as a database, analyzing the stored data, and utilizing the data, it is possible to increase the efficiency in future agricultural management. That is, it is possible to analyze the information stored by the server 704, etc., derive a particular tendency in the growth status and the shipment period of crops, and identify, for example, how much a fertilizer is to be applied in order to obtain the crop of a target quality and to obtain the crop in a desired time period, based on the tendency. In particular, by the value of the Normalized Difference Vegetation Index NDVI, the harvest period can be anticipated, and therefore it is preferable to store many information items based on the crop that is grown in the farm land.

Furthermore, the sales price of the crop is determined by the relationship between demand and supply, and therefore the crop is preferably shipped at a timing when the demand is high. Thus, the database 708 also stores shipment information and stock information from the market. For example, information that can be identified such as a wireless tag and a barcode is applied to (the package of) the crop to be shipped. At timings of being transported and stored from when the crop is shipped to when the crop goes on the market, the type of the crop is acquired from the identification information, and information including the information that is identified, the identified location, and the identified time, is sequentially stored in the database 708. Note that the identified information is acquired by a system including a wireless tag reading device or a barcode reader, and the information is stored in the database 708, via the Internet 702, together with information needed for tracking the crop, such as identified time information and identified location information, etc. Accordingly, the user (using the user terminal 710, 712) and the server 704 according to the present embodiment are able to track the movement of the crop and determine the status of demand for the crop. That is, the crop that is favored by the consumers has low stock or moves fast, and therefore the server 704 (or the user via the user terminal 710, 712) is able to analyze the information stored in the database 708 and identify such crop. Then, in order to quickly ship the crop that is favored by the consumers, the server 704 controls the agricultural machine 100, etc., to apply a fertilizer, give water, and supply carbon dioxide, etc., to the crop, such that the growth of plant life is promoted and the crop can be harvested at an early time.

Furthermore, if the harvest period and the harvest amount of the crop, which is the task target, can be forecasted, a greater value can be provided by the system user. In order to realize this value, the server 704 is able to perform multivariate analysis and analysis according to instructions from the user terminal 710, 712, by using conditions under which the crop has actually grown (growth conditions) such as the Normalized Difference Vegetation Index NDVI, the degree of water stress, the amount of water spraying and fertilizer application, the sunshine duration, the temperature, and the humidity, etc., the degree of growth under such conditions, the harvest period, and the harvest amount of plant life. As this kind of stored data increases, the precision of the output (harvest period and harvest amount) forecast will increase. Note that the above growth conditions can be acquired by the server 704 from one of or a combination of the agricultural machine 100, the farm land monitoring device 500, 555, and the state monitoring device 550 in the farm land, content information (weather information, etc.) relevant to the environment provided via the Internet, and input from the user. Note that the forecasted output is sent to and displayed at the user terminal 710, 712. Furthermore, the forecast information of this output can also be used as treasure data that can be independently sold to another user or customer through an electric communication line such as the Internet or by being provided in a recording medium recording the forecast information.

Note that the databases 706, 708 are described as separate configurations from the server 704; however, at least one of the databases 706, 708 may be provided in the server 704. In this case, the area of the SSD may be divided to constitute the respective databases. Alternatively, at least one of the database 706 and the database 708 may be connected in a wired or wireless manner to the server 704 without involving the Internet 702. By this connection, there is no need for communication via the Internet, and therefore it is possible to increase the speed of the process that requires access to the database.

The user terminal 710 is a tablet type computer. Furthermore, the user terminal 712 is a mobile type computer that is not limited by the location of use, like a smartphone, etc. These terminals have a function of receiving Global Positioning System (GPS) signals from four satellites and identifying the present position. Note that when the absolute positions of the farm land monitoring device 500, 555, and the state monitoring device 550, etc., are known, the terminals may receive signals from three or more of these devices and identify the present position according to the attenuation in these signals and the delay in the reception.

Note that the user terminals 710 and 712 are not limited to a tablet type computer or a mobile type computer; the user terminals 710 and 712 may be a desktop computer or a built-in computer that is built in something, etc., or a wearable type computer such as a watch or glasses, etc.

These user terminals 710, 712 are able to send, via the server 704, instructions to the agricultural machine 100, the farm land monitoring device 500, 555, and the state monitoring device 550 in the farm land. For example, an instruction to start a task may be sent to the agricultural machine 100. Furthermore, the user terminals 710 and 712 are able to acquire, via the server 704, a report and information from the agricultural machine 100, the farm land monitoring device 500, and the state monitoring device 550 in the farm land. For example, the user terminals 710, 712 are able to display an image acquired by the agricultural machine 100, the farm land monitoring device 500, and the state monitoring device 550. The server 704 monitors the exchange of information between these user terminal 710, 712 and the agricultural machine 100, the farm land monitoring device 500, and the state monitoring device 550, and records the exchange of information in the database 706 and the database 708. Note that when the server 704 does not perform monitoring, the user terminal 710, 712 is able to directly perform information communication with the agricultural machine 100, the farm land monitoring device 500, 555, and the state monitoring device 550, without involving the server 704.

Note that the information communication system 1502 according to the present embodiment is a so-called cloud type system that exchanges information via the Internet 702; however, the information communication system 1502 is not so limited. For example, an exclusive-use communication network may be constructed in a facility of users, and information may be exchanged only by the exclusive-use communication network or by a combination of the exclusive-use communication network and the Internet. Accordingly, high-speed information transmission is possible. Furthermore, the functions of the server 704 and processes performed by the server 704 may be included in the agricultural machine 100. Accordingly, the processing speed of tasks, etc., by the agricultural machine 100 can be further increased.

Note that the overall system 1500 according to the present embodiment includes the system 1501 in the farm land indicated in FIG. 1 and the information communication system 1502 indicated in FIG. 2; however, the server 704 and the databases 706, 708 of the information communication system 1502 described above may be incorporated in the agricultural machine 100 and the farm land monitoring device 500 in the system 1501.

[Description of agricultural machine, device]

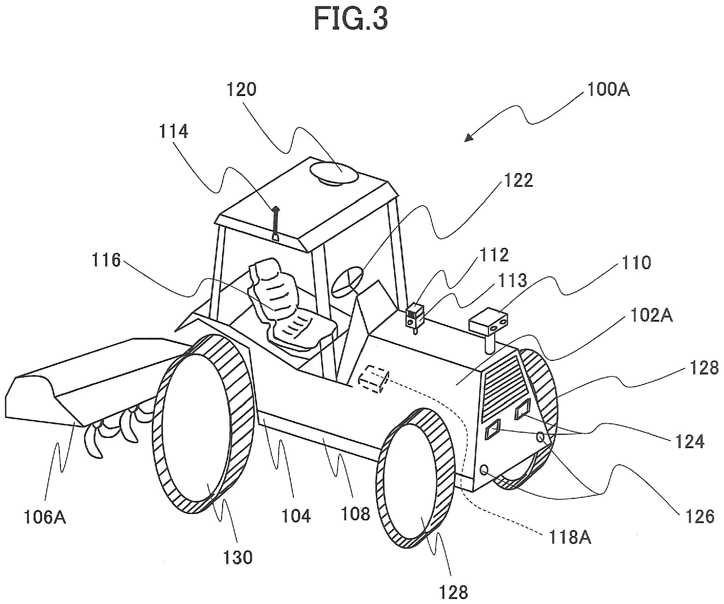

Next, by using FIGS. 3 through 31, a description is given of an agricultural machine, various sensor devices provided in the agricultural machine, etc., and a device installed in the farm land, according to the present embodiment.

<Agricultural machine>

An agricultural machine, which is one of the constituent elements of the overall system 1500, automatically travels based on an instruction from the server 704, and automatically performs tasks with respect to the crop (example of a first target) and the land (example of a second target) that are task targets, in order to realize efficient tasks. FIG. 3 is a diagram indicating the external view of an agricultural machine 100A. Note that in other figures, elements, which are denoted by the same reference numerals, have the same functions, and therefore descriptions of such elements may be omitted.

The agricultural machine 100A indicates a tractor; however, the agricultural machine according to the present embodiment may be other agricultural machines, such as a machine that performs a task while moving, including a rice planting machine, a combine, a binder, a feed crop machine, a robot agricultural chemical diffusing machine, a movable sprinkler, a product harvesting robot, and an agricultural work flying object, etc.

The agricultural machine 100A is provided with a motor 102A, a transmission device 104, a task device 106A, a support device 108, a stereo camera device 110, a laser radar device 112, a multispectral camera device 113, a wireless communication antenna 114, a manual operation unit 116, a control device 118A, a GPS antenna 120, a steering device 122, a pair of lamps 124, a set of ultrasonic sonar devices 126, a set of front wheels 128, and a set of rear wheels 130.

The motor 102A is inside the agricultural machine 100A, and indicates a motor such as an engine (internal combustion engine) or a part that receives energy. In the present embodiment, an internal combustion engine is a diesel engine that uses diesel oil as the fuel; however, the engine is not so limited. The engine may be a gasoline engine that uses gasoline as fuel or a diesel engine that uses crude oil as fuel. According to operations of the throttle pedal in the manual operation unit 116 and control signals from the control device 118A, the speed of the reciprocating motion of the piston in the cylinder is changed. There is also provided an electric generator for charging a battery 224 described below. Note that in the case of an agricultural machine that moves only by electricity, the motor 102A is used as the motor. The travelling speed of the agricultural machine is changed by changing the rotational speed of the motor. Furthermore, the motor 102A may be a hybrid type motor, in which an electric motor and an internal combustion engine are combined. Furthermore, the motor 102A may be an engine that generates motive energy by an engine that uses hydrogen as fuel or a fuel cell.

The transmission device 104 is a part that transmits and converts the received energy, such as a belt, a chain, and a gear, etc. (the transmission device 104 is an example of an operation device). That is, the transmission device 104 is a device for transmitting the motive energy, which is generated by the motive energy generation source (internal combustion engine and motor, etc.) of the motor 102A, to the respective units of the agricultural machine 100. Details of the transmission device 104 are described below.

The task device 106 is a part that operates for the purpose of performing a desired task or work (for example, an action device), such as a plow, a seeding machine, a planting device, a fertilizer application device, and a carbon dioxide generating device. The task device 106A indicates a tilling device provided with a plurality of tilling claws. The task device 106A, which is pulled by the agricultural machine 100A, is different for each type of task. The task device 106A is an example of an operation device.

The support device 108 is a part for holding the motor 102A, the transmission device 104, and the task device 106A respectively at appropriate positions.

The stereo camera device 110 is an imaging sensor device for acquiring a stereo image mainly for ranging, and includes two optical systems and an imaging element. This stereo camera device 110 is a device for detecting an obstacle and a task target in the travelling direction of the agricultural machine 100, and detecting the distance to the measurement target and the size of the target, and fulfills a large role in the automatic travelling of the agricultural machine 100A (the distance (including the parallax) and the size are examples of second digital information or fourth digital information). The stereo camera device 110 is set to be rotatable with respect to a vertical axis, near the front end of the agricultural machine 100A. The stereo camera device 110 is rotated manually or may be rotated according to control by the control device 118A. By setting the stereo camera device 110 near the front end of the agricultural machine 100A, images in the front of the agricultural machine 100A can be easily acquired, and the ranging precision is increased. Note that the setting position is not limited to a position near the front end; for example, the stereo camera device 110 may be set at a position where the surrounding area of the agricultural machine 100A can be easily viewed, such as on the roof where the wireless communication antenna 114 and the GPS antenna 120 are set. Furthermore, in order to accurately perceive the status around the agricultural machine 100A, a plurality of stereo camera devices 110 may be set, such as at the front and the back and/or the side surfaces of the agricultural machine 100A. Furthermore, the rotation is not limited to only one axis as in the present embodiment; the stereo camera device 110 may be rotatable with respect to a plurality of axes such that an image of a desired position and angle can be obtained. In this case also, the stereo camera device 110 may be rotated manually or may be rotated according to control by the control device 118A. The configuration, etc., of this stereo camera device 110 is described below in detail. Note that to obtain a captured image having a higher contrast than a regular captured image, a polarizing filter may be set on the light receiving side of the imaging elements (image sensors 13a, 13b) of the stereo camera device 110, to acquire polarization images of S polarization and P polarization. By using such a polarization stereo camera device as the stereo camera device 110, it is possible to easily distinguish between objects such as the ridges and the frost in the farm land, which are difficult to distinguish by a normal camera, because these objects can be detected at high contrast by a polarization stereo camera device. Note that when there is no need to measure the distance, a polarization camera device having a single imaging element may be set in the agricultural machine 100, instead of the stereo camera device 110.

The laser radar device 112 according to the present embodiment is a sensor device that outputs a laser of a predetermined wavelength while scanning the laser two-dimensionally, and recognizing the distance to an object based on a reflected light from the object. The laser radar device 112 is also referred to as a LIDAR (Light Detection And Ranging) device and a laser range finder device. Note that the laser may be scanned one-dimensionally. This laser radar device 112 is set so as to be rotatable with respect to a vertical axis, at a position above the multispectral camera device 113. The setting position is not limited to above the multispectral camera device 113. For example, in the agricultural machine 100C described below, the laser radar device 112 is rotatably set on the roof. Furthermore, the rotation is not limited to only one axis as in the present embodiment; the laser radar device 112 may be rotatable with respect to a plurality of axes such that the laser may be emitted and entered at a desired position and angle. These rotation motions are controlled manually or controlled by the control device 118A. The configuration and operations of the laser radar device 112 are described below in detail. The multispectral camera device 113 is an imaging sensor device for acquiring spectral information from an object, and can acquire the crop growth status, etc. This multispectral camera device 113 is set so as to be rotatable with respect to a vertical axis, and is provided with the laser radar device 112 nearby. The nearby laser radar device 112 emits a laser beam of a predetermined wavelength, and the reflectance of this laser beam can be perceived by a surface that is the captured image, and therefore the accurate growth status of the crop can be observed. Furthermore, the rotation is not limited to only one axis as in the present embodiment; the multispectral camera device 113 may be rotatable with respect to a plurality of axes such that an image of a desired position and angle can be obtained. These rotation motions are controlled manually or controlled by the control device 118A. Note that when the multispectral camera device 113 does not obtain the spectral information by using the reflection of a laser beam of the laser radar device 112, the multispectral camera device 113 does not have to be provided near the laser radar device 112.

The wireless communication antenna 114 is an antenna for sending and receiving information by wireless communication, with another agricultural machine 100, the farm land monitoring device 500, the state monitoring device 550, and the wireless access point 700, etc. The wireless communication antenna 114 is attached to the roof of the agricultural machine 100A, such that wireless signals can be easily received. This wireless communication antenna 114 is also able to perform wireless relaying.

The manual operation unit 116 is a part for manually operating the agricultural machine 100A. The manual operation unit 116 includes a steering wheel, a throttle pedal, the brake pedal, and the driver's seat, etc., which are parts of the steering device 122 described below.

The control device 118A exchanges information with the motor 102A, the transmission device 104, the task device 106A, the stereo camera device 110, the laser radar device 112, the wireless communication antenna 114, the manual operation unit 116, and the steering device 122, etc., and controls the agricultural machine 100A. The control device 118A is able to identify the task device 106A, by exchanging information with the task device 106. This control device 118A is set inside the agricultural machine 100A. The control device 118A is also electrically connected to the lamps 124, a geomagnetic sensor that can detect the orientation of the travelling direction of the agricultural machine 100, and a horn for intimidating a target by sound, etc., and the control device 118A also controls these elements. Furthermore, the control device 118A is also able to communicate with the server 704 and the user terminal 710, 712 via the wireless communication antenna 114. Note that the control device 118A includes a CPU, a RAM, a ROM and a memory, etc., and the CPU executes a control process based on a program stored in the memory.

The GPS antenna 120 is an antenna for receiving GPS signals from four satellites for recognizing the absolute position of the agricultural machine 100. The GPS antenna 120 is set on the roof of the agricultural machine 100A such that GPS signals can be easily received. As described above, the agricultural machine 100A is able to identify a position by using GPS satellites, and therefore, for example, even when the agricultural machine 100A is stolen, if a network environment is established, the position of the agricultural machine 100A can be identified and the agricultural machine 100A can be easily found. Note that this GPS antenna 120 may receive wireless signals from three or more devices for which the absolute positions are known, such as the farm land monitoring device 500 and the state monitoring device 550, etc., instead of the GPS signals or together with the GPS signals. In this case, the present absolute position may be identified according to the attenuation in the reception signals, or the time taken from when the signals are sent to when the signals are received, or the delay time. This is particularly effective when it is difficult to acquire the GPS signals in a case where the farm land is indoors, etc.

The steering device 122 includes a steering handle, a steering gear box, a tie rod connecting the front wheels, and an arm, and is a device for turning the agricultural machine. The orientation of the front wheels is changed by operating the steering handle or according to control signals from the control device 118.

The lamps 124 are lights for brightening the area in front of the agricultural machine 100A for illumination during night time and intimidating a target with light.

The ultrasonic sonar device 126 is a sensor device for applying an elastic wave (sonic wave) to an object and measuring the time until a reflected wave is detected to recognize the distance to the object. The ultrasonic sonar device 126 is mainly used for measuring the distance with an obstacle, etc., at a blind corner that cannot be captured by the stereo camera device 110. The ultrasonic information measured by the ultrasonic sonar device 126 is an example of second digital information and fourth digital information.

The front wheels 128 are for turning the agricultural machine 100A by moving the agricultural machine 100A and operating the steering device 122.

The rear wheels 130 are where the motive energy, which is generated at a motive energy generation source of the motor 102A in the transmission device 104, is finally transmitted to, and as the rear wheels 130 rotate, the agricultural machine 100A moves back and forth.

Note that the agricultural machine (tractor) 100A according to the present embodiment includes the stereo camera device 110, the laser radar device 112, the multispectral camera device 113, and the ultrasonic sonar devices 126 as sensor devices for acquiring information from outside the agricultural machine 100A; however, the agricultural machine 100A does not have to include all of these devices, and only the sensor devices used according to the task to be performed may be set. Furthermore, sensors other than these sensor devices, for example, an infrared light sensor, a temperature sensor, and a humidity sensor may be included. The information acquired by these sensors is sent to the server 704. The server 704 stores this information in the database 708, and uses the information for forecasting the harvest period, etc.

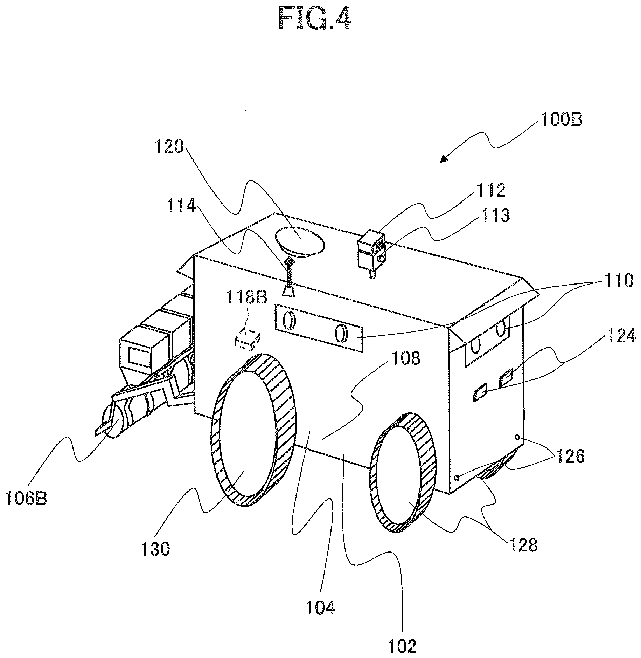

FIG. 4 indicates another agricultural machine 100B. The agricultural machine 100B is also a tractor. The point that is different from the agricultural machine 100A is that agricultural machine 100B does not include the manual operation unit 116. That is, the agricultural machine 100B is an agricultural machine that performs tasks by remote operation or automatic control. Furthermore, in the agricultural machine 100B, the stereo camera devices 110 are set at the front, the back, the left, and the right, and the agricultural machine 100B can travel and perform tasks based on the images captured by these stereo camera devices 110. Therefore, compared with the agricultural machine 100A, automatic operations and remote operations are facilitated in the agricultural machine 100B. Note that a canopy is provided above the stereo camera devices 110 set at the front and the back of the agricultural machine 100B, and the canopy mitigates soiling of the stereo camera devices 110 caused by rain and snow.

The control device 118B that is built in the agricultural machine 100B does not need to be connected to the manual operation unit 116 in the agricultural machine 100A. On the other hand, a plurality of stereo images have to be processed, and therefore a large amount of information has to be processed by the control device 118B, and therefore a CPU with higher performance than the control device 118A or a plurality of CPUs are installed.

Furthermore, in the agricultural machine 100B, elements needed for manual operations such as a steering handle and a steering gear box are omitted, among the elements in the steering device 122 of the agricultural machine 100A.

The task device 106 in FIG. 4 is a seeding machine; however, the task device 106 is not so limited. Similar to the agricultural machine 100A, the agricultural machine 100B is able to connect to a wide range of task devices and perform tasks.

Note that in FIG. 4, the other elements denoted by reference numerals have the same functions as the elements of the agricultural machine 100A, and therefore descriptions are omitted.

Note that the wireless communication antenna 114 (and the control device 118B) functions as a wireless access point. Accordingly, the agricultural machine 100 may be used as a relay point of wireless communication, and the area in which wireless communication is possible can be enlarged.

Furthermore, as indicated in FIGS. 3 and 4, the main body part and the task device 106 are described as being separate bodies in the agricultural machine 100; however, these elements may be integrated. Furthermore, the agricultural machine 100 may be connected to a plurality of task devices 106 to perform a plurality of types of tasks.

<Transmission device>

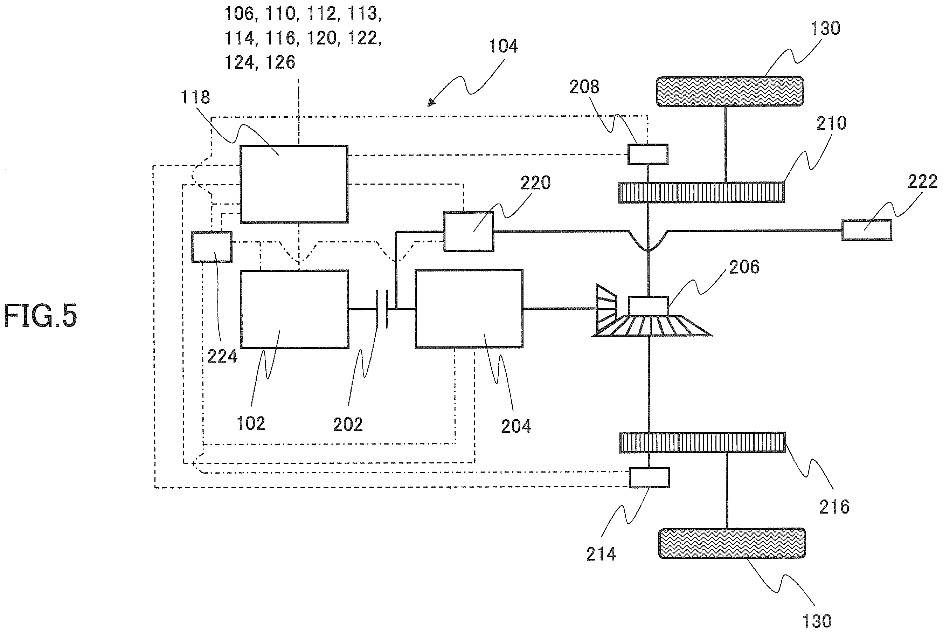

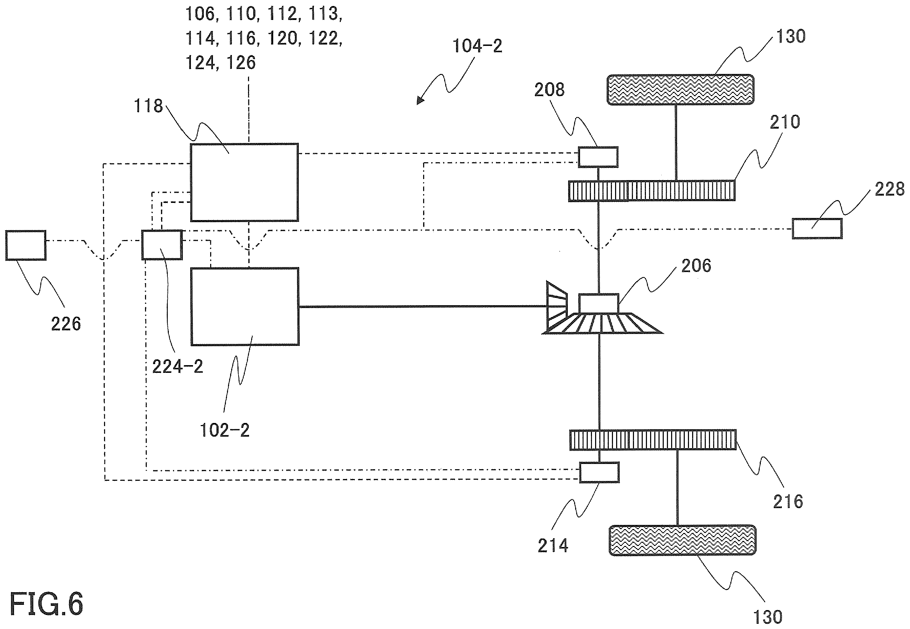

FIG. 5 is a diagram for describing the transmission device 104 of FIG. 3 or 4 in detail. This transmission device 104 becomes the means for moving the agricultural machine 100 and the task device 106. The solid lines in the figure indicate the transmission of kinetic energy, the dashed line indicates the transmission of electronic signals, and the dashed-dotted line indicates the line of supplying electricity. FIG. 5 indicates an example in which the motive energy generation source of the motor 102 is an internal combustion engine (engine), and the driving method is rear wheel two-wheel-drive. An example in which the motive energy generation source of the motor 102 is an electric motor is indicated in FIG. 6. Note that the driving method is not limited to two-wheel-drive, but the driving method may be four-wheel-drive.

The transmission device 104 includes the rear wheels 130, a main clutch 202, a variable speed gear 204, a differential gear 206, braking devices 208, 214, final reduction gears 210, 216, a PTO (Power Take Off) variable speed gear 220, a PTO shaft 222, and the battery 224.

The main clutch 202 is a device for interrupting the transmission of the motive energy generated at the engine. The main clutch 202 is operated to stop travelling or to change the speed when starting up the engine or in a state where the engine is on. The main clutch 202 is able to simultaneously interrupt the motive energy of the travel device and the PTO; however, a travel clutch and a PTO clutch may be interrupted by separate pedals and levers.

The variable speed gear 204 is a device for converting the motive energy of the engine into a rotational speed and a torque according to the travelling state and the task state. The variable speed gear 204 is a necessary device for the tractor to reverse or for stopping the agricultural machine 100 when the engine is in a rotating state.

The differential gear 206 is a device for rotating the left and right wheels at different speeds to facilitate the turning of the agricultural machine 100, and to eliminate the slipping of the wheels.

The braking devices 208, 214 are used when the brake pedal is pressed, and when the kinetic energy is absorbed according to control signals from the control device 118 and the traveling speed is decreased or the traveling is stopped.

The final reduction gears 210, 216 are devices for further decreasing the rotational speed, which has been decreased by the bevel gear of the variable speed gear 204 and the differential gear 206, and further increase the driving force of the axle.

The PTO variable speed gear 220 is for changing the gear of a motive energy extracting device that extracts part of the motive energy of the engine.

The PTO shaft 222 is a driving shaft that extracts part of the motive energy of the engine, and is used as the motive energy source of the task device 106.

The battery 224 stores electricity as chemical energy. By extracting the energy again as electric energy, the battery 224 acts as a power source for igniting the engine and starting the engine, and for the lamps 124 and the control device 118.

To devices that can be controlled by the control device 118, electricity is supplied from the battery 224. Then, the electric energy is converted into kinetic energy, etc., to control the device. The motor 102 controls the amount and the timing of supplying fuel, based on control signals from the control device and the reciprocating motion of the piston is varied to adjust the travelling speed. In the variable speed gear 204 and 220, the electric energy drives the actuator to change the gear, and the agricultural machine 100 is controlled to change the speed or to reverse, based on control signals. In the braking devices 208, 214, the actuator is driven based on control signals to apply the brake and decrease the speed or stop the travelling.

Next, by using FIG. 6, a description is given of the transmission device 104 (104-2) for driving the agricultural machine 100 by electricity. FIG. 6 indicates details of the transmission device 104-2 for moving the agricultural machine 100 by using the motor 102-2 as the moving force. Similar to FIG. 5, the solid lines in the figure indicate the transmission of kinetic energy, the dashed line indicates the transmission of electronic signals, and the dashed-dotted line indicates the line of supplying electricity. This example is also an example of rear wheel two-wheel-drive; however, four-wheel-drive may be used. In the case of electric driving, as described below, by using a non-contact charging method, automatic charging is possible without using manpower, and therefore the non-contact charging method is an effective method in promoting the automation of the overall system 1500.

FIG. 6 is basically the same as FIG. 5; the different points are mainly described. The motor 102-2 is a power unit including a motor controller and an electric motor. The transmission device 104-2 controls the rotational frequency and the rotation direction by the motor, and therefore the variable speed gear 204 described with reference to FIG. 5 is basically unnecessary; however, the variable speed gear 204 may be included to travel more smoothly.

The battery 224-2 includes a converter and a battery. The converter converts an alternating-current voltage into a direct-current voltage. The battery 224-2 has a larger capacity than the capacity of the battery 224 in FIG. 5. This battery 224 may be configured by combining a plurality of compact batteries. This battery 224-2 is charged from an external power source 226. Note that the external power source 226 is not precisely included in the configuration of the transmission device 104; however, the external power source 226 is an essential element for the agricultural machine 100 that is driven by an electric motor. This external power source 226 uses a non-contact power transmission technology, and therefore the battery 224-2 can be charged without the task of bringing electric lines in contact. Note that the battery 224-2 may be charged by a contact method using a plug outlet, etc.

The task device 106 of FIG. 6 operates by electric energy from a power source 228 supplied to the task device, etc., instead of by the PTO shaft 222 as in FIG. 5. However, similar to FIG. 5, the task device 106 may be operated by using the PTO variable speed gear 220 and the PTO shaft 222. In this case, the conventional task device 106 used in the transmission device 104 of FIG. 5 may be directly used.

In the case of driving by an electric motor, according to the characteristic of the motor, the torque can be increased even when the rotational frequency of the motor is low (that is, when moving at low speed), and therefore an electric motor is appropriate for an agricultural machine that performs tasks at low speed compared to a vehicle, etc. Furthermore, as described below, the battery 224-2 can be charged automatically, and therefore the series of agricultural work can be done efficiently without taking much manpower. Note that the transmission device 104-2 may perform driving by an in-wheel motor method, by which the motor is placed inside the wheels.

\<Stereo camera device\>

A. Configuration of stereo camera device

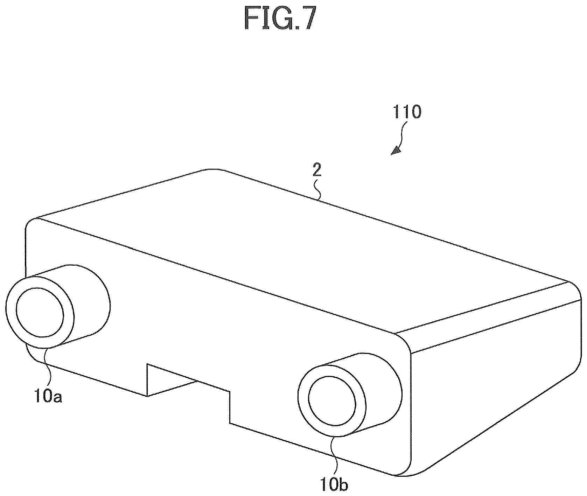

FIG. 7 indicates the external view of the stereo camera device 110. The stereo camera device 110 captures an image of a certain area and generates image data that can be transmitted to the control device 118 of the agricultural machine 100, the server 704, and the user terminal 710, 712, and additionally acquires distance information (or parallax value information) from the stereo camera device 110 at each spot in the captured image. As a matter of course, the distance information (or parallax value information) can also be transmitted to the control device 118, etc. This stereo camera device 110 is able to perform ranging by applying the Semi-Global Matching (SGM) method.

The stereo camera device 110 includes a main body part 2 and a pair of a cylindrical imaging device 10a and a cylindrical imaging device 10b that are provided in the main body part 2. Note that this stereo camera device 110 is rotatably attached to the agricultural machine 100 by a pole including a rotational shaft. The rotation motion is controlled manually or by the control device 118.

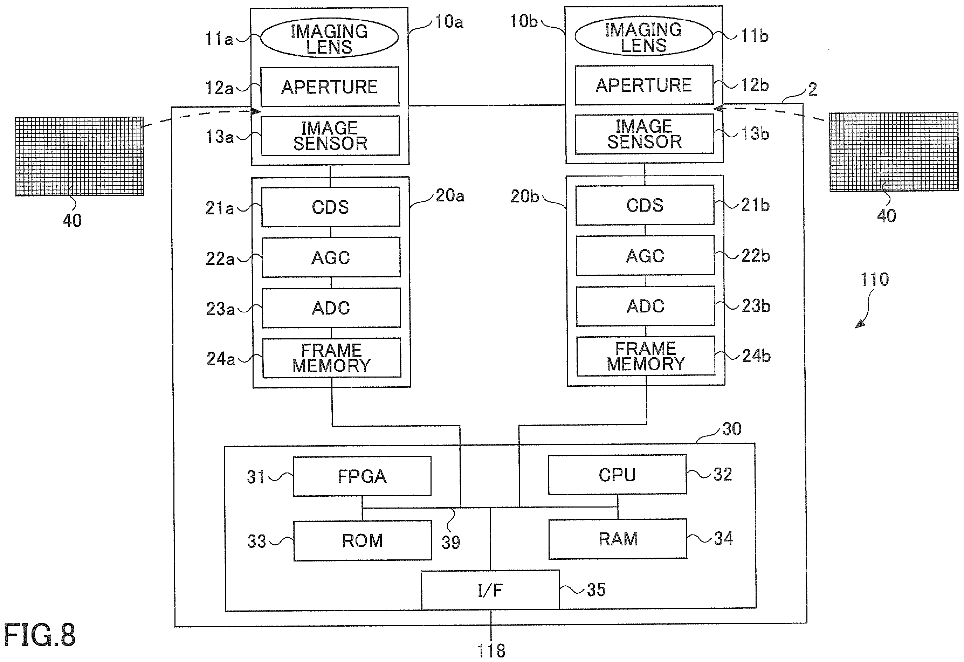

FIG. 8 indicates an overall hardware configuration of the stereo camera device 110. As indicated in FIG. 8, the stereo camera device 110 includes the imaging device 10a, the imaging device 10b, a signal conversion device 20a, a signal conversion device 20b, and an image processing device 30.

Among these devices, the imaging device 10a is for capturing an image of a view in front of the agricultural machine 100, and generating analog signals (example of analog information) expressing the image. The imaging device 10a includes an imaging lens 11a, an aperture 12a, and an image sensor 13a. The imaging lens 11a is an optical element for forming an image of an object by refracting light passing through the imaging lens 11a. The aperture 12a adjusts the amount of light to be input to the image sensor 13a described below, by blocking part of the light that has passed through the imaging lens 11a. The image sensor 13a is an element of a semiconductor that converts the light input from the imaging lens 11a and the aperture 12a into electrical analog image signals, and is realized by a Charge Coupled Device (CCD) and a Complementary Metal Oxide Semiconductor (CMOS). Note that the imaging device 10b has the same configuration as the imaging device 10a, and therefore descriptions of the imaging device 10b are omitted. Furthermore, the imaging lens 11a and an imaging lens 11b are set such that the optical axes of the lenses are parallel to each other.

Furthermore, the signal conversion device 20a is for converting the analog signals of the captured image into image data of a digital format (digital image information. example of first digital information and third digital information). The signal conversion device 20a includes a Correlated Double Sampling (CDS) 21a, an Auto Gain Control (AGC) 22a, an Analog Digital Converter (ADC) 23a, and a frame memory 24a. The CDS 21a removes noise by correlated double sampling from the analog image signals converted by the image sensor 13a. The AGC 22a performs gain control for controlling the intensity of the analog image signals from which noise has been removed by the CDS 21a. The ADC 23a converts the analog image signals that have been gain controlled by the AGC 22a, into image data of a digital format. The frame memory 24a stores the image data (reference image) converted by the ADC 23a.

Similarly, the signal conversion device 20b is for acquiring image data from analog image signals that have been converted by the imaging device 10b including the imaging lens 11b, an aperture 12b, and an image sensor 13b. The signal conversion device 20b includes a CDS 21b, an AGC 22b, an ADC 23b, and a frame memory 24b. Note that the CDS 21b, the AGC 22b, the ADC 23b, and the frame memory 24b have the same configurations as the CDS 21a, the AGC 22a, the ADC 23a, and the frame memory 24a, respectively, and therefore descriptions thereof are omitted. However, the frame memory 24b stores a comparison image.

Furthermore, the image processing device 30 is a device for processing the image data that has been converted by the signal conversion device 20a and the signal conversion device 20b. The image processing device 30 includes a FPGA (Field Programmable Gate Array) 31, a CPU (Central Processing Unit) 32, a ROM (Read Only Memory) 33, a RAM (Random Access Memory) 34, an I/F (Interface) 35, and a bus line 39 such as an address bus and a data bus, etc., for electrically connecting the constituent elements denoted by the reference numerals 31 through 35 as indicated in FIG. 8.

Among the above constituent elements, the FPGA 31 is an integrated circuit for which the configuration can be set by the purchaser or a designer after manufacturing; here, the FPGA 31 performs a process of calculating a parallax d in the image expressed by the image data. The CPU 32 controls the functions of the stereo camera device 110. The ROM 33 stores programs for image processing executed by the CPU 32 for controlling the functions of a parallax value deriving device. The RAM 34 is used as a work area of the CPU 32. The I/F 35 is an interface for connecting with the control device 118 of the agricultural machine 100. Note that the above programs for image processing may be distributed by being recorded in a computer-readable recording medium, in a file having an installable format or an executable format. The recording medium is a CD-ROM and an SD card, etc.

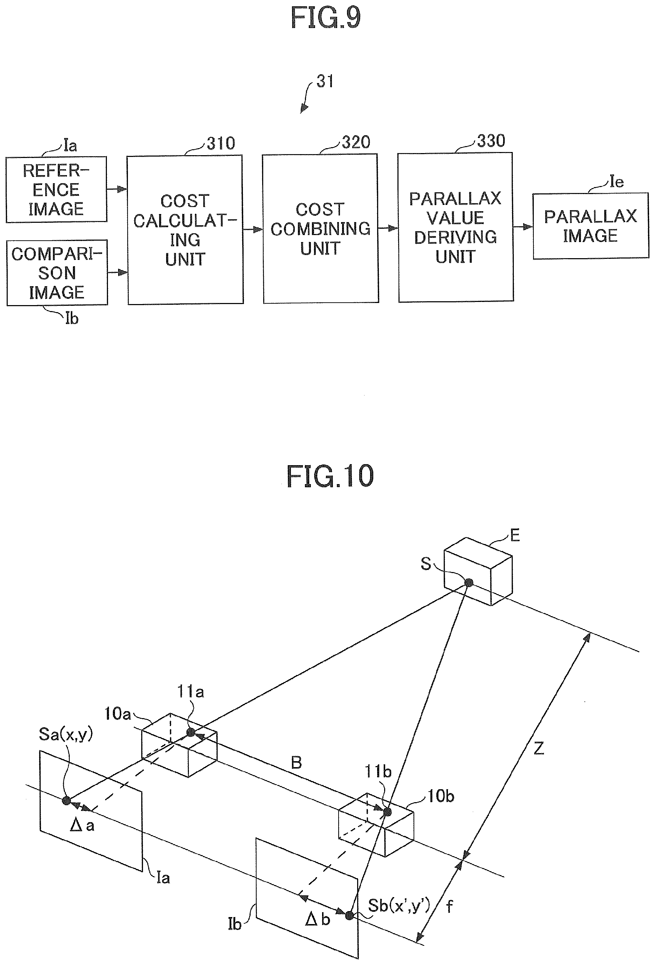

Next, FIG. 9 indicates a hardware configuration of a key part of the stereo camera device 110. As indicated in FIG. 9, the FPGA 31 includes a cost (degree of coincidence or dissimilarity, similarity) calculating unit 310, a cost combining unit 320, and a parallax value deriving unit 330. These units are part of the circuit of the FPGA; however, by executing the programs for image processing stored in the ROM 33, the same processes may be performed.

Among these units, the cost calculating unit 310 calculates a cost value C of candidate corresponding pixels that correspond to a reference pixel, based on a luminance value of the reference pixel in a reference image Ia, and luminance values of a plurality of candidate corresponding pixels along an Epipolar Line in a comparison image Ib with respect to the reference pixel.

The cost combining unit 320 combines a cost value of the candidate corresponding pixels with respect to one reference pixel obtained by the cost calculating unit 310, with a cost value of the candidate corresponding pixels with respect to another reference pixel obtained by the cost calculating unit 310, and outputs a synthesis cost value Ls. Note that this combining process is a processes of calculating a route cost value Lr from the cost value C based on (formula 3) described below, and then subsequently adding the route cost values Lr of the respective radial rays based on (formula 4) described below, to calculate the final synthesis cost value Ls.

The parallax value deriving unit 330 derives a parallax value Δ based on the position in the reference image of one reference pixel and the position in a comparison image of a corresponding pixel for which the synthesis cost value Ls after the combining by the cost combining unit 320 is minimum, and outputs a parallax image Ic indicating a parallax value in each pixel. It is possible to calculate a distance Z by (formula 2) described below, by using the parallax value Δ obtained above, a focal length f of the imaging lens 11a and the imaging lens 11b, and a base length B that is the length between the imaging lens 11a and the imaging lens 11b. This process of obtaining the distance Z may be performed at the parallax value deriving unit 330 or at the CPU 32 or the server 704. As described above, the stereo camera device 110 is able to obtain the distance information (or parallax value information) to the respective spots in the captured image by using the parallax with respect to the captured image. Note that in image processing or image recognition that are operations other than obtaining the parallax value, either one of the reference image or the comparison image may be used (that is, an image obtained from the image sensor 13a or the image sensor 13b, similar to an image captured by a regular monocular camera. That is, one type of image between two images).

Furthermore, not only for cases of the ranging by using image information, but also in a method of obtaining an image having higher contrast, the imaging device 10 may include a polarizing filter 40 set on the acceptance surfaces of the image sensors 13a and 13b. The polarizing filter 40 is a Sub-Wavelength Structure (SWS) polarizing filter. The polarizing filter 40 has a structure in which a polarizer area transmitting only light of S polarization components and a polarizer area transmitting only light of P polarization components are alternately arranged. The size of one polarizer area is the same as the size of one pixel of the light receiving element of the image sensors 13a and 13b, and the polarizing filter 40 is set such that the respective polarizer areas are positioned above the pixels. By configuring the stereo camera device 110 as described above, and generating separate images for each of the light receiving signals of light that has transmitted through the respective polarizer areas, the S polarization components and the P polarization components are separated, and an image of only the S polarization components and an image of only the P polarization components are obtained. The respective images are examples of second digital information and fourth digital information. In the stereo camera, two imaging elements are used, and therefore two of each of an image of only the S polarization components and an image of only the P polarization components are obtained, and by comparing the images of the same polarization components, it is possible to obtain the respective parallax values (distances).

By obtaining a polarization image, for example, it becomes easy to detect the difference in the plane directions of a black subject. This is because the polarization state of light from the subject differs according to the plane direction of the subject. Furthermore, according to a polarization image, it becomes easy to detect whether there is a transparent subject. This is because when light passes through a transparent subject, the transmittance changes according to the polarization state of light. That is, by using a polarization camera, a high-contrast image can be obtained, and it is possible to obtain information that cannot be obtained from a luminance image. As described above, with a polarization camera, it is possible to detect frost on the ground, pest having the same color as leaves (cryptic color) adhering to leaves of plants, and the structural body of plants (length between branches, etc.), which are difficult to capture by a regular camera. Furthermore, by using a polarization stereo camera as the stereo camera device 110, in addition to information such as frost and pest, for example, it is possible to detect and range a frost-bound road, and accurately detect the ridges of the farm land and perform further ranging. Furthermore, by obtaining a polarization image with a polarizing filter, it is possible to easily detect the structural body of a plant. For this reason, the image recognition rate with respect to the polarization image increases, and for example, the features with respect to the appearance of a plant, such as the length and thickness of a stem between branches and the size of a leaf, can be captured more accurately. Therefore, by using the above information, the overall system 1500 is able to perceive the growth status of a plant and distinguish the type of plant (for example, whether the plant is a crop or a weed). Note that when distance information is unnecessary, similar to the case of a monocular camera, only the polarization image information obtained from either one of the image sensors 13a and 13b is to be used. As a matter of course, when the distance information is also used to check the accurate size, etc., the information items obtained from two imaging elements are to be used.

B. Description of ranging method using SGM method

Next, a description is given of a ranging method by the stereo camera device 110, particularly a method of obtaining the parallax value by using the SGM method. First, by using FIGS. 10 through 15, a description is given of the outline of the ranging method using the SGM method.

By using FIG. 10, a description is given of the principle of deriving a parallax with respect to an object from a stereo camera, and measuring the distance from the stereo camera to the object by a parallax value indicating a parallax, by a stereo imaging method. Furthermore, in the following, to simplify the description, a description is given in units of one pixel, instead of a predetermined area (matching block).

Furthermore, the images captured by the imaging device 10a and the imaging device 10b indicated in FIG. 10 are referred to as a reference image Ia and a comparison image Ib, respectively. Note that in FIG. 10, it is assumed that the imaging device 10a and the imaging device 10b are disposed horizontally in parallel and at equal heights. In FIG. 10, a point S on an object E in a three-dimensional space is mapped onto positions along the same horizontal line of the imaging device 10a and the imaging device 10b. That is, the point S in each image is captured at a point Sa (x, y) in the reference image Ia and at a point Sb (x', y') in the comparison image Ib. At this time, the parallax value $\Delta$ is expressed by (formula 1), using the point Sa (x, y) in the coordinates of the imaging device 10a and the point Sb (x', y') in the coordinates of the imaging device 10b.

$$\Delta = x' - x \qquad (\text{formula 1})$$

Here, in the case of FIG. 10, based on a distance $\Delta a$ between the point Sa (x, y) in the reference image Ia and the intersecting point of a perpendicular line dropped from the imaging lens 11a to the image surface, and a distance $\Delta b$ between the point Sb (x', y') in the comparison image Ib and the intersecting point of a perpendicular line dropped from the imaging lens 11b to the image surface, parallax value $\Delta = \Delta a + \Delta b$ is obtained.

Furthermore, by using the parallax value $\Delta$, it is possible to derive a distance Z between the imaging devices 10a, 10b and the object E. Specifically, the distance Z is the distance from the plane including the focal position of the imaging lens 11a and the focal position of the imaging lens 11b, to a particular point S on the object E. As indicated in FIG. 10, by using the focal length f of the imaging lens 11a and the imaging lens 11b, the base length B that is the length between the imaging lens 11a and the imaging lens 11b, and the parallax value $\Delta$, the distance Z can be calculated by (formula 2).

$$Z = (B \times f) / \Delta \qquad (\text{formula 2})$$

By this (formula 2), as the parallax value $\Delta$ increases, the distance Z decreases, and as the parallax value $\Delta$ decreases, the distance Z increases.

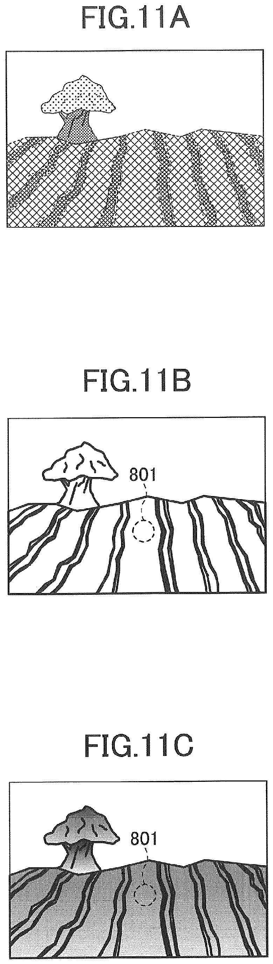

Next, by using FIGS. 11 through 15, a description is given of the ranging method using the SGM method. Note that FIG. 11A indicates a reference image, FIG. 11B indicates a parallax image obtained by an edge detection method with respect to FIG. 11A as a comparison target, and FIG. 11C is a conceptual diagram indicating the parallax image obtained by the SGM method with respect to FIG. 11A. Here, a reference image is an image in which an object is indicated by the luminance. The parallax image according to the edge detection method is an image derived by the edge detection method, and is an image indicating the parallax values of the edge parts of reference image. The parallax image according to the application of the SGM method is an image that is derived from the reference image by the application technology of the SGM method, and is an image indicating the parallax values of the respective coordinates in the reference image. In FIG. 11C, the differences in the parallax values are indicated by the shading of the color. The present example indicates that as the color becomes darker, the parallax value decreases. That is, as the color becomes darker, the distance becomes longer.

The SGM method is a method of appropriately deriving the above parallax value, even with respect to an object having a weak texture. The parallax image indicated in FIG. 11C is derived according to the SGM method, based on the reference image indicated in FIG. 11A. Note that when an edge detection method is used, the edge parallax image indicated in FIG. 11B is derived based on the reference image indicated in FIG. 11A. As can be seen by comparing the inside of a circle 801 surrounded by a dashed line in FIG. 11B and FIG. 11C, the parallax image according to the SGM method can express detailed information such as an area having a weak texture, compared to a parallax image according to the edge detection method, and therefore more detailed ranging can be performed.

In this SGM method, the parallax value is not immediately derived after calculating the cost value that is the dissimilarity; instead, after calculating the cost value, furthermore, a synthesis cost value, which is the synthesis dissimilarity, is calculated to derive the parallax value, and finally, a parallax image (here, a parallax image according to the SGM method) indicating the parallax values in all pixels is derived. Note that in the case of the edge detection method, the process of calculating the cost value is the same as the SGM method; however, a synthesis cost value is not calculated as in the SGM method, and only the parallax values of the edge parts are calculated.

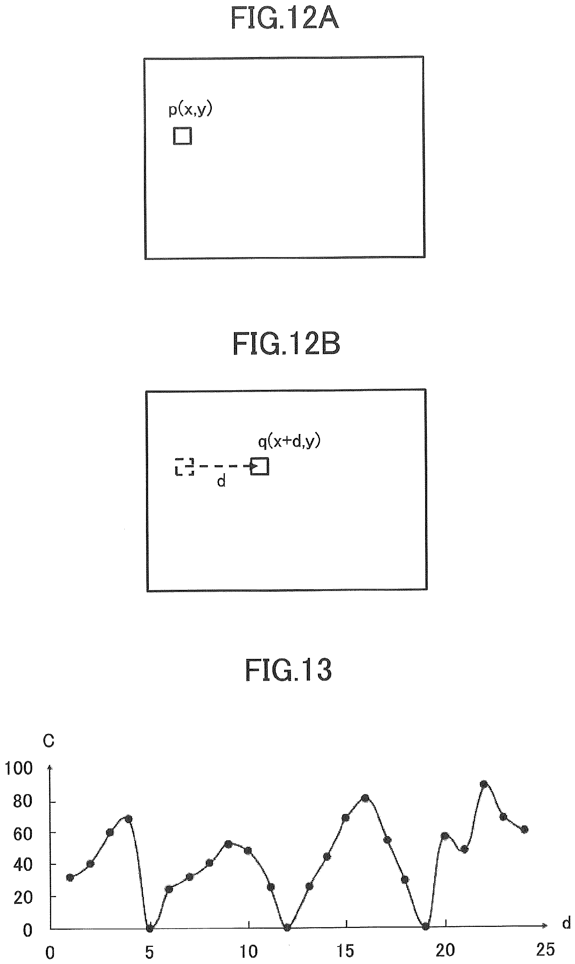

Next, by using FIGS. 12 and 13, a description is given of the method of calculating the cost value C (p, d). FIG. 12A is a conceptual diagram indicating a reference pixel in a reference image, and FIG. 12B is a conceptual image indicating the calculation of a shift amount while sequentially shifting a candidate corresponding pixel with respect to the reference pixel of FIG. 12A. FIG. 13 is a graph indicating the cost value at each shift amount.

As indicated in FIG. 12A, the cost value C(p, d) of each candidate corresponding pixel q(x+d, y) with respect to the reference pixel p(x, y) is calculated, based on the luminance values of a predetermined reference pixel p(x, y) in the reference image and a plurality of candidate corresponding pixels q(x+d, y) along an Epipolar Line in a comparison image with respect to this reference pixel p(x, y). d is the shift amount of the reference pixel p and the candidate corresponding pixel q, and in the present embodiment, the shift amounts in units of pixels are expressed. That is, in FIG. 12, while sequentially shifting the candidate corresponding pixel q(x+d, y) by one pixel at a time in a range specified in advance (for example, 0<d<25), the cost value C(p, d), which is the similarity of luminance values of the candidate corresponding pixel q(x+d, y) and the reference pixel p(x, y), is calculated. The cost value C(p, d) that is calculated as above can be expressed by the graph indicated for each shift amount d, as indicated in FIG. 13. In FIG. 13, the cost value C is zero when shift amount d=5, 12, 19, and therefore the minimum value cannot be obtained. As described above, in the case of an object having a weak texture, it is difficult to obtain the minimum value. That is, in the edge detection method, when the texture is weak, there are cases where ranging cannot be accurately performed.

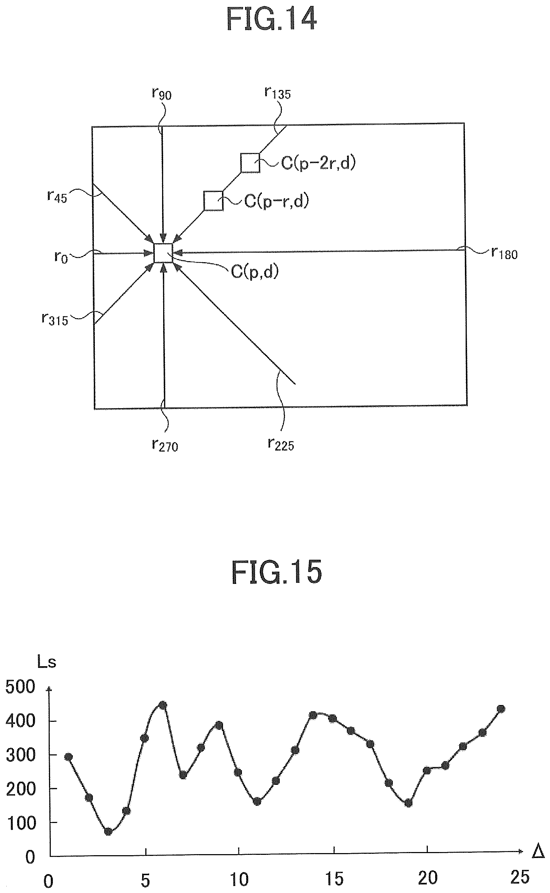

Next, by using FIGS. 14 and 15, a description is given of the calculation method of the synthesis cost value Ls(p, d). FIG. 14 is a conceptual diagram of the process of deriving a synthesis cost value. FIG. 15 is a graph indicating the synthesis cost value of each parallax value. The calculation of the synthesis cost value according to the present embodiment is a method unique to the SGM method; not only is the cost value C(p, d) calculated, but also, the cost values, which correspond to the case where the pixels around a predetermined reference pixel p(x, y) are the reference pixels, are integrated with the cost value C(p, d) at the reference pixel p(x, y), to calculate the synthesis cost value Ls (p, d).

Here, a more detailed description is given of the calculation method of the synthesis cost value. In order to calculate the synthesis cost value Ls(p, d), first, a route cost value Lr(p, d) needs to be calculated. (Formula 3) is a formula for calculating the route cost value Lr(p, d), and (formula 4) is a formula for calculating the synthesis cost value Ls(p, d).

$$\mathrm{Lr(p,d)=C(p,d)+min\{(Lr(p-r,d),Lr(p-r,d-1)+P1,Lr(p-r,d+1)+P1,Lrmin(p-r)+p2\}} \qquad (formula\ 3)$$

Here, r indicates the integration method. min{} is a function for obtaining the minimum value. Lr is recursively applied as indicated in formula 3. Furthermore, P1 and P2 are fixed parameters defined by experiments in advance, and these parameters are set such that the more a pixel is away from the reference pixel p(x, y), the less the impact on the route cost value Lr. For example, P1=48, P2=96. Furthermore, as indicated in (formula 3), Lr(p, d) is obtained by adding the minimum value of route cost values Lr of the respective pixels in the respective pixels in the r direction indicated in FIG. 14, to the cost value C at the reference pixel p(x, y). As described above, in order to obtain Lr at each pixel in the r direction, first, Lr is obtained from the pixel at the far end in the r direction with respect to the reference pixel p(x, y), and then Lr is obtained for pixels along the r direction. Then, as indicated in FIG. 14, Lr0, Lr45, Lr90, Lr135, Lr180, Lr225, Lr270, Lr315 of eight directions are obtained, and finally, based on (formula 4), the synthesis cost value Ls is obtained.

$$\mathrm{Ls(p,d)=\Sigma Lr} \qquad (formula\ 4)$$

The synthesis cost value Ls(p, d) calculated as described above can be expressed by a graph indicated for each shift amount d, as indicated in FIG. 15. In FIG. 15, the synthesis cost value Ls is minimum when the shift amount d=3, and therefore parallax value $\Delta$=3 is calculated.

Note that the SGM method takes more time for processing than the edge detection method, and therefore when the process needs to be quickly done more than attaining precision in ranging, the ranging may be performed by the edge detection method. In this case, the process by the cost combining unit 320 indicated in FIG. 9 is not performed, and the parallax value deriving unit 330 derives only the parallax value of the edge part from the minimum cost value.

Note that the distance that can be measured by the stereo camera device 110 according to the present embodiment is 105 m, and the error is several cm.

Note that when an object to be captured by the stereo camera device 110 is recognized, and the distance is known, the size and the length of the object can be known. That is, the ROM 33 of the stereo camera device 110 stores a table indicating the relationship between the distance and the size and length per pixel, and therefore the CPU 32 is able to identify the size and length of the object. Note that the ROM 33 may not store the table, but may store a relational expression of the distance and the size and length per pixel. Furthermore, the process may not be performed in the stereo camera device 110, but the process of calculating the size and length of the object may be performed by the server 704 or the control device 118 of the agricultural machine 100, which includes the data necessary for calculating the size and the length such as a table as described above.

<Laser radar device>

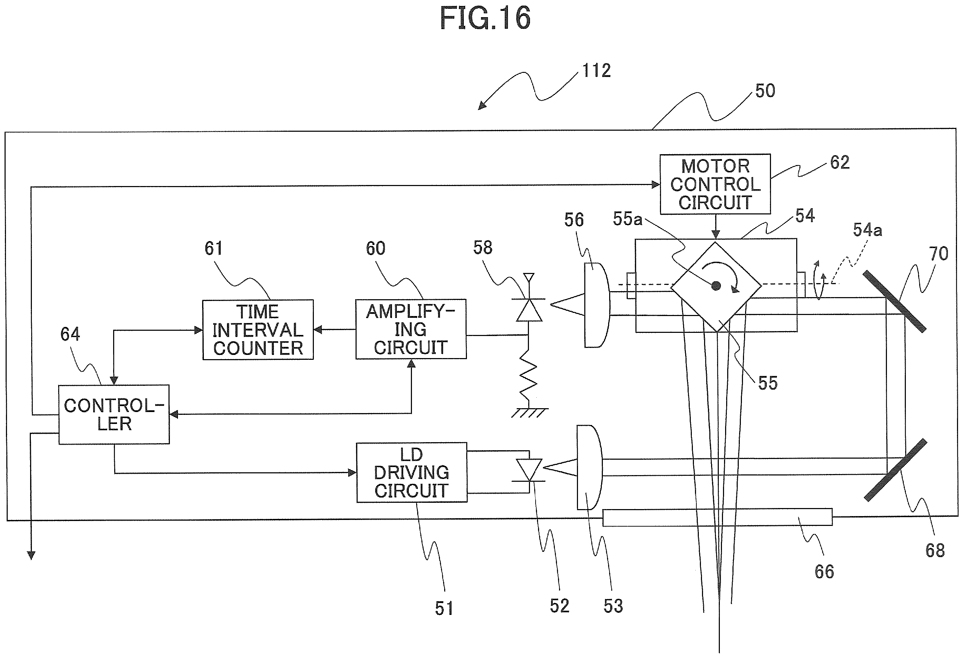

FIG. 16 indicates a configuration of the laser radar device 112. Shape information according to the laser radar device 112 is an example of first digital information and third digital information. Furthermore, distance information according to the laser radar device 112 is an example of second digital information and fourth digital information. The laser radar device 112 irradiates a target with a pulse laser beam, measures a return time t of the pulse laser beam that is reflected, and calculates a distance L to the irradiation point by (formula 5). $L = c \times t/2$ (formula 5) Here, c is the light speed.

Furthermore, the laser radar device 112 is able to scan the laser beam in a two-dimensional direction, and is thus able to obtain the orientation to the points of the target and measure the shape of the target.

The laser radar device 112 includes, in a main body part 50, a laser diode driving circuit 51, a laser diode 52, a light projection lens 53, two reflective mirrors 68, 70, an oscillating motor 54, a polygon mirror 55, a light reception lens 56, a photodiode 58, an amplifying circuit 60, a time interval counter 61, a motor control circuit 62, a controller 64, and a laser beam emitting entering window 66.

The laser diode driving circuit 51 generates pulse signals to be input to the laser diode 52. The laser diode 52 emits the pulse laser beams. The light projection lens 53 turns the pulse laser beams emitted from the laser diode 52 into parallel light. After the travelling direction of the pulse laser beams is changed by the reflective mirrors 68, 70, the motor control circuit 62 controlled by the controller 64 causes this parallel light to be incident on the polygon mirror 55 rotating at a fixed speed on a $\theta$ shaft 55a. The polygon mirror 55 oscillates on a $\theta$ shaft 54a by using the oscillating motor 54 that oscillates at a predetermined speed according to the motor control circuit 62 controlled by the controller 64. Accordingly, the laser beams incident on the polygon mirror 55 are scanned in a two-dimensional direction to irradiate the target through the laser beam emitting entering window 66. Furthermore, the controller 64 is able to acquire signals from a level that is not illustrated, output an instruction to the motor control circuit 62 such that laser beams are constantly emitted in a horizontal direction, and operate the oscillating motor 54 to control the rotation of the $\theta$ shaft. The pulse laser beams that are reflected from the target are condensed at the light reception lens 56 via the polygon mirror 55, received at the photodiode 58, and converted into electronic signals. The electronic signals obtained by the conversion are amplified at the amplifying circuit 60, and then the time interval counter 61 measures the time interval between the start pulse synchronized with the pulse oscillation timing of the laser diode 52 and the stop pulse output from the amplifying circuit 60. The controller 64 sets the measured return time t, and the rotation angle $\theta$ and the oscillation angle $\varphi$ of the polygon mirror 55 as polar coordinate system data $(t, \theta, \varphi)$, and furthermore, the controller 64 converts the polar coordinate data into three-dimensional space data $(X, Y, Z)$, which uses the setting position of the laser radar device 112 as the origin, to obtain the shape of the target.

The information obtained at the controller 64 can be transmitted to the control device 118 of the agricultural machine 100, the server 704, and the user terminal 710, 712.

When this laser radar device 112 is set on a horizontal plane, it is possible to make a measurement by approximately 60 degrees as the horizontal angle of view, approximately 30 degrees as the vertical angle of view, and within a measurement range of approximately 60 m along the horizontal plane. Note that the measurement range changes according to the type of the laser diode 52 and the output voltage of the laser diode driving circuit 51, etc.

Furthermore, when only the distance to the target is to be obtained, or when laser beam scanning in the two-dimensional direction is unnecessary, the polygon mirror 55 is not oscillated by the oscillating motor 54. In this case, laser beams are scanned in a one-dimensional direction according to the rotation of the polygon mirror 55 on the $\theta$ shaft.

Furthermore, the laser diode 52 to be used is selected according to the purpose of the task. For example, when the degree of activity of a plant is to be measured from the state of a leaf of the plant by an active method in combination with the multispectral camera device 113, the laser diode 52, which is capable of emitting laser beams of a visible red region having a wavelength near 660 nm is used f(the method of checking the degree of activity of a plant by using the multispectral camera device 113 is described below). In a case where the laser radar device 112 and the multispectral camera device 113 are used in combination as described above, the laser emitted from the laser radar device 112 is to be used, and therefore the laser radar device 112 and the multispectral camera device 113 are to be arranged in close to each other. On the other hand, when the laser radar device 112 performs a task independently, there is no need to arrange the laser radar device 112 and the multispectral camera device 113 close to each other. Note that instead of using the oscillating motor 54 and the polygon mirror 55, the laser beams may be scanned by using a Micro Electro Mechanical Systems (MEMS) mirror device that can perform two-dimensional scanning.

Furthermore, the laser radar device 112 may be formed of a non-scanning type laser radar device that deflects the laser beams with a fixed optical element such as a grating, without moving a mirror to scan the laser. By using such a non-scanning type laser radar device, the driving positions can be reduced, and therefore failures can be reduced, even when there are rapid vertical movements while moving.

Note that in the agricultural machine 100 according to the present embodiment, the laser radar device 112 is rotatably set at a position close to the multispectral camera device 113. The rotation motion is controlled manually or controlled by the control device 118.

<Multispectral camera device>

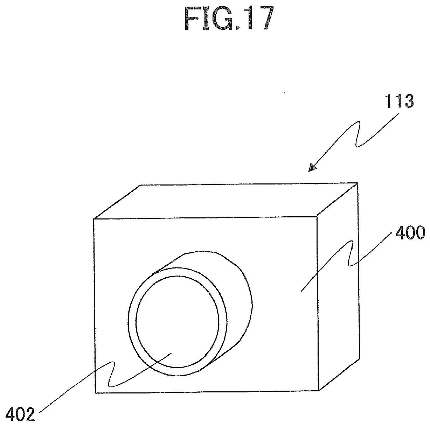

FIG. 17 indicates an external view of the multispectral camera device 113. The spectral information according to the multispectral camera device 113 is an example of second digital information and fourth digital information. The multispectral camera device 113 is a camera device that can capture an image and obtain the spectral reflectance in the captured image. The multispectral camera device 113 is appropriate for detecting the state of a plant in a certain range (area, plane) in a non-contact/non-destructive manner at once, instead of at one point. The multispectral camera device 113 includes a main body part 400 and a lens tube part 402. The multispectral camera device 113 is rotatably set in the agricultural machine 100. The rotation motion is controlled manually or by the control device 118. Accordingly, the multispectral camera device 113 is able to capture images of light reflected from a target in various directions around the agricultural machine 100, and perceive the growth status such as the degree of plant activity, the length between branches, and the sizes of leaves.

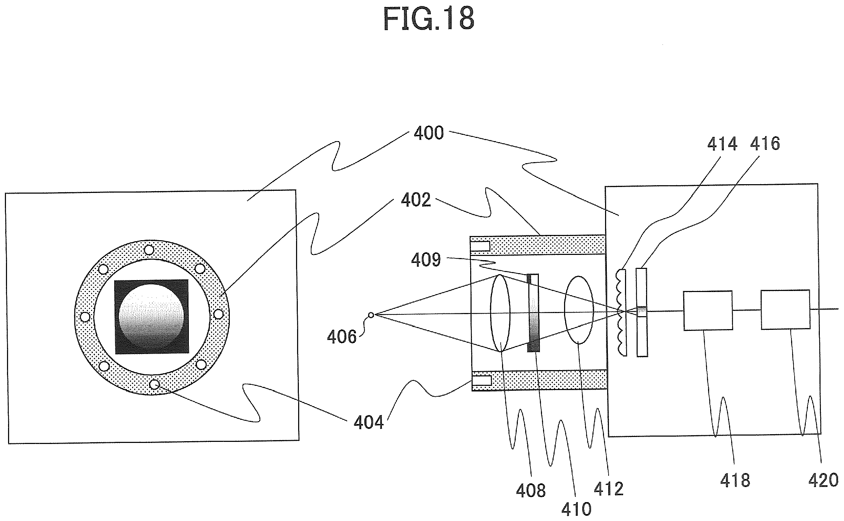

FIG. 18 indicates a configuration of the multispectral camera device 113. The left is a front view and the right is a cross-sectional view viewed from the side surface. The main body part 400 includes a micro-lens array 414, a light receiving element array 416, a FPGA 418, and a spectral reflectance calculating unit 420. The lens tube part 402 includes a light emitting diode (LED) 404, a main lens 408, an aperture 409, a filter 410, and a condenser lens 412.

The micro-lens array 414 is an optical element in which a plurality of small lenses are arranged in a two-dimensional direction. The light receiving element array 416 includes a plurality of light receiving elements, and the light receiving element array 416 is a monochrome sensor in which a color filter for each light receiving element (hereinafter, also referred to as "pixel") is not mounted. The light receiving element array 416 is a sensor for converting optical information into electronic information.

The FPGA 418 is a spectral image generating unit that generates a plurality of types of spectral images based on the electronic information that is spectral information output from the light receiving element array 416.

The spectral reflectance calculating unit 420 is formed of semiconductor elements such as a CPU, a ROM, and a RAM, and calculates the spectral reflectance for each pixel from the spectral image generated at the FPGA 418.

The output from the multispectral camera device 113 is a plurality of types of spectral images generated at the FPGA 418 and the spectral reflectance of each of the pixels of the spectral images. These information items are transmitted to the control device 118 of the agricultural machine 100, the server 704, the user terminal 710, 712, and the control unit of the state monitoring device 550, etc.

The LED 404 includes a plurality of light sources that are arranged in an embedded state with equally spaced intervals at the leading end part of the lens tube part 402. By using the LED as the light source, the multispectral camera device 113 is less affected by the imaging environment, and stable spectral information can be obtained. The main lens 408 is a lens that guides the light reflected from an object 406 to the filter 410 through the aperture 409. The aperture 409 is a mask used for adjusting the amount of passing light. The spectral transmittance of the filter 410 spatially and continuously changes. That is, the filter 410 has a plurality of spectral properties. Note that the directionality of the continuity of the spectral transmittance of the filter 410 is not limited, if the continuity is in one plane. For example, in a plane orthogonal to the light axis of the main lens 408, the continuity may be in a vertical direction on the right in FIG. 18, or in an orthogonal direction with respect to this vertical direction, or in a direction obliquely intersecting this direction. The condenser lens 412 is a lens for guiding the light that has passed through the filter 410 to the micro-lens array 414.

The reflected light from the object 406, which has received light from the LED 404, etc., enters the main lens 408. The light flux that has entered the main lens 408 becomes the target of spectral reflectance measurement. The light flux that has entered the main lens 408 is an assembly of numerous light beams, and each light beam passes different positions of the aperture 409. The reflected light is condensed at the main lens 408, the light amount of the condensed light to pass is adjusted at the aperture 409, and the adjusted light enters the filter 410. Note that in the present embodiment, the aperture 409 is situated on the filter 410; however, the position of the aperture 409 is not so limited. The light beams that have entered the filter 410 pass through a filter having a different spectral reflectance. The light beams, which have passed through the filter 410, are condensed at the condenser lens 412, and temporarily form an image near the micro-lens array 414. Note that the micro-lens array 414 is set such that a plurality of micro-lenses (small lenses) are arranged in a direction orthogonal to the light axis of the main lens 408. The light beams, which have temporarily formed an image, are respectively caused to reach different positions in the light receiving element array 416, by the micro-lens array 414. That is, the position of the light receiving surface of the light receiving element array corresponds to the position of the filter 410 through which the light beam has passed, and therefore it is possible to simultaneously measure the spectral reflectance of a certain point of the object 406.

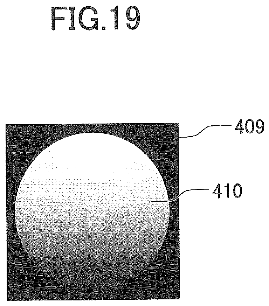

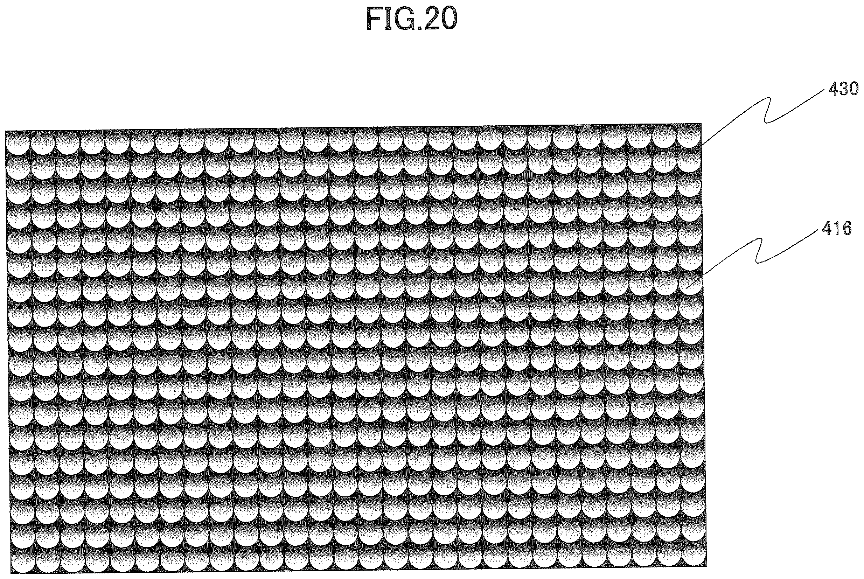

FIG. 19 is a front view of the filter 410 and the aperture 409 used in the present embodiment. The bottom part of the filter 410 has a spectral transmittance peak of a short wavelength and the top part of the filter 410 has a spectral transmittance peak of a long wavelength. In this case, the captured image will have small circles arranged as indicated in FIG. 20. The shapes are circles because the shape of the aperture 409 of the main lens 408 has a circular shape. Each of the small circles is referred to as a "macro-pixel" herein. By collecting all of the macro-pixels, one image is formed. Each of the macro-pixels is formed immediately under each of the small lenses (micro-lenses) forming the micro-lens array 414. The diameter of a macro-pixel and the diameter of a micro-lens are substantially the same.

As indicated in FIG. 18, the light beams, which have passed through the bottom part of the filter 410, reaches the top part of the macro-pixels, and the light beams, which have passed through the top part of the filter 410, reaches the bottom part of the macro-pixels. Assuming that the filter 410 is arranged such that the bottom part has a spectral transmittance peak of a short wavelength and the top part has a spectral transmittance peak of a long wavelength, the light beams having a short wavelength reach the top part of the macro-pixels and the light beams having a long wavelength reach the bottom part of the macro-pixels, so as to correspond to the above arrangement. The FPGA 418 generates a spectral image from spectral information obtained from pixels reached by the light beams of the respective wavelengths. Accordingly, a plurality of spectral images corresponding to the desired wavelength can be obtained. The spectral reflectance calculating unit 420 calculates an average value for each row of macro-pixels, and can obtain the spectral reflectance by performing calculation in consideration of the spectral intensity of lighting such as the LED 404, the spectral transmittance of the main lens 408 and the condenser lens 412, the spectral transmittance of the filter 410, and the spectral sensitivity of the light receiving element array 416.

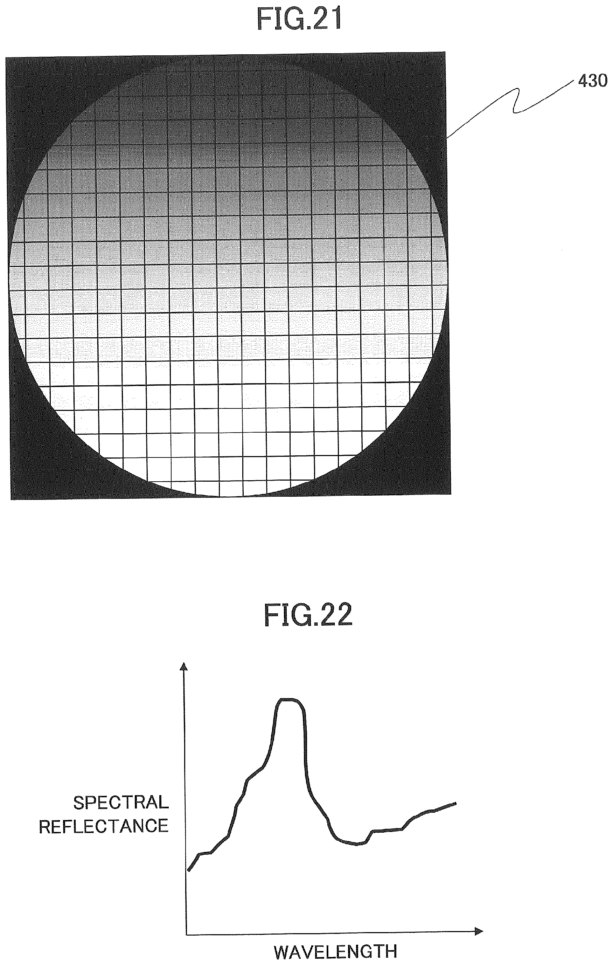

An enlarged view of a macro-pixel is indicated in FIG. 21. Here, consideration is made of a case where one macro-pixel has $19 \times 19$ pixels. From this one macro-pixel, the spectral reflectance of a certain point of the object 406 is obtained. First, a procedure for obtaining the reflectance on the most short wavelength ($\lambda$s) side is described. The data that can be obtained from the multispectral camera device 113 is the output value from the light receiving element, and the output value corresponds to the amount of light beams entering the light receiving element. The amount of light beams is the product of values at the wavelength $\lambda$s of the five properties of the spectral intensity of lighting such as the LED 404, the spectral reflectance of the object 406, the spectral transmittance of the optical system (the main lens 408, the condenser lens 412, etc.), the spectral transmittance of the filter 410, and the spectral sensitivity of the light receiving element array 416. Thus, on order to obtain the reflectance at $\lambda$s of the object 406, the output value is to be divided by the four values other than the spectral reflectance.

Here, the value used as the output value is a value obtained by dividing the sum of the output values of the 19 pixels in the row of the bottommost stage in FIG. 21, by the area in which the macro-pixel is formed. The area in which the macro-pixel is formed, is the area to which the light beams reach, other than the regions that are filled in with black in FIG. 21. This is to standardize the output value of each row. By the above procedure, it is possible to obtain the relative value of the reflectance at $\lambda$s. The absolute value requires additional calibration. The spectral intensity of lighting such as the LED 404, the spectral transmittance of the main lens 408 and the condenser lens 412, the spectral transmittance of the filter 410, the spectral sensitivity of the light receiving element array 416, and the area of each row of macro-pixels are already known at the time of designing. By applying the above process to each row of macro-pixels, it is possible to obtain the reflectance at the 19 wavelengths.

An example of the measurement result is indicated in FIG. 22. The horizontal axis indicates the wavelength, and the vertical axis indicates the relative value of the spectral transmittance. The above is the process with respect to one macro-pixel, and by applying the same process to all of the macro-pixels, the filter 410 can measure the two-dimensional spectral reflectance. This filter 410 can be fabricated by vapor-depositing a thin film on a transparent substrate made of optical glass, etc., such that the film thickness changes in the form of a wedge. The material of the thin film according to the present embodiment is niobium pentoxide, and the material on the short wavelength side is tantalum pentoxide. The film thickness of the thin film is several ten through several hundred nm. The part having a thinner film thickness corresponds to the short wavelength, and the part having a thicker film thickness corresponds to the long wavelength. The thickness of the thin film changes in the form of a wedge (without steps), and therefore the spectral transmittance also continuously changes.

The spectral transmittance is controlled by the interference of light, and therefore the condition by which the transmitted light beams intensify each other, corresponds to the peak wavelength of the spectral transmittance. The thickness of the transparent substrate is to be set such that the filter can be held. There are lenses that are designed to be close to the part near the aperture position, and in the case of these lenses, the substrate is preferably thin. For example, the substrate is approximately 0.5 mm. As described above, by using the filter 410 having a continuous spectral transmission property, it is possible to directly obtain the continuous spectral reflectance at the same time as capturing images. Accordingly, there is no need for an estimation process, and it is possible to measure the two-dimensional spectral reflectance having highly robust properties with respect to noise.

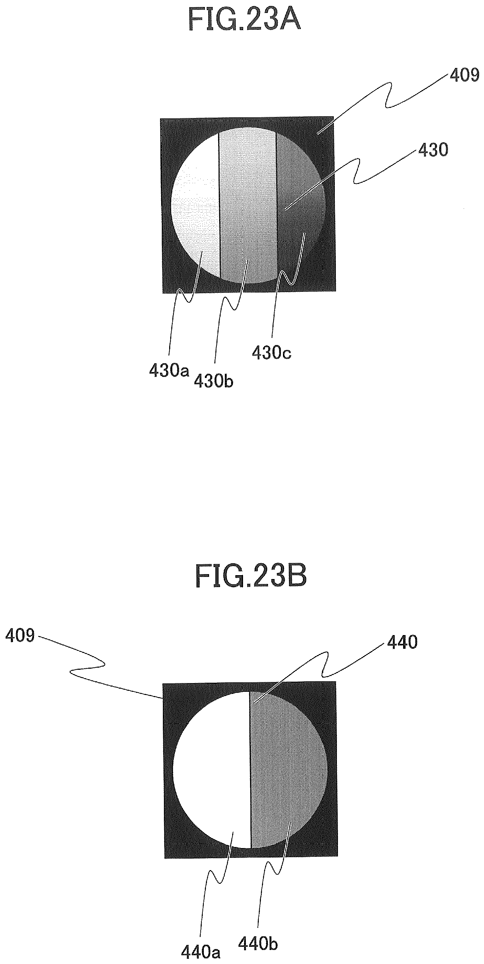

Next, by using FIG. 23, a description is given of another example of a filter that can be used in the multispectral camera device 113 according to the present embodiment. A filter 430 indicated in FIG. 23A has a configuration of being divided for each of the transmission bands. That is, the filter 430 is formed of a filter 430a corresponding to a wavelength region of 400 nm through 500 nm, a filter 430b corresponding to a wavelength region of 500 nm through 600 nm, and a filter 430c corresponding to a wavelength region of 600 nm through 700 nm. Therefore, the filter 430 is a filter in which the spectral transmittance continuously changes in both an ultraviolet region and an infrared region. Each of the filters 430a, 430b, and 430c is a filter in which the spectral transmittance changes spatially and continuously. Here, the respective wavelengths increase from the top toward the bottom as viewed in the figure. The direction in the longitudinal direction of each of the filters 430a, 430b, and 430c does not have to be unified. In essence, as long as there is a region in which the spectral transmittance continuously changes, the directionality does not matter. Furthermore, the filters 430a, 430b, and 430c are not limited to the above configuration, as long as the filters have at least partially different wavelength regions. The above transmission bands are examples; the transmission bands are not limited to the above values. By dividing the filter as described above, it is possible to reduce the wavelength width corresponding to one pixel. That is, it is possible to measure the spectral reflectance with high resolution with respect to the wavelength. Furthermore, by dividing and arranging the filters, it is possible to secure continuity in the spectral transmittance within a narrow aperture diameter, compared to a long and thin filter.

Note that in order to efficiently use light, the shape of the aperture 409 can be a square, a polygon, or another desired shape.

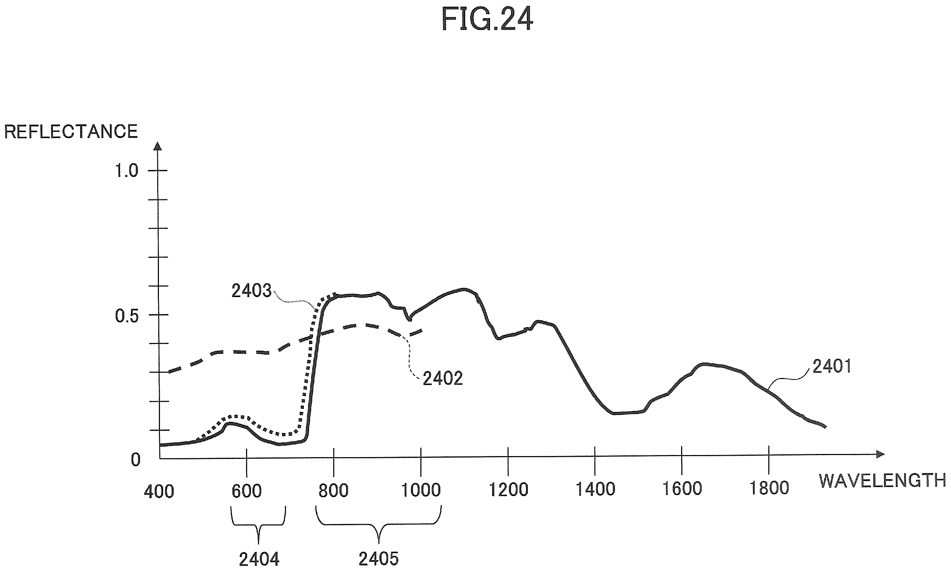

FIG. 24 indicates a typical spectral reflection spectrum with respect to a leaf of a plant. A solid line 2401 indicates a spectral of a normal leaf (high degree of plant activity), and a dashed line 2402 indicates a spectral of a perished leaf (low degree of plant activity). As indicated by this solid line 2401 in the figure, a normal leaf having a high degree of plant activity has a low reflectance by absorbing chlorophyll, which is one type of a chloroplast, in a visible red region (or in a shorter wavelength region) 2404 in which the wavelength is around 660 nm. On the other hand, the normal leaf having a high degree of plant activity has a high reflectance in a near-infrared region 2405 in which the wavelength is 700 nm through 1100 nm. On the other hand, in a perished leaf having a low degree of plant activity, the chlorophyll is decomposed, and therefore the chlorophyll is not absorbed much in the visible red region 2404, and the reflectance is higher than the reflectance of a normal leaf. Note that this tendency is similar in plants, regardless of the type of plant. Thus, the Normalized Difference Vegetation Index (NDVI) can be obtained by using (formula 6) based on the spectral reflectance R in the visible red region 2404 and the spectral reflectance in the near-infrared region IR.

$$NDVI=(IR-R)/(IR+R) \qquad (formula\ 6)$$

Typically, the Normalized Difference Vegetation Index (NDVI) is a value from -1 through +1, and the higher the value of NDVI, the higher the degree of plant activity. By using the multispectral camera device 113, logically, it is possible to obtain this Normalized Difference Vegetation Index NDVI in all imaging areas. That is, as in a filter 440 of FIG. 23B, a filter 440a corresponding to the wavelength region of 660 nm that is the visible red region 2404, and a filter 440b corresponding to the wavelength region of 770 nm that is the near-infrared region 2405, are used as filters of the multispectral camera device 113 according to the present embodiment. Note that a filter corresponding to a wavelength region of 785 nm or 900 nm as the near-infrared region 2405 may be used as the filter 440b. In this case, 785 nm is a wavelength that can be easily obtained by a laser diode (LD). The set LED 404 has a feature that half of the LED 404 emits light having high intensity when the wavelength is near 660 nm, and the other half emits light having high intensity when the wavelength is near 770 nm. By the above configuration, the multispectral camera device 113 emits LED light to a target plant and captures an image of the reflected light. Then, the FPGA 418 obtains a spectral image at a wavelength of 660 nm and a spectral image at a wavelength of 770 nm. The spectral reflectance calculating unit 420 obtains the spectral reflectance at a desired position or region in these spectral images. Furthermore, a CPU in the spectral reflectance calculating unit 420 obtains the Normalized Difference Vegetation Index NDVI by applying (formula 6). Note that instead of the CPU in the multispectral camera device 113, the control device 118 of the agricultural machine 100 or the server 704 that has acquired the spectral image and the spectral reflectance information may apply (formula 6) and obtain the Normalized Difference Vegetation Index NDVI. Note that the Normalized Difference Vegetation Index NDVI for each crop is sent to and stored in the database 708. Note that instead of using the Normalized Difference Vegetation Index NDVI, only the spectral reflectance of the wavelength of the visible red region (for example, 660 nm) 2404 may be used to perceive the growth status of the plant. This is because in this visible red region 2404, the variation in the spectral reflectance is large according to difference in the degree of plant activity. Accordingly, it is possible to perceive the growth status and omit the measurement of the spectral reflectance and the calculation of the Normalized Difference Vegetation Index NDVI in the near-infrared region 2405, and the process and determination can be quickly done. On the other hand by obtaining the Normalized Difference Vegetation Index NDVI, it is possible to obtain normalized and more precise information of the growth state (degree of plant activity).

Furthermore, by observing the Normalized Difference Vegetation Index NDVI per day, it is possible to accurately anticipate the harvest period. For example, a leaf vegetable is preferably harvested when the Normalized Difference Vegetation Index NDVI is maximum (when the degree of plant activity is maximum). The maximum value of the Normalized Difference Vegetation Index NDVI and the day when the maximum value of the Normalized Difference Vegetation Index NDVI is attained are different for each crop, and therefore the range of the Normalized Difference Vegetation Index NDVI in which the harvesting is desired is determined for each plant. This can be done by the server 704 or the user terminal 710, 712 by using the data of the Normalized Difference Vegetation Index NDVI stored in the database 708. For example, as an experiment, observations are made of a plurality of crops of the same kind for which the Normalized Difference Vegetation Index NDVI exceeds the local maximum value, and according to the degree of variation, etc., the range of the Normalized Difference Vegetation Index NDVI in which the crops are to be harvested, is determined (for example, with respect to lettuce, in a range of the Normalized Difference Vegetation Index NDVI is 0.5 through 0.55). Then, when the Normalized Difference Vegetation Index NDVI of a crop obtained by the multispectral camera device 113, etc., is within the determined range, the corresponding crop is to be harvested. Furthermore, the harvest period can be forecasted by obtaining the statistical tendency of variation per day of the Normalized Difference Vegetation Index NDVI for each crop, from the stored data.

Furthermore, according to the multispectral camera device 113, it is possible to determine the quality (sugar content) of a product (fruit) based on the color. In this case, the filter 430, which is divided for each of the transmission bands of FIG. 23A (400 nm through 500 nm (430a), 500 nm through 600 nm (430b), 600 nm through 700 nm (430c)), is used, and furthermore, a color sensor, in which color filters of RGB are arranged in a Bayer arrangement for each of the light receiving elements (pixels) of the light receiving element array 416, is used. This RGB color filter includes the peak (maximum value) of the spectral, near 470 nm in B (blue), near 540 nm in G (green), and near 620 nm in R (red). The filters (430a and 430b and 430c) forming the filter 430, and the filters of RGB forming the filter 440 in the color sensor, have different spectral properties. As light beams pass through the filters forming the filter 430 and the filters forming the filter 440 in the color sensor, it is possible to simultaneously acquire spectral information similar to a case where light beams have passed through a band path filter of $3 \times 3 = 9$ types. However, in a narrow sense, the light can only be transmitted through the parts of the spectral transmission region in each filter, and therefore in the present embodiment, substantially six types of spectral information are acquired. If six types of spectral information can be acquired as described above, the spectral in the natural world can be measured with high precision, and the captured colors can be recognized accurately. This multispectral camera device forms a colorimetric camera device that can precisely measure visible light. For example, in the case of a fruit such as a kind of a strawberry in which the sugar content increases as the strawberry becomes ripe and red, the multispectral camera device (colorimetric camera device) 113 can obtain the spectral reflectance in the visible red region in the spectral image of the whole fruit, and therefore the sugar content can be evaluated.

Furthermore, with regard to a fruit having a thin fruit skin such as a peach, the multispectral camera device 113 can measure the spectral reflectance of the near-infrared region and the sugar content can be evaluated based on the spectral distribution.

Furthermore, the multispectral camera device 113 can measure the moisture content included in a green leaf of a plant in a non-contact/non-destructive manner. When there is a deficiency in moisture in a plant, water stress is applied on the plant, and the spectral property on the surface of the green leaf changes, and therefore by capturing this change, the moisture content is measured. As indicated in FIG. 24, there is a region (red edge) where the reflectance rapidly increases, from the visible red region to the near-infrared region. It is known that when water stress is applied to a plant, the region in which the reflectance increases shifts toward the blue side (left side) where the wavelength is short (blue shift). The dotted line 2403 of FIG. 24 indicates the blue shift in a case where water stress is applied. If this shift amount can be detected, it is possible to identify the moisture content in the leaf of a plant (the degree of application of water stress). Thus, for the purpose of detecting the degree of this water stress, to measure the reflectance in a plurality of wavelengths in regions where the reflectance rapidly increases from the visible red region to the near-infrared region, the multispectral camera device 113 is provided with a spectral filter for handling the plurality of wavelength regions. For example, the spectral filter may continuously change from the visible red region to the near-infrared region like the filter 410, or the spectral filter may be a filter for selectively transmitting a desired wavelength (for example, 715 nm, 740 nm).

By measuring the reflectance with respect to a desired wavelength in a region where the reflectance rapidly increases from the visible red region to the near-infrared region, and comparing the measured reflectance with a reflectance to be a reference (for example, the spectral reflectance with respect to each of the wavelengths in a state where water stress is not applied), it is possible to detect the shift amount. In this case, LEDs, which can output light of a desired wavelength in a region where the reflectance rapidly increases from the visible red region to the near-infrared region, may be set as the LED 404, and these LEDs may be used, or sunlight may be used to measure the reflectance without emitting light from the LED 404. When using sunlight, the spectral reflectance in the plurality of wavelengths acquired from the sunlight reflected from the plant, is divided by the reflectance obtained from sunlight reflected from a standard white board set in the farm land or the agricultural machine 100, and the normalized levels are compared with each other, to reduce the impact of errors in the measurement value caused by variations in the light amount of the sunlight. Note that the measured spectral reflectance is not limited to a spectral reflectance with respect to two wavelengths; in order to increase the precision, a spectral reflectance with respect to three or more wavelengths may be measured. As described above, by measuring the moisture content included in a plant with the multispectral camera device 113, the moisture content of a plant that is a measurement target can be quickly measured in a non-destructive, non-contact manner.

Note that instead of the LED 404, or together with the LED 404, laser beams of a predetermined wavelength may be emitted from the laser radar device 112 to a plant, and the multispectral camera device 113 may capture images of the reflected light. The laser radar device 112 may measure the distance to the measurement position. Therefore, from the spectral image captured by the multispectral camera device 113 and the distance information detected by the laser radar device 112, for example, the length of a stem between branches and the size of a leaf can be identified or estimated. In the present embodiment, this identification (or estimation) process is performed by the server 704. The server 704 performs a recognition process described below in the spectral image, and recognizes leaves, branches, and stems. Then, as the length between branches is, for example, when the distance to the branches is 50 cm and the length corresponds to 1000 pixels, the server 704 identifies (estimates) the length to be approximately 5.3 cm. Alternatively, when a leaf is at a distance of 50 cm and occupies 230,000 pixels, the server 704 identifies (estimates) the area of the leaf to be 100 square centimeters. These values are compared with the reference length between stems and a references size of a leaf of the corresponding crop, to perceive the growth status. Note that the above identification process (or estimation process) may be performed by the control device 118 of the agricultural machine 100.

Furthermore, two multispectral camera devices (colorimetric camera devices) 113 may be combined to measure distances by the same principle as the stereo camera device 110 described above. Accordingly, the image of the target, the spectral information, and the distance information (parallax value information) can be acquired by one imaging operation.

Furthermore, the multispectral camera device 113 may measure the spectral reflectance of the near-infrared light from the soil, and use the difference in the spectral of absorbing nutriments (nitrogen, phosphoric acid, potassium) needed for the growth of the crop plant, to perceive the state of the soil. According to the perceived state of the soil, the overall system 1500 adjusts the balance in the fertilizer, etc., and can efficiently manage the soil in a detailed manner.

<State monitoring device>

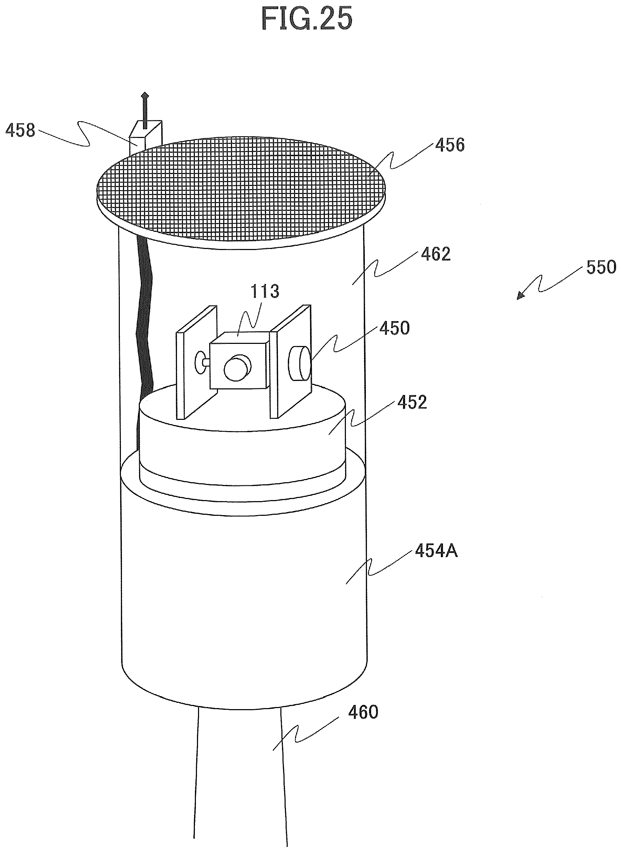

When managing an extensive farm land, it is preferable to quickly recognize the state such as the growth status of crops across a wide range of farm land. FIG. 25 indicates the state monitoring device 550 using the multispectral camera device 113. The state monitoring device 550 is a device for quickly measuring the degree of activity of crops and soil, etc., in a farm land across a wide range. The state monitoring device 550 includes the multispectral camera device 113, a holding unit 450 for rotatably holding the multispectral camera device 113 with respect to a horizontal axis, a rotation stage 452 for rotatably holding the holding unit 450 with respect to a vertical axis, a solar panel 456 in which a plurality of solar batteries for converting solar energy into electric energy are arranged and connected to each other, a storage unit 454A storing a control unit for performing input output control and communication control of sending instructions to a storage battery storing electricity generated at the solar panel 456 and the multispectral camera device 113, and receiving information from the multispectral camera device 113, and for performing rotation control of the holding unit 450 and the rotation stage 452, a wireless antenna 458 connected to the control unit in the storage unit 454A and for performing wireless communication with the agricultural machine 100, the server 704, and the user terminal 710, 712, a cover 462 made of transparent glass for protecting the multispectral camera device 113, etc., from the surrounding environment, and a pole 460 for supporting the state monitoring device 550 at a high position. The communication, various control, and imaging by the state monitoring device 550 are performed by using the electric energy stored in the storage battery. Note that when there is a deficiency in the electric energy in the storage battery or when the storage battery is not used, power from outside may be used. Furthermore, the cover 462 may not be made of glass as long as the material is transparent; for example, the cover 462 may be made of resin such as acrylic. Above the cover 462, the solar panel 456 is set, and below the cover 462, the storage unit 454A is set. Furthermore, the multispectral camera device 113, the holding unit 450, and the holding unit 450 are set inside the cover 462. This state monitoring device 550 captures images of the crops in the surrounding area and checks the degree of plant activity of the crops, based on information sent from the user terminal 710, 712, the server 704, and the agricultural machine 100. Note that the images may be captured by using reflected sunlight without using the LED 404. Furthermore, the control unit and the wireless antenna 458 also function as wireless access points, and may relay information in a wireless manner. Accordingly, the region in which wireless communication can be performed can be enlarged. Furthermore, the control unit sends signals for identifying the position of the agricultural machine 100 via the wireless antenna 458, according to instructions from any one of the agricultural machine 100, the server 704, and the user terminal 710, 712. The agricultural machine 100 is able to identify the present position based on the intensity (or the attenuation) of reception signals sent from a total of three or more state monitoring devices 550 or farm land monitoring devices 500, or based on the difference in the reception times of these signals.

Note that in order to make the light, which is reflected from the ground around the position where the state monitoring device 550 is set, to enter the main lens 408 of the multispectral camera device 113, a reflective mirror may be set with an angle on the inside or the outside of the cover 462 at an upper part of the state monitoring device 550. Accordingly, it is possible to monitor the positions at the bottom that become at a blind corner due to the rotation stage 452 and the storage unit 454A.

Furthermore, the state monitoring device 550 may also be used for purposes other than monitoring the state of the crop in the farm land; the state monitoring device 550 may be used as a monitoring device for monitoring a target (for example, soil) for which the spectral reflectance has different properties according to the wavelength. Furthermore, there are cases where the leaf itself and the surface of the leaf, etc., changes in color due to pest, frost, or other kinds of impact, and the state monitoring device 550 is able to detect the plant and the area where the color is changing.

<Farm land monitoring device>

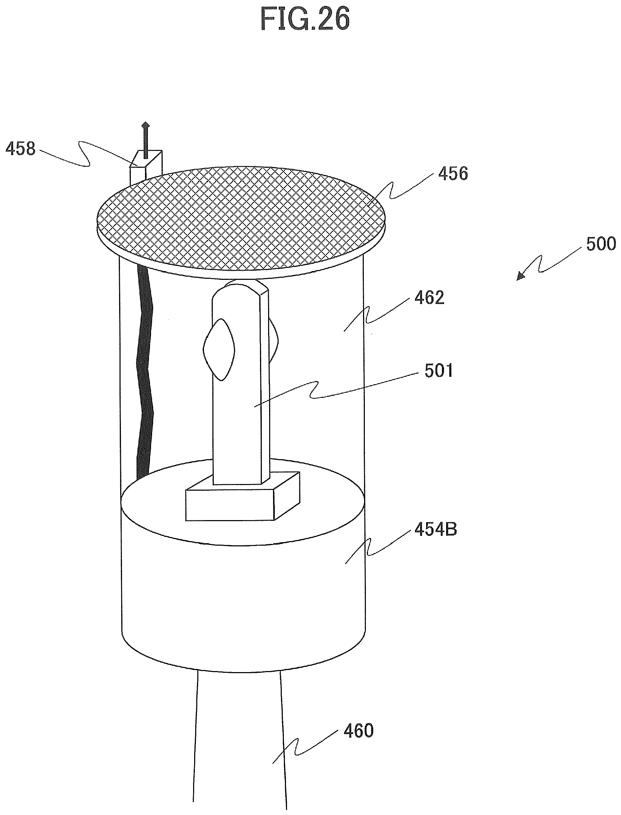

A general camera device can only capture images in one direction at once. Therefore, when the entire surrounding area is to be monitored by using such a camera device, operations such as rotating the camera device have to be performed, and cost is needed for increasing the size of the monitoring device and for providing a rotation mechanism. Furthermore, an activating unit is included, and therefore failures are generally likely to occur. For this reason, when monitoring a vast farm land, it is preferable to capture a range that is as wide as possible, by a single imaging operation. FIG. 26 indicates the farm land monitoring device 500 using a celestial sphere camera device 501. The celestial sphere camera device 501 is an example of a sensor. The celestial sphere camera device 501 is able to capture an area of 360 degrees around the camera by a single imaging operation, and by setting the celestial sphere camera device 501 in the farm land, the farm land can be monitored as a matter of course, and for example, the weather can be monitored from images of the sky. Furthermore, according to the state monitoring device 550, the amount of insolation can be evaluated across a wide area. In FIG. 26, the elements denoted by the same reference numerals as those of FIG. 25 have the same function as those described by using FIG. 25, and therefore descriptions are omitted. A reference numeral 454B indicates a storage unit for storing a storage battery and a control unit like the state monitoring device 550; however, this control unit is different from the control unit of state monitoring device 550 in that instructions are given to the celestial sphere camera device 501 instead of to the multispectral camera device 113, input output control is performed on information from the celestial sphere camera device 501, and rotation control is not performed.

Note that in order to cause the light, which is reflected from the ground in the area around the setting position of the farm land monitoring device 500, to enter the optical systems A, B of the celestial sphere camera device 501, a reflective mirror may be set with an angle on the inside or the outside of the cover 462 at the part above the farm land monitoring device 500. Accordingly, it is possible to monitor the positions at the bottom that become at a blind corner due to the storage unit 454B, etc.

Note that the farm land monitoring device 500 using this celestial sphere camera device 501 may also be used as, for example, a monitoring camera device, for purposes other than monitoring the farm land.

<Celestial sphere camera>

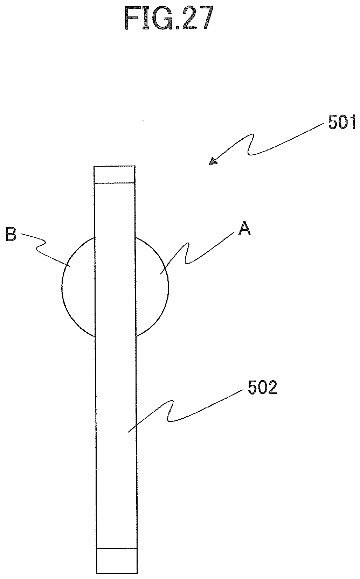

By using FIGS. 27 through 30, a description is given of the celestial sphere camera device 501 according to the present embodiment. FIG. 27 is a front external view of the celestial sphere camera device 501. This camera includes two optical systems A, B, including fish-eye (wide-angle) lenses and a main body part 502.

A. Optical system of celestial sphere camera

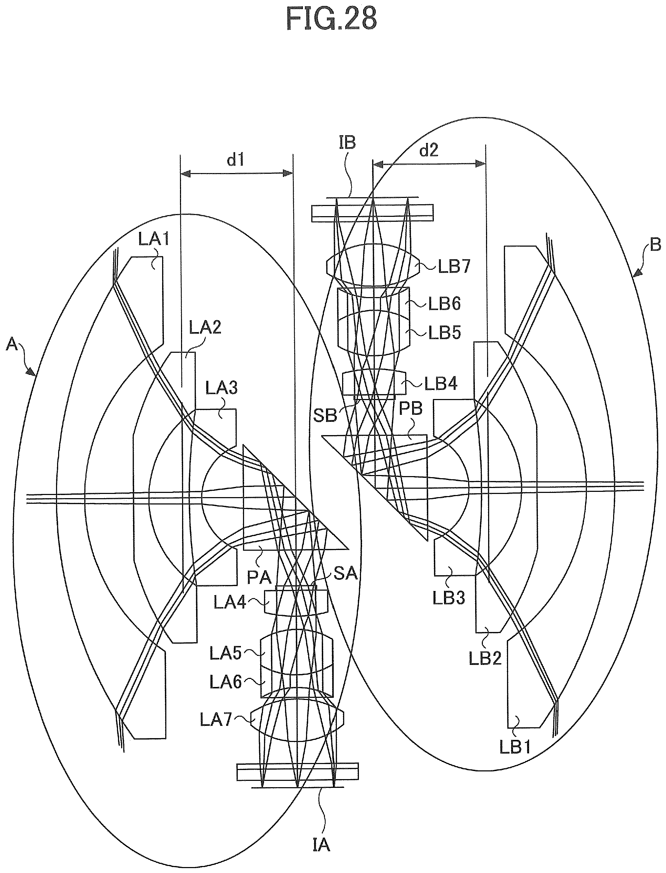

FIG. 28 is a diagram indicating an optical system of the celestial sphere camera device 501. In FIG. 28, the parts denoted by reference letters A, B indicate imaging optical systems. The two imaging optical systems A, B are respectively formed of wide-angle lenses having a wider angle of view than 180 degrees, and an imaging element IA, IB for capturing an image by the wide-angle lenses. That is, the imaging optical system A is formed of a front group including lenses LA1 through LA3, a perpendicular prism PA forming a reflective surface, and a back group including lenses LA4 through LA7. Furthermore, an aperture stop SA is arranged on the object side of the lens LA4. The imaging optical system B is formed of a front group including lenses LB1 through LB3, a perpendicular prism PB forming a reflective surface, and a back group including lenses LB4 through LB7. Furthermore, an aperture stop SB is arranged on the object side of the lens LB4.

The lenses LA1 through LA3 forming the front group of the imaging optical system A includes a negative meniscus lens (LA1) made of a glass material, a negative lens (LA2) made of a plastic material, and a negative meniscus lens (LA3) made of a glass material, sequentially stated from the object side. The lenses LA4 through LA7 forming the back group of the imaging optical system A includes a biconvex lens (LA4) made of a glass material, a cemented lens formed by a biconvex lens (LA5) and a biconcave lens (LA6) made of a glass material, and a biconvex lens (LA7) made of a plastic material, sequentially stated from the object side. The lenses LB1 through LB3 forming the front group of the imaging optical system B includes a negative meniscus lens (LB1) made of a glass material, a negative lens (LB2) made of a plastic material, and a negative meniscus lens (LB3) made of a glass material, sequentially stated from the object side. The lenses LB4 through LB7 forming the back group of the imaging optical system B includes a biconvex lens (LB4) made of a glass material, a cemented lens formed by a biconvex lens (LB5) and a biconcave lens (LB6) made of a glass material, and a biconvex lens (LB7) made of a plastic material, sequentially stated from the object side.

In these imaging optical systems A, B, with respect to the negative lenses LA2, LB2 made of a plastic material in the front group and the biconvex lenses LA7, LB7 made of a plastic material in the back group, both sides of these lenses are aspheric surfaces; while the other lenses made of a glass material are spherical surface lenses. The position of the front-side principal point of the wide angle lenses is set between the second lens LA2, LB2 and the third lens LA3, LB3. In the wide-angle lenses in the imaging optical system A, the length between the intersecting point of the light axis and the reflective surface of the front group, and the front-side principal point is d1 in FIG. 28. In the wide-angle lenses in the imaging optical system B, the length between the intersecting point of the light axis and the reflective surface of the front group, and the front-side principal point is d2. Assuming that these lengths d1, d2 are the length d in the wide-angle lenses, the following is satisfied.

$$\text{Condition (1)} \qquad 7.0 < d/f < 9.0$$

The meaning of condition (1) is described as follows. A decrease in the parameter d/f of condition (1) means an increase in the focal length: f of the entire system, or a decrease in the length: d between the intersecting point of the light axis and the reflective surface of the front group and the front-side principal point. As the focal length: f increases, the entire length of the lenses along the light axis of the wide-angle lenses becomes long, and therefore if an appropriate value is set from the viewpoint of making the size compact, this means that the length: d decreases under this condition. When d decreases, the interval between the lens LA3 (LB3) and the prism PA (PB) becomes narrow, and the restriction with restrict to the lens thickness for securing the refracting power needed for the lens LA3 (LB3) becomes strict. When the value becomes lower than the lower limit of condition (1), it becomes impossible to process or difficult to process the desired thickness and shape of the lens LA3 (LB3). In FIG. 28, the imaging optical systems A, B are to be arranged as close to each other as much as possible in the horizontal direction as viewed in the figure, for achieving the objective of reducing the size of the celestial sphere camera device 501. The reflective surface is the oblique surface of the perpendicular prisms PA, PB, and therefore arranging these oblique surfaces as close to each other as much as possible is effective in terms of reducing the size of the celestial sphere camera device 501. In condition (1), an increase in the parameter: d/f means an increase in the length: d between the intersecting point of the light axis and the reflective surface of the front group and the front-side principal point, and this means an increase in the size of the front group. An increase in the front group as described above makes it difficult to reduce the size of the celestial sphere camera device 501. In this case, as a method of compensating for the increase in the size of the celestial sphere camera device 501 by caused the increased size of the front group, it is possible to consider arranging the imaging optical systems A, B to be shifted from each other in the vertical direction in FIG. 1, in a state where the oblique surfaces of the prisms PA, PB are close to each other. However, by this arrangement, the axes of the front groups of the wide-angle lenses of the imaging optical systems are shifted from each other in the vertical direction in FIG. 28, and therefore if this shift amount becomes excessive, the impact of the parallax increases. The increase in the size of the front group can be allowed, while effectively suppressing the impact of the parallax, in a case where the parameter: d/f is lower than the upper limit of condition (1). The condition with respect to the ratio: d/f of the above length: d and the focal length: f is restricted with respect to the celestial sphere camera device 501 by the following condition (4).

$$\text{Condition (4)} \qquad 16 \leq (d1+d2)/f < 21$$

If the ratio drops below the lower limit of condition (4) while suppressing the impact of the parallax, the reflective surfaces of the prisms PA and PB will interfere with each other, and if the ratio exceeds the upper limit of condition (4), the impact of the parallax cannot be ignored.

$$\text{Condition (3)} \qquad nd \geq 1.8$$

Condition (3) defines that a material, which has a refraction factor: nd higher than 1.8 with respect to the d line, is to be used as the material of the prisms PA, PB. The prisms PA, PB cause the light from the front group to internally reflect toward the back group, and therefore the light path of the imaging light flux passes inside the prisms. When the material of the prism has a high refraction factor that satisfies condition (3), the optical light path length inside the prism becomes longer than the actual light path length, and the length of bending the light beam can be increased. The light path length between the front group and the back group, in the structure of the front group/prism/back group, can be made longer than a mechanical light path length, and therefore the configuration of the wide-angle lenses can be made to have a compact size. Furthermore, by arranging the prisms PA, PB near the aperture stops SA, SB, it is possible to use a small prism, and the intervals between the wide-angle lenses can be reduced. The prisms PA, PB are arranged between the front group and the back group. The front group of wide-angle lenses has a function of taking in light beams of a wide angle of view of higher than or equal to 180 degrees, and the back group has a function of effectively correcting the aberration in image formation. By arranging the prisms as described above, it is possible to reduce the impact of shifts in the arrangement of the prisms and manufacturing tolerance.

B. Configuration of celestial sphere camera other than optical system

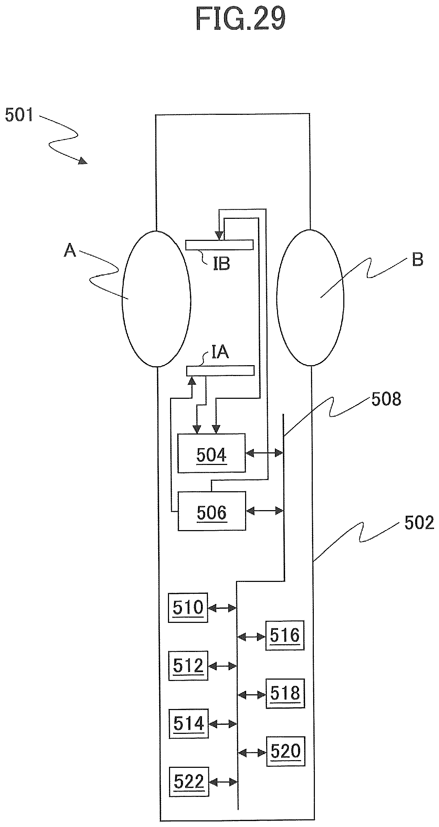

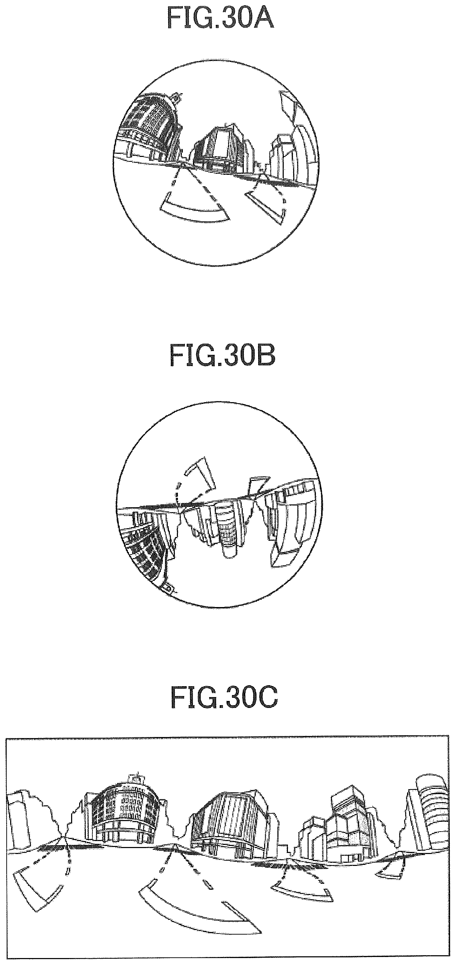

Next, by using FIG. 29, a configuration of the celestial sphere camera device 501 according to the present embodiment is indicated. As indicated in FIG. 29, the celestial sphere camera device 501 includes the imaging optical systems A, B, the imaging elements IA, IB, an image processing unit 504, an imaging control unit 506, a CPU 510, a ROM 512, a Static Random Access Memory (SRAM) 514, a Dynamic Random Access Memory (DRAM) 516, an operation unit 518, a network I/F 520, and a communication unit 522. The imaging elements IA, IB include an image sensor such as a COMS sensor and a CCD sensor that converts an optical image according to a wide-angle lens into image data of electronic signals and outputs the electronic signals, a timing generation circuit that generates horizontal or vertical synchronization signals and pixel clocks, etc., of the image sensor, and a group of registers in which various kinds of commands and parameters, etc., needed for operations of the imaging element are set. The imaging elements IA, IB are respectively connected to the image processing unit 504 by a parallel I/F bus. Furthermore, the imaging elements IA, IB are connected to the imaging control unit 506 by a serial I/F bus (I2C bus, etc.). The image processing unit 504 and the imaging control unit 506 are connected to the CPU 510 via a bus 508. To the bus 508, the ROM 512, the SRAM 514, the DRAM 516, the operation unit 518, the network I/F 520, and the communication unit 522 are also connected. The image processing unit 504 takes in the image data items output from the imaging elements IA, IB through the parallel I/F bus, performs a predetermined process on the respective image data items, performs a process of combining these image data items, and creates data of an equidistant cylindrical image as indicated in FIG. 30C. The imaging control unit 506 generally sets commands, etc., in a group of registers in the imaging elements IA, IB, by setting the imaging control unit 506 as the master device and the imaging elements IA, IB as the slave devices and by using a serial I/F bus such as an I2C bus, etc. The required commands, etc., are received from the CPU 510. Furthermore, the imaging control unit 506 uses the same serial I/F bus to take in status data, etc., of the group of registers in the imaging elements IA, IB, and sends the data to the CPU 510. Furthermore, the imaging control unit 506 instructs the imaging elements IA, IB to output image data at a timing when the shutter button of the operation unit 518 is pressed. Note that in the farm land monitoring device 500, this operation unit 518 is omitted, and images are captured based on instructions from the control unit stored in the storage unit 454 that is connected to the network I/F 520.

Furthermore, the imaging control unit 506 cooperates with the CPU 510 as described below to function as a synchronization control unit to synchronize the output timings of the image data from of the imaging elements IA, IB. The CPU 510 controls the overall operations of the celestial sphere camera device 501 and executes necessary processes. The ROM 512 stores various programs for the CPU 510. The SRAM 514 and the DRAM 516 are work memories, and stores programs executed by the CPU 510 and data that is presently being processed, etc. Particularly, the DRAM 516 stores image data that is presently being processed by the image processing unit 504 and data of the equidistant cylindrical image that has been processed. The operation unit 115 is a generic name of various operation buttons, a power switch, the shutter button, and a touch panel having both a displaying function and a operation function. The user is able to input various photographing modes and photographing conditions by operating the task buttons. The network I/F 520 is a generic term of an interface circuit (USB I/F, etc.) with respect to external media such as an SD card and a USB memory, etc., and a personal computer, etc. Furthermore, the network I/F 520 may be a wireless or wired network interface. The data of the equidistant cylindrical image stored in the DRAM 516 communicates with the control unit of the storage unit 454 via the network I/F 520. Furthermore, data is sent to the agricultural machine 100, the server 704, and the user terminal 710, 712 via the wireless antenna 458. The communication unit 522 uses the short distance wireless technology. The control unit in the storage unit 454 may be provided with a communication function to communicate with the communication unit 522; however, the communication unit 522 may be omitted when the celestial sphere camera device 501 is used in the farm land monitoring device 500.

Next, by using FIG. 30, a description is given of images captured by the celestial sphere camera device 501 and a combined image. Note that FIG. 30A is a hemispheric image (front side) captured by the celestial sphere camera device 501, FIG. 30B is a hemispheric image (back side) captured by the celestial sphere camera device 501, and FIG. 30C is an image (referred to as an "equidistant cylindrical image") expressed by equidistant cylindrical projection. Note that for as a matter of easy understanding, FIG. 30 indicates examples of images obtained by capturing buildings. As illustrated in FIG. 30A, an image obtained by the imaging element IA becomes a hemispheric image (front side) that is curved by the imaging optical system A. Furthermore, as illustrated in FIG. 30B, an image obtained by the imaging element IB becomes a hemispheric image (back side) that is curved by the imaging optical system B. Furthermore, the hemispheric image (front side) and the hemispheric image (back side), which is inverted by 180 degrees, are combined by the image processing unit 504 of the celestial sphere camera device 501, and an equidistant cylindrical image is created as indicated in FIG. 30C. First, the image processing unit 504 detects the connection positions. That is, by a pattern matching process, the image processing unit 504 calculates the shift amount between a reference image and a comparison image for each area. Next, the image processing unit 504 performs distortion correction by geometric conversion. That is, the lens properties are considered with respect to the connection position detection result, and the images are converted into a celestial sphere image format. Finally, the two images are blended, and a single celestial sphere image is generated.

Note that part of the celestial sphere camera device 501 of the farm land monitoring device 500, 555 set in the farm land may be a night-vision camera for monitoring at night. In this case, a highly sensitive light receiving element is used as the imaging elements IA, IB, near-infrared light is emitted for lighting the farm land, and the reflected light is captured to acquire an image in a monochrome mode.

Furthermore, in the celestial sphere camera device 501, a polarizing filter (SWS polarizing filter, etc.) may be arranged on the light receiving side of the imaging elements IA, IB, similar to the stereo camera device 110, to detect an image by S polarization and P polarization. In this case, the celestial sphere camera device 501 is also able to acquire a high contrast image. For this reason, it is possible to increase the precision in detecting a subject (a black subject, etc.) in which the polarization state of light differs according to the plane direction, or a subject (a transparent subject, etc.) in which the transmittance changes according to the polarization state of light, which are difficult to detect by a camera device that is not a polarization camera device.

<Another example of farm land monitoring device>

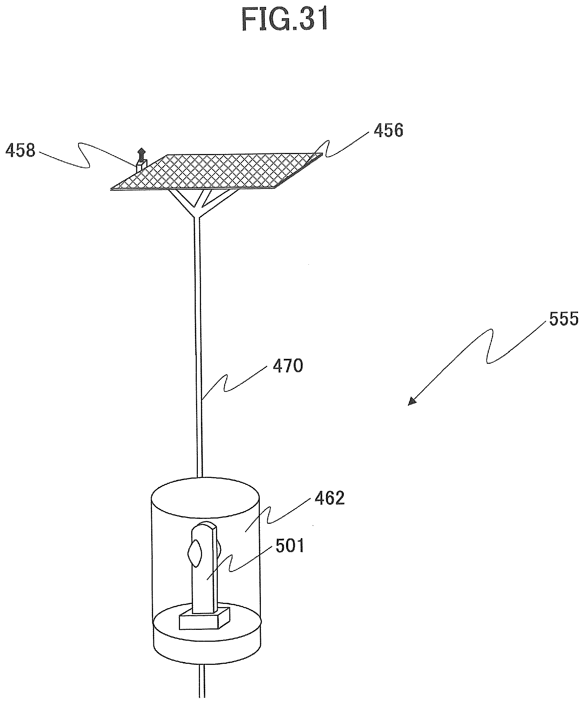

FIG. 31 indicates another example of the farm land monitoring device. This farm land monitoring device 555 is different from the farm land monitoring device 500 described above, in that the solar panel 456 and the wireless antenna 458 do not contact the transparent cover 462, but are set at an upper position via a pole 470. The other configurations are the same as the configurations of the farm land monitoring device 500. By the above configuration, the solar panel does not become an obstruction when an image that is slightly at an upper position is to be acquired. Furthermore, instead of the celestial sphere camera device 501, in the farm land monitoring device 555 of FIG. 31, the multispectral camera device 113, the holding unit 450, and the rotation stage 452 illustrated in FIG. 25 may be provided, and the state monitoring device 550 including a controller for controlling these elements may be configured.

Note that in order to make the light, which is reflected from the ground around the position where the farm land monitoring device 555 is set, to enter the optical systems A, B of the celestial sphere camera device 501, a reflective mirror may be set with an angle on the inside or the outside of the cover at an upper part of the cover 462. Accordingly, it is possible to monitor the positions at the bottom that become a blind corner due to the storage unit 454B, etc.

A plurality of the farm land monitoring devices 500, 550 and the state monitoring devices 555 are set in the farm land; however, when the size of the farm land is small and the farm land can be monitored by a single device, only a single device may be set. The farm land monitoring device 500, 555 and the state monitoring device 550 are examples of a sensor.

[Operation of system]

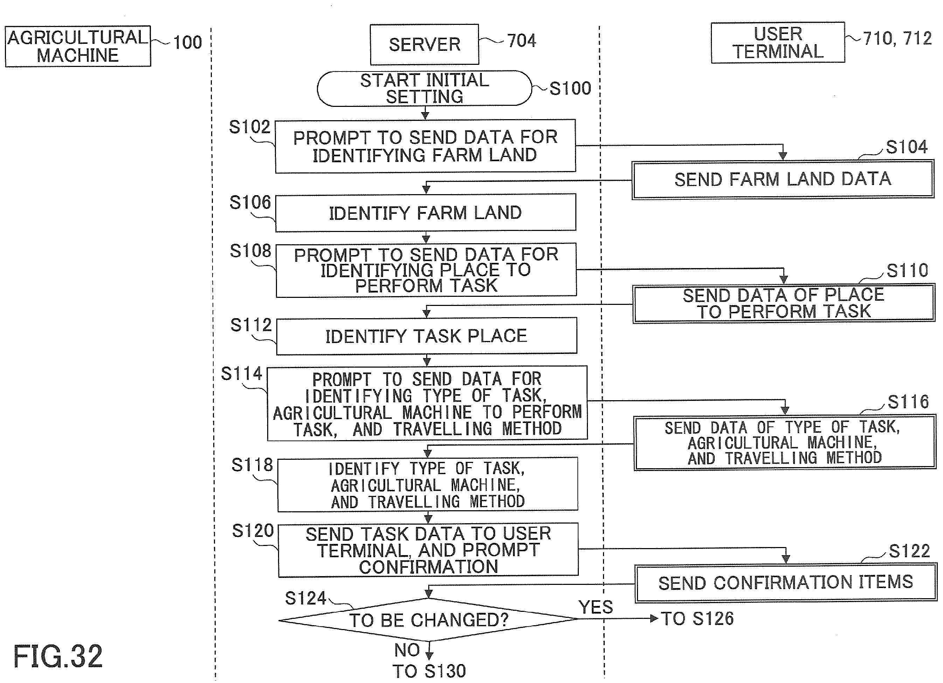

By using FIGS. 32 through 56, a description is given of the operations of the overall system 1500 according to the present embodiment. Note that the operations of the overall system 1500 are performed as the agricultural machine 100, the server 704, the user terminal 710, 712, and other devices including the farm land monitoring device 500, 555, the state monitoring device 550, and the databases 706, 708, etc., operate in cooperation with each other, and the agricultural machine 100 does not travel or perform tasks according to manual control. That is, the operations are for causing the agricultural machine 100 to travel and perform tasks automatically. The operations indicated by figures and flowcharts are the representative operations of the overall system 1500. Other operations and detailed operations have been described above by writing or will be described below. Furthermore, the exchanging of information among the agricultural machine 100, the server 704, the user terminal 710, 712, and other devices (devices denoted by reference numerals 110, 112, 113, 500, 550, 555, etc.) is performed by wired or wireless communication already described above, in a direct manner or by being relayed via wireless access points, etc. When wireless communication by radio waves is not effective, wireless information communication may be performed by using visible light or invisible light.

Note that the operations that are performed by the server 704 being the subject as described above and below, are specifically operations that are performed by the CPU in the server according to programs stored in the SSD; however, as a matter of simplification of descriptions, the operations are described as being performed by the server 704. Furthermore, the operations that are performed by the agricultural machine 100 being the subject as described above and below, are specifically operations that are performed by the control device 118 that is built in the agricultural machine 100, according to programs stored in the agricultural machine 100; however, as a matter of simplification of descriptions, the operations are described as being performed by the agricultural machine 100. Furthermore, the operations that are performed by the user terminal 710, 712 being the subject as described above and below, are specifically operations that are performed by a CPU that is built in the user terminal 710 and/or the user terminal 712 according to programs stored in a recording medium and/or according to instructions of a user of the user terminal; however, as a matter of simplification of descriptions, the operations are described as being performed collectively by the user terminal 710, 712. Furthermore, the operations described above and below that are performed by other devices (devices denoted by reference numerals 110, 112, 113, 500, 550, 555, etc.) and the databases 706, 708, are specifically operations that are performed by a control processor and a CPU that are built in the respective devices according to programs stored in the respective devices and databases; however, as a matter of simplification of descriptions, the operations are described as being performed by the other devices (devices denoted by reference numerals 110, 112, 113, 500, 550, 555, etc.) and the databases 706, 708, etc.

<Initial setting>

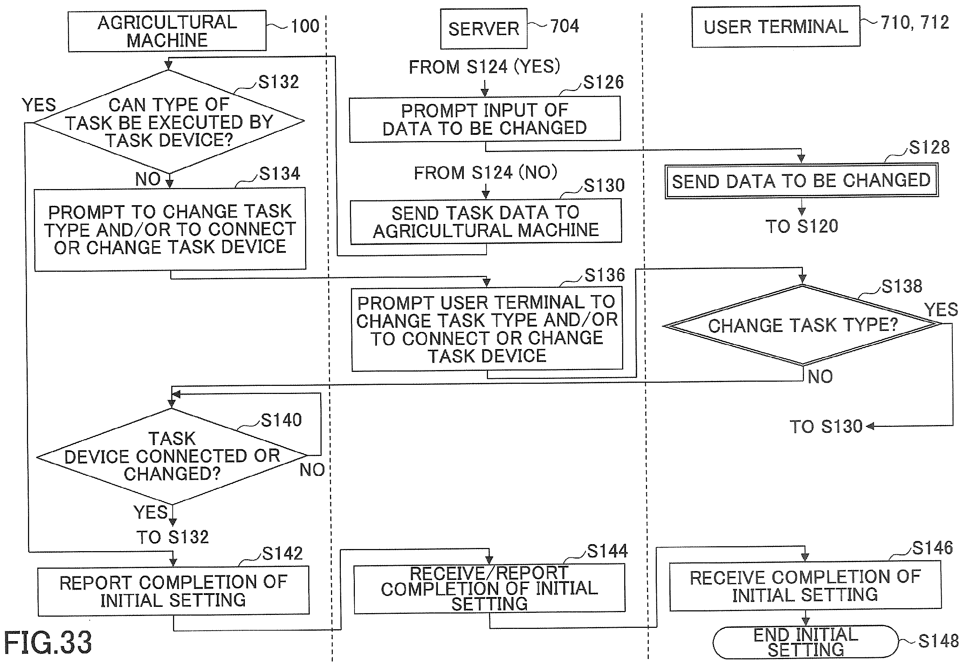

In order to cause the agricultural machine 100 to move and perform tasks without manual control, the task place and the task content, etc., are to be set before executing the operations. FIGS. 32 and 33 are flowcharts for describing an initial setting that is made in the server 704, the user terminal 710, 712, and the agricultural machine 100, for the agricultural machine 100 to move and perform tasks in the farm land. The description is given in line with these figures. Note that basically, the operations performed by the agricultural machine 100 are indicated on the left side, the operations performed by the server 704 are indicated in the center, and the operations performed by the user terminal 710, 712 are indicated on the right side; however, in some of the figures, operations are described as being performed by one of or two of these elements.

In the overall system 1500 according to the present embodiment, when an initial setting operation is started (step S100), the server 704 sends a query to the user terminal to send data for identifying the farm land, that is, position information of the corner parts and edge parts of the farm land (longitude and latitude, and height if possible) and/or data of the shape, etc., of the farm land (step S102). Note that the start of the initial setting operation by the process of step S100 is executed by an instruction from the user terminal.

The user terminal 710 or 712 sends, to the server 704, data required for identifying the farm land (position information of the corner parts and edge parts of the farm land (longitude and latitude, and height if possible) and/or the shape, etc., of the farm land), which is input, in the form of answering to the query (step S104). When inputting this data, map information included in the server 704, the database 706, etc., or another external system such as the Internet may be acquired, and the acquired map information may be used to input the data. For example, a map in which position information such as the latitude/longitude (and height) is associated with each spot in the map, is displayed on the screen of the user terminal 710 or 712, and the user specifies the farm land by circling or tracing an area on the map. The position information obtained from the specified area, etc., may be sent to the server 704. Note that the data for identifying the farm land may be set in advance by the provider of the overall system 1500. The server 704 receives information for identifying the farm land sent from the user terminal 710 or 712, identifies the farm land in which a task may be performed, attaches identification information such as a name to the information, and stores the information in the SSD in the server 704 (step S106). Furthermore, the information identifying the farm land is also stored in the database 708 with identification information attached. If this information is stored, it is possible to perform a task in the same farm land in the future, without having the information input from the user.

Subsequently, the server 704 sends a query to the user terminal 710, 712 to send the information for identifying the place to perform the task in the farm land (step S108).

The user terminal 710 or 712 sends, to the server 704, data needed for identifying the task place (position information of the corner parts and edge parts of the farm land (longitude and latitude, and height if possible) and/or shape information of the task area, the task start position, the task end position, and the headland), in the form of answering to the query (step S110). When inputting this data, similar to the case of identifying the farm land, map information included in the server 704, the database 706, etc., or another external system such as the Internet may be acquired, and the acquired map information may be used to input the data. For example, a map, which indicates at least the farm land, in which position information such as the latitude/longitude (and height) is associated with each spot in the map, is displayed on the screen of the user terminal 710 or 712, and the user specifies the task place by tracing the map from a task start position to a task end position or by circling the task place to identify the task start/end positions. The position information, etc., obtained from the area specified as above may be sent to the server 704.

The server 704 receives the information for identifying the task place sent from the user terminal 710 or 712, identifies the place for performing the task, attaches identification information such as a name to the information and stores the information in the SSD in the server 704 (step S112). Furthermore, the information for identifying the task place is also stored in the database 708 with identification information attached. If this information for identifying the task place is stored, it is possible to perform the same or different task at the same task place in the future, without having the information input from the user again. Note that the server 704 may identify the task place based on information from the farm land monitoring device 500, 555 and the state monitoring device 550.

Subsequently, the server 704 sends a query to the user terminal 710 or 712 about the type of task (plowing, soil crushing, ground making, rice planting, fertilizer application, seeding, transplanting, harvesting, weeding, agricultural chemical scattering/atomization, water spraying, and reaping, etc.), the agricultural machine to perform the task, and the travelling method (internal turning plowing, external turning plowing, external rotating (external winding) plowing, internal rotating (internal winding) plowing, one way plowing, sequential plowing, vertical and horizontal travelling, and diagonal travelling, etc.) or the traveling route (step S114).

The user terminal 710 or 712 sends, to the server 704, the type of task, the agricultural machine to perform the task, and the travelling method or the traveling route input by the user (step S116). At this time, specifications may be made to change the type of task for each part of the traveling route, or to not perform a task at a particular part of the traveling route. Furthermore, when inputting data of the travelling route, map information included in the server 704, the database 706, etc., or another external system such as the Internet may be acquired, and the acquired map information may be used to input the data. For example, a map, which indicates at least the task place, in which position information such as the latitude/longitude (and height) is associated with each spot in the map, is displayed on the screen of the user terminal 710 or 712, and the user specifies the travelling route by tracing the map along a path from a task start position to a task end position and sequentially setting the path. Furthermore, specifications may be made to change the type of task for a part of the path, or to not perform a task at a particular part of the path.

The server 704 receives the information for identifying the type of task, the agricultural machine to perform the task, and the travelling method or the traveling route sent from the user terminal 710 or 712, identifies these items, attaches identification information such as a name to the information, and stores the information in the SSD in the server 704 (step S118). Furthermore, the information identifying these items is also stored in the database 708 with identification information attached.

The server 704 integrates the information items identified in steps S106, S112, and S118 as task data, and sends the task data to the user terminal 710, 712 to confirm whether the data is correct (step S120). At this time, when the identified data has been changed from past data, the data stored in the SSD and the database 708 is overwritten.

The user terminal 710 or 712 sends a confirmation as to whether the received task data is to be changed or not to be changed to the server 704 (step S122).

The server 704 determines whether the task data is to be changed, based on the confirmation information sent from the user terminal 710 or 712 (step S124).

Here, when the server 704 determines that a change is to be made, the server 704 prompts the user terminal 710 or 712 to input the data to be changed (step S126).

The user terminal 710 or 712 selects at least one item to be changed, from among the data for identifying the farm land, the data for identifying the task place, and the data for identifying the type of task, the agricultural machine, and the travelling method or the traveling route, and sends the change to the server 704 (step S128). Accordingly, the server 704 returns to the process of step S120, and continues the subsequent processes.

On the other hand, when the server 704 determines that the task data is not to be changed in the process of step S124, the server 704 sends the task data to the agricultural machine 100 (step S130).

The agricultural machine 100 determines whether the recognized task device 106 is able to execute the type of task sent from the server 704 (step S132).

For example, when the task device 106 connected to the agricultural machine 100 is a fertilizer application device, but the type of task sent from the server is seeding, and the task device 106 cannot execute the type of task or no task devices are connected to the agricultural machine 100, a negative determination is made at step S132, and error information is sent to the server 704 for prompting to change at least one of the type of task and the task device to be connected, or for prompting to connect a task device (step S134).

When the error information is received from the agricultural machine 100, the server 704 sends a report to the user terminal 710, 712 for prompting to change at least one of the type of task and the task device to be connected, or for prompting to connect a task device (step S136).

The user terminal 710, 712 receives this report, and changes the task type or changes the task device to be connected or connects the task device (step S138).

When the user gives an instruction to change the type of the task by the user terminal 710 or 712, the type of task that is changed is sent to the server 704, the flow returns to the process of step S130, the information of the changed task type is included in the task data, and the task data is sent to the agricultural machine 100 again.

On the other hand, in the process of step S138, when the user selects to change or connect the task device via the user terminal 710 or 712, the agricultural machine 100 determines whether the change or connection has been done (step S140).

Here, when connections or changes are not made, the flow stops at the process of step S140. Here, when a predetermined time passes, the agricultural machine 100 may send a report to call for attention to the user device via the server 704.

On the other hand, in the process of step S140, when the agricultural machine 100 determines that the task device has been changed or connected, the flow returns to the process of step S132. By the above processes, the agricultural machine 100 can perform more appropriate tasks, and it is possible to prevent a problem of performing an erroneous task type such as performing a seeding task when a water spraying task is supposed to be performed, that may arise according to the automation of tasks.

In the process of step S132, when the agricultural machine 100 determines that the connected task device can execute the received type of task, the agricultural machine 100 sends a report that the initial setting is completed to the server 704 (step S142).

When the server 704 receives the initial setting completion report, the server 704 registers the content of the initial setting (the task data that has been finally set) and the initial setting completion year/month/date and time in the SSD or the database 708. Furthermore, the server 704 sends the initial setting completion report to the user terminal 710, 712 (step S144).

The user terminal 710, 712 receives the initial setting completion report (step S146), and ends the initial setting task (step S148).

Note that when the user uses the agricultural machine 100 including the manual operation unit 116 provided with a function of inputting information to the server 704, the processes of steps S102, S110, S116, S122, S128, and S130 may be performed from the manual operation unit 116 of the agricultural machine 100. In this case, the server 704 also sends a query to the agricultural machine 100.

Note that the server 704 may change the order of sending the queries in steps S104, S110, and S116, or may combine any of these steps or make a collective query for all of these steps.

Furthermore, in the process of step S122, when a change is to be made, the item to be changed as described in step S128 and the changed data of the corresponding item may be sent to the server 704.

Furthermore, in the process of step S142, the agricultural machine 100 may send the initial setting completion report to both the server 704 and the user terminal 710, 712.

<Basic task>

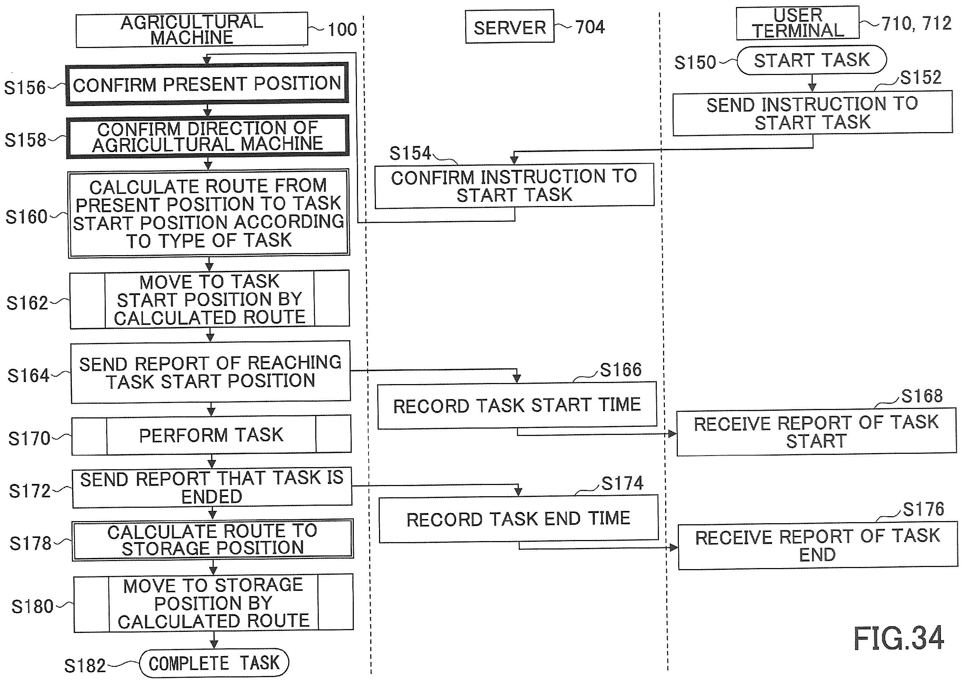

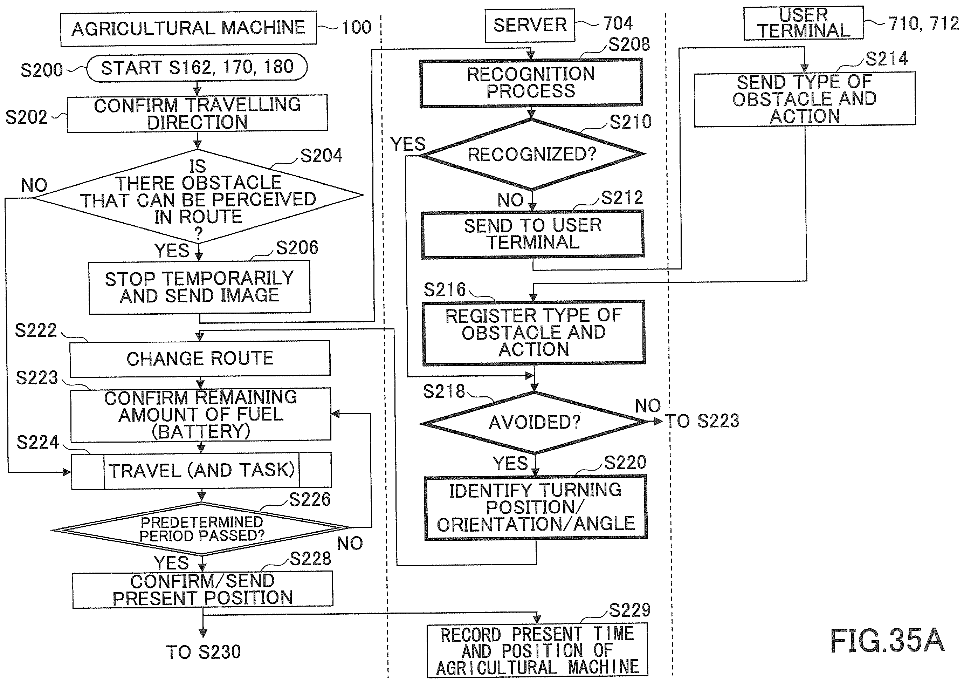

Next, by using FIGS. 34 through 56, a description is given of a typical operation from task start to task end. Not only in agriculture, but in any case of automatically controlling a machine for moving and performing a task, there is a need to move the machine to the task start position, cause the machine to perform the task, and move the machine to the position where the machine is stored after completing the task. FIG. 34 indicates an outline of the operations from task start to task completed (move to storage position). In the figure, the processes of steps S162, S170, and S180 are processes that are separately defined by descriptions using FIG. 35A, etc.

Task start (step S150) is started as a task start instruction is sent by the user terminal 710, 712 to the server 704 (step S152). Note that as described below, there may be cases where the agricultural machine 100 starts a task from when an instruction is received from the farm land monitoring device 500, 555 and the state monitoring device 550 in the farm land.

When the server 704 receives the task start instruction, the server 704 stores the information and the reception time (year/month/date/time) in the database 708, and instructs the agricultural machine 100, in which the initial setting has been made, to start the task (step S154).

The agricultural machine 100 that has received the task start instruction first confirms the present position (latitude, longitude) (step S156). This confirmation can be done by acquiring storage position information recorded in the database 708, indicating the storage position when the agricultural machine 100 has performed a task in the past in the overall system 1500 but has not moved since then. When there is no data relevant to the past storage position in the database 708, the position is confirmed by Differential GPS (DGPS) positioning that is a relative positioning method. This method uses radio waves of FM broadcast transmitted by a reference station whose position is known, to correct errors in the measurement results by GPS and increase the precision. The reference station performs measurement by GPS, and the shift between the actual position and the position calculated by GPS is sent by ground waves, to correct the result measured by signals from satellites. Typical GPS measurement is performed by receiving GPS signals from four satellites, measuring the distances by the radio wave propagation times from the satellites assuming that the satellite positions are already known, and obtaining the latitude and longitude of an intersecting point of arcs that are at equal distances from the satellites. That is, codes sent from the satellites are analyzed, and the distance between the satellite and the agricultural machine 100 is obtained from the time when the radio wave is transmitted to when the GPS antenna 120 receives the radio wave, and the position of the agricultural machine 100 is identified from the positional relationship with the satellite. By the above method, the precision is low and an error of approximately 20 m is included, and therefore the above FM ground waves are used to correct the measurement result such that the error is reduced to approximately 5 m. Note that the positioning using GPS is not limited to the DGPS method; a Real Time Kinematic GPS (RTKGPS) method or an Internet GPS method using the Internet for distributing correction information may be used, in which the distance from the reference station to the satellite is measured by using the number of carrier waves and the phase, and the error is reduced to several cm order. Furthermore, the position may be identified by using a plurality of the farm land monitoring device 500, 555 and the state monitoring device 550 whose positions in the farm land are already known. This method includes transmitting a particular position identifying signal from any one of the farm land monitoring device 500, 555 and the state monitoring device 550, and receiving the signal by the wireless communication antenna 114 of the agricultural machine 100. The distance between the corresponding monitoring device and the agricultural machine 100 is obtained from the intensity (amplitude) or the attenuation ratio of the reception signal. Alternatively, the distance may be obtained by measuring the arrival time of the signal. By measuring the distance from three or more of the farm land monitoring device 500, 555 and the state monitoring device 550, the intersecting point of arcs of the devices is obtained, and the position is identified.

Furthermore, the position of the agricultural machine 100 may be identified from the positional relationship between the agricultural machine 100 and plurality of signs, etc., whose positions are already known, in an image captured by the farm land monitoring device 500, 555 and the state monitoring device 550.

Furthermore, the distances to three or more targets whose positions are already known may be measured by the stereo camera device 110, and the intersecting point of the respective arcs of the targets may be obtained, and the position may be identified. This method is limited to a case where there are three or more targets whose positions are known in a singled captured image.

Furthermore, the present position may be identified by combining the distance measured by the above GPS technology as described above, the distance obtained by using the farm land monitoring device 500, 555 and the state monitoring device 550, etc., in the farm land, and the distance measured by the stereo camera device 110. That is, if the distance from three spots whose positions are known can be obtained, the agricultural machine 100 or the server 704 can calculate the present position. Note that when GPS signals cannot be acquired, such as in a case of greenhouse cultivation using a vinyl hothouse, the present position is identified by a method other than using GPS signals.

Note that the present position to be confirmed may be indicated by methods other than using the longitude and the latitude; the present position may be indicated by a position (X, Y) in a certain coordinate system or by the orientation and the distance from a certain known spot. Furthermore, the information of the height measured by using GPS signals or a height indicator may also be used as information indicating the present position.

Next, the agricultural machine 100 confirms the direction of either advancing or reversing (step S158). The orientation is confirmed by a geomagnetic sensor set in the agricultural machine 100. When a geomagnetic sensor is not used, the agricultural machine 100 is slightly advanced or reversed to acquire the position information of the agricultural machine 100 by the same method as the process of step S156, and the orientation of advancing or reversing may be identified from the relationship with the position identified by the process of step S156. However, there are errors in the measurement by GPS, etc., and therefore there is a need to advance or reverse such that the error can be ignored. Therefore, when advancing, the agricultural machine 100 uses the stereo camera device 110 to confirm that there is no obstacle in the travelling path up to the position to which the agricultural machine 100 is to advance, and then the agricultural machine 100 advances. When performing this moving task of advancing and reversing, when the agricultural machine 100 includes an internal combustion engine, the control device 118 ignites the engine in the motor 102, moves the piston, shifts the variable speed gear 204 to first, connects the main clutch 202, transmits the motive energy generated at the engine to the rear wheels 130, and causes the agricultural machine 100 to advance. When the piston action is accelerated, the travelling speed increases, and the rotational frequency of the engine exceeds a predetermined value, the control device 118 turns of the main clutch 202 and increases the variable speed gear 204 to second and third. When the agricultural machine 100 is driven by electricity, the control device 118 rotates the motor inside the motor 102-2 in the direction of advancing, to transmit the kinetic energy to the rear wheels 130 and cause the agricultural machine 100 to advance. Note that when the agricultural machine 100 reverses, when the agricultural machine 100 has an internal combustion engine, in a state where the main clutch 202 is turned off, the control device 118 shifts the variable speed gear 204 to rear and then connects the main clutch 202. On the other hand, in the case of the agricultural machine 100 driven by electricity, the rotation direction of the motor is reversed, to reverse the agricultural machine 100. As described above, the overall system 1500 measures the orientation before moving and perceives the travelling direction, and therefore the agricultural machine 100 is prevented from moving in the wrong direction.

When the travelling direction (orientation) is confirmed, the agricultural machine 100 calculates the route from the present position to the position of starting the task (step S160). At this time, the agricultural machine 100 calculates the route according to the type of task. For example, when the type of task is harvesting, the agricultural machine 100 identifies the shortest route that does not enter a task place. When there is a task place between the present position and the task start position, the agricultural machine 100 calculates and identifies a route that goes around the task place. This is because if the agricultural machine 100 runs into a task area before harvesting and travels ahead, the crop to be harvested may be damaged. Particularly, this is an effective process when the cultivated crop is small and cannot be recognized as a crop from an image captured by the stereo camera device 110. On the other hand, when the type of task is ground making such as leveling, there is no problem in calculating a route that crosses the task area. This is because the task area will be subjected to ground making later. As described above, a route according to the type of task is calculated, and therefore the agricultural machine 100 can efficiently move to the task start position. Note that the calculation of this shortest route may be performed by the server 704 instead of by the agricultural machine 100. In this case, the server 704 checks other task data of the farm land stored in the database 708, confirms the state of other areas, and calculates the route. For example, when the crop is being cultivated in another area, the server 704 derives and identifies the shortest route by which the agricultural machine 100 does not enter this area, or the shortest route by which the agricultural machine 100 enters this area by a minimum amount. By doing so, it is possible to prevent the crop, which is cultivated in another area, from being affected, or the affect can be minimized. Subsequently, the server 704 transmits the derived route to the agricultural machine 100.

When the route is calculated, the agricultural machine 100 moves along the identified route, to the task start position (step S162). This moving process is defined in detail by a description using FIGS. 35A through 37.

When the agricultural machine 100 reaches the task start position, the agricultural machine 100 sends a report of reaching the task start position to the sever 704 (step S164).

When the server 704 receives this signal, the server 704 records the task start year/month/day/time in the database 708 (step S166). Accordingly, the server 704 is able to automatically record a task log, and the task log can be used for a charging process. Furthermore, the server 704 reports task start to the user terminal 710, 712.

Note that the agricultural machine 100 may not only send the report of reaching the task start position to the server 704, but also to the user terminal 710, 712.

As the user terminal 710, 712 receives the report of task start and the start time, the user is able to recognize when the task has started (step S168).

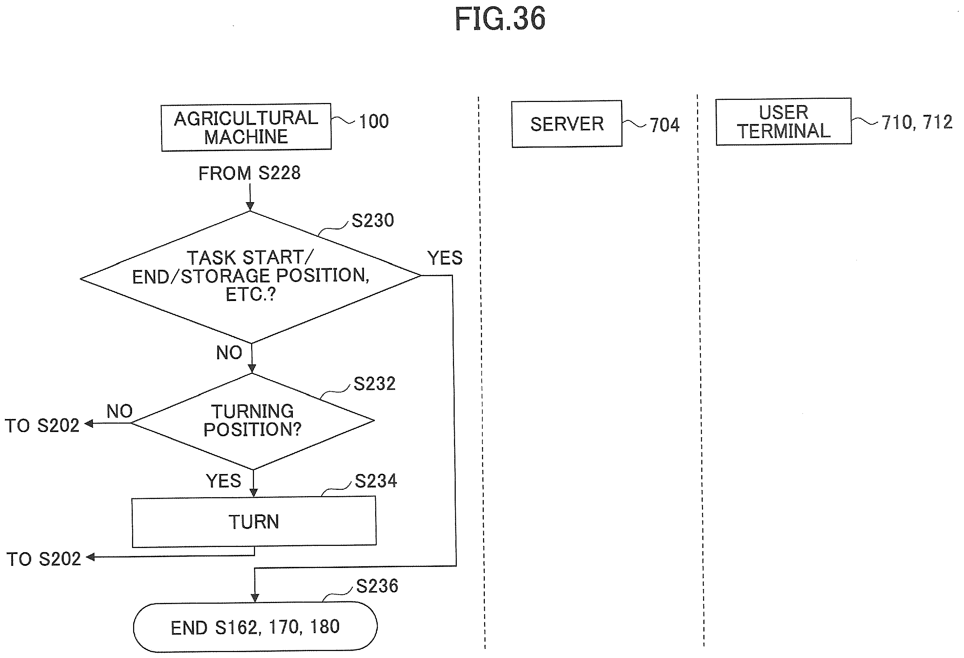

Then, the agricultural machine 100 immediately starts the task after sending the signal (step S170). The operation of the task is defined in detail by a description using FIGS. 35A, 36, etc.

When the task ends, the agricultural machine 100 sends a report indicating that the task has ended to the server 704 (step S172).

When the server 704 receives this signal, the server 704 records the task end year/month/date/time in the database 708 (step S174). Accordingly, the task log can be automatically stored, and the log can be used for a charging process. Furthermore, the server 704 sends a report of task end to the user terminal 710, 712.

Note that the agricultural machine 100 may not only send the report of task end to the server 704, but also to the user terminal 710, 712.

As the user terminal 710, 712 receives the report of task end and the end time, the user is able to recognize when the task has ended (step S176).

When the task ends, the agricultural machine 100 calculates the route to the storage position of the agricultural machine 100 itself (step S178). The agricultural machine 100 derives a route that does not cross the area in which the task has been performed as much as possible, and that is shortest to the storage position. This route calculation may be done at the server 704. Details of this route calculation are substantially the same as the route calculation described for the process of step S160; however, in this case, a calculation is performed to obtain a route that does not enter the area in which a task such as ground making has been completed.

When the route calculation is ended, the agricultural machine 100 moves along the route to the storage position (step S180). This moving process is defined in detail by a description using FIGS. 35A through 37.

When the movement to the storage position ends, the task is completed (step S182). Note that the time of ending the movement to the storage position and the storage position are stored in the database 708 by the processes of step S228, 229 described below. Accordingly, when a task is performed by using this agricultural machine 100 in the future, the position at the task start time can be quickly recognized.

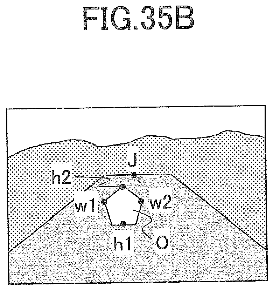

When moving the agricultural machine 100 by automatic control without manual operations, the agricultural machine 100 can be easily moved if the movement route is not in a state of hampering the movement; however, in an actual farm land, there are various factors hampering the movement. Therefore, an issue to be addressed is to provide a function of responding to such hampering factors when moving by automatic control. By using FIGS. 35 and 36, a description is given of detailed operations and processes of the movement processes of steps S162, S170, and S180.

When the movement process of steps S162, S170, and S180 is started (step S200), first, the stereo camera device 110 is used to capture an image of an area in the travelling direction, and confirm the travelling direction (step S202). In the present embodiment, this confirmation is performed in the agricultural machine 100. This process is described by using FIG. 35B. FIG. 35B indicates a reference image among the images captured by the stereo camera device 110 in the process of step S202. Ranging is performed in a range captured by the stereo camera device 110. Then, it is determined whether the route (the part indicated by grey in the figure) of the agricultural machine 100 at least up to a spot where the agricultural machine 100 is to turn or a spot that can be measured (these are indicated by J in the figure), includes the following parts. That is, by scanning (confirming) the parallax value information of pixels or the distance information from the bottom to the top, it is determined whether there is a part where the distance (or a parallax value; the same applies hereinafter) does not continuously change by more than a certain range (a part where the distance does not change by more than a certain distance between adjacent pixels, which part indicates a boundary between the ground and an object, for example h1 in the figure), and/or by subsequently scanning the pixels toward the top, is determined whether there is a part where the distance suddenly largely changes inside and outside the route and the distance subsequently continuously changes within a certain range (a part where the distance changes by more than a certain distance between adjacent pixels, which part indicates a boundary between an object and the background, for example h2 in the figure). Here, it is determined whether the distance continues to change within a certain range, for example, to prevent irregularities such as the ridges in the farm land from being perceived as obstacles. Therefore, the certain range is set to be higher than or equal to a value corresponding to the height of a typical ridge. Note that it is also determined that there is an obstacle when it is not possible to perceive a part (h2) where the distance suddenly largely changes and the distance subsequently continuously changes within a certain range (for example, a case where the height of the obstacle is high and the obstacle does not fit in the captured image, a case where the top end of the obstacle exceeds an area that can be ranged by the stereo camera device 110, or a case where the pixel above the pixel h2 indicating the top end of the object is not a pixel indicating a position on the ground, etc.). Considering a land in which nothing is present on the route of the agricultural machine 100 in the farm land, the distance measured by the stereo camera device 110 in this land becomes continuously long as the position becomes further away (closer to the top position as viewed in the figure) from the agricultural machine 100 (even if the land is slightly tilted, the distance continuously increases). On the other hand, when there is an object (O in the figure) that is larger than or equal to a size that can be measured by the stereo camera device 110 on the land, even when the ranging position changes to the upper side in the area in which the object is captured in the captured image (for example, from the position of h1 to the position of h2 in the figure), compared to the continuous changes up to the object, the change in the distance may become smaller or may not change very much, or the distance may become short (the first object is an object including an area that becomes high while tilting at least in the travelling direction of the agricultural machine 100, the second object is an object including an area that is substantially perpendicular with respect to the travelling direction of the agricultural machine 100, and the last object is an object including an area that tilts toward the agricultural machine 100). These changes continue to the spot (h2) where the distance suddenly changes and subsequently the distance continuously changes. Furthermore, also in the horizontal direction, for example, the measurement distance between adjacent pixels largely changes at a boundary position w1 on the left side and a boundary position w2 on the right side. Note that when the object O is too large to fit in the captured image, there are cases where h2, w1, and w2 may not be obtained, and in these cases also, it is determined that there is an obstacle. As described above, in the route of the agricultural machine 100 up to a turning position in the route or up to a distance that can be measured, when at least the measured distance discontinuously changes by exceeding a certain range (when there is h1), it is determined that there is an obstacle, and when the distance only continuously changes within a certain range, it is determined that there is no obstacle. Note that here, an obstacle is taken as an example of a factor hampering the movement; however, the factor is not so limited, and a case where the inclination in the travelling direction is too steep or a case where the route is caved in and there is a hole in the route are also hampering factors. These cases are also determined according to the rate of change in the measured distance, similar to the case of an obstacle.

Note that a reference image and parallax value information or distance information may be sent to the server 704, and the server 704 may confirm the travelling direction. Furthermore, the server 704 or the agricultural machine 100 may determine whether there is an obstacle by performing the recognition process (step S208) below; however, processing time for the recognition task will be required. Furthermore, with respect to a blind corner that cannot be captured by the stereo camera device 110, the ultrasonic sonar devices 126 may be used to confirm whether there is an obstacle. When the ultrasonic sonar devices 126 confirms that there is an obstacle, the agricultural machine 100 is temporarily reversed and is turned to a direction in which no obstacles are detected, and the operation is continued.

As a result of the confirmation process of step S202, it is determined whether there is an obstacle that is large enough to be perceived, in the route (step S204). Here, perceived means that a recognition process can be performed in a process (step S208) of a subsequent stage. This process will be described by referring to FIG. 35B. As described above, in the vertical direction in the captured image, the height direction is maximum between h1 and h2 at the obstacle O. Furthermore, the width direction is maximum between w1 and w2 at the object O. The above spot is obtained, the number of pixels present between these pixels (between h1 and h2 and between w1 and w2) is obtained, and when the number is higher than or equal to a predetermined value or exceeds a predetermined value, it is determined that the obstacle is large enough to perform a recognition process, and the flow proceeds to the process of step S206. At this time, the determination may be made only by the height direction or the horizontal direction. That is, when there is a number of pixels higher than or equal to a predetermined number or exceeding a predetermined number between h1 and h2 (or w1 and w2), it is determined that the obstacle is large enough to perform an image recognition process, and the flow proceeds to the process of step S206. Furthermore, also when at least one of h2, w1, and w2 cannot be obtained (that is, when it is estimated that the obstacle O is too large to measure h2, w1, and w2), it is determined that an image recognition process is possible, and the flow proceeds to the process of step S206. On the other hand, when the number of pixels at least one of between h1 and h2 and between w1 and w2 is higher than or equal to a predetermined value or exceeds a predetermined value, it is determined that the obstacle is not large enough to perform a recognition process, and the flow proceeds to the process of step S224. Also in the case of a movement hampering factor other than an obstacle, such as a steep inclination or a caved in part in the route, the size is determined in the same manner as in the case of an obstacle. Subsequently, the agricultural machine 100 is advanced, and after a predetermined time passes, that is, when the agricultural machine 100 comes closer to the obstacle (after the processes of S224, S226, S228, S230, S232, and S202), the determining is made again. Furthermore, in the process of step S202, also when it is determined that there is no obstacle in the travelling direction, the determination of step S204 is negative, and the flow proceeds to the process of step S224. Note that the reference image and the parallax value information or the distance information may be sent to the server 704, and the server 704 may make the determination of step S204. In this case, step S206 is omitted, and the process of step S208 is to be performed. Furthermore, the agricultural machine 100 may perform the recognition process (step S208) described below to recognize the obstacle.

When it is determined that there is an obstacle large enough to be recognized in the process of step S202, when the agricultural machine 100 is advancing, the control device 118 operates the braking devices 208, 214 to temporarily stop the agricultural machine. Then, the agricultural machine 100 sends an image (reference image) captured by the stereo camera device 110 to the server 704 (step S206). Note that when the agricultural machine 100 is in a stopped state, the control device 118 does not perform the brake operation.

When the server 704 receives the image, the server 704 performs an image recognition process (step S208). The server 704 performs the recognition process by the following procedures. First, the server 704 performs a correction process on the received image, and next, the server 704 performs a feature amount extraction process, then, the server 704 performs an identification process by comparing the image with a standard pattern, to perform image recognition. The correction process is a process of reducing distortions and noise included in the received image. The correction includes removing noise, smoothing, sharpening, a two-dimensional filtering process, binarization for facilitating the feature amount extraction, and furthermore, a thinning process for extracting the skeleton lines of the figure to be the recognition target. Furthermore, the server 704 performs a normalization process (enlarging, reducing, rotating, and moving an image, and converting the density of an image) for accurately performing pattern matching in a subsequent process. The feature amount extraction process is a process of obtaining a feature parameter that is a parameter that truly indicates the feature of the image, and obtaining the feature pattern that is the shape. The server 704 performs edge extraction of extracting discontinuous part of an image as an edge. That is, the server 704 extracts the changing point of the density, and divides the image into several continuous areas. This edge extraction is done by connecting the sequence of points that are disconnected by an extraction trace method and performing a secondary differentiation process. Note that the server 704 may perform area extraction by area division and texture extraction, instead of edge extraction or together with edge extraction. Next, the server 704 performs an identification process by comparing standard patterns with the feature pattern, and when the feature pattern is similar to a certain standard pattern, the corresponding image is determined to be in the same category as the category of the standard pattern. In the present embodiment, the server 704 performs pattern matching by using a standard pattern stored in the database 706, and detects whether there is a same or similar pattern. Note that when the identification process is performed by using feature parameters instead of a feature pattern, the identification may be performed by using a statistical identification method. Furthermore, when structural analysis is performed on the image by extracting edges and feature points, a structural identification method may be used to perform the identification. When the identification can be performed as described above, it is determined that the image is recognized, and when the identification cannot be performed, it is determined that the image cannot be recognized (step S210).

When the image cannot be recognized, the image is sent to the user terminal 710, 712, and the user terminal 710, 712 prompts the user (system user) input the type of obstacle and the action (step S212).

The user uses the user terminal 710, 712 to send, to the server 704, the type of obstacle (for example, a natural object (a rock, a tree, an animal such as a kangaroo or a cow), an artificial object (a fence, a gate)) and the action (avoid, ignore) (step S214).

The server 704 associates these information items with the image and the feature pattern, and registers these information items as a new standard pattern in the database 706 (step S216). Accordingly, in the future, it is possible to perform recognition when recognizing an image similar to the current obstacle. Furthermore, the server 704 records the information acquired from the user, in the database 708. Accordingly, the fee can be automatically discounted at the time of charging.

Note that when information of step S214 cannot be obtained from the user terminal 710, 712 within a certain time, the server 704 sends a reminder to the user terminal 710, 712, and prompts the user to input the information. Furthermore, when a response is not received until a certain time passes, the server 704 sets the type of obstacle as "unknown obstacle", and registers "avoid" as the action in consideration of safety, and registers this information in the database 706. When the type of obstacle and action are sent from the user terminal 710, 712 later on, the server 704 overwrites the registered information in the database 706 with the information from the user terminal

When the image is recognized in step S210, the agricultural machine 100 is able to perform an action in line with the recognition result. Furthermore, the agricultural machine 100 is also able to perform an action based on the information from the user. Then, the server 704 determines whether the action is avoid (step S218), and when the action is determined to be avoid, the server 704 identifies the position of turning, the direction, and the turning angle (orientation) (step S220). The first turning position is before the obstacle, but the distance by which the turning is possible is different according to the type of the operation device 106 connected to the agricultural machine 100. When the operation device 106 that is difficult to turn in a small radius is connected, the turning is to be started at a position considerably before the obstacle. On the other hand, when the operation device 106 that can easily turn in a small radius or that is able to turn in a small radius is connected, the agricultural machine 100 may advance to a position near the obstacle. Furthermore, the turning direction is basically the direction by which the agricultural machine 100 can reach the target position by the shortest route; however, when the edge of the obstacle can be perceived by the recognition process in the image sent in the process of step S206, the agricultural machine 100 turns in a direction by which the distance to the edge of the obstacle is shorter, such that the detour path can be short. When the edge of the obstacle cannot be determined from the image sent in the process of step S206, the stereo camera device 110 of the agricultural machine 100 is rotated to the left and right at a predetermined angle in the travelling direction to capture an image, and the captured image may be sent to the server 704 to recognize the distance to the edge part. The turning angle or the orientation after the turning is set such that the distance of the route is minimum. Depending on the type of obstacle (an animal that may move, etc.), the turning position, the direction, and the angle are set to turn in a large radius.

Furthermore, for the second turning time and onward, the turning position, the direction, and the angle are identified by estimating the type (of obstacle for which the size can be identified) or the size of the recognized obstacle.

All of the temporarily identified turning positions, the directions, and the angles to the destination are sent from the server 704 to the agricultural machine 100, and the agricultural machine 100 that has received this information uses this information to update the route information to new route information (step S222).

On the other hand, when the server 704 determines the action of the agricultural machine 100 as an action other than "avoid", i.e., an action to ignore the obstacle, the flow shifts to the process of step S223. For example, when the obstacle is a weed that does not obstruct the traveling of the agricultural machine 100, and there is no problem in traveling over the obstacle, the obstacle is ignored and the agricultural machine 100 travels ahead.

Note that the above indicates an example of performing the processes of steps S208 through S220 by the server 704; however, these processes may be performed by the agricultural machine 100. In this case, the parts that are described as being performed by the server 704 are to be read as being performed by the agricultural machine 100.

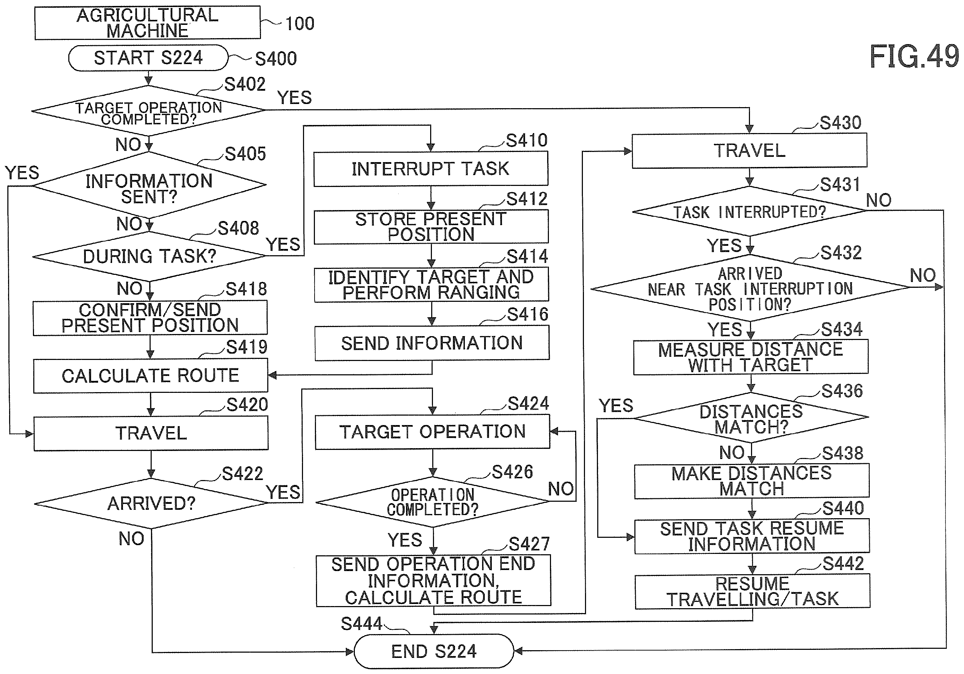

In step S223, the agricultural machine 100 confirms the remaining fuel. When the agricultural machine 100 is driven by an electric motor, the battery charge remaining is confirmed. Here, the process by the overall system 1500 when the fuel or battery charge remaining is low is described below by using FIG. 49. Furthermore, in this process, the timekeeping starts with the timekeeping clock inside the control device 118.

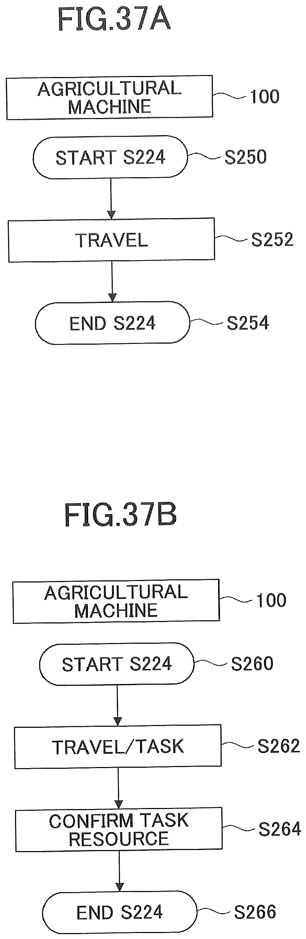

After this confirmation ends, the agricultural machine 100 travels along the route (in the case of steps S162, S180) or travels and performs a task (in the case of step S170) (step S224). Note that this travelling includes both advancing and reversing. Furthermore, the process of step S224 is described with FIGS. 37, 40, 47, and 49.

When the process of step S224 is ended, the agricultural machine 100 determines whether a predetermined period (for example, 3 seconds) has passed from the process of step S223 (step S226). This is done by using the timekeeping clock inside the control device 118.

Then, when a predetermined time has not passed, the flow returns to step S223. On the other hand, when a predetermined time has passed, the present position is confirmed, and present position information is sent to the server 704 (step S228). The confirmation of the present position is as described with respect to the process of step S156. Note that in step S226, it is determined whether a predetermined time has passed; however, instead, it may be determined whether the agricultural machine 100 has moved a predetermined distance.

The server 704 stores the present position information in the database 708 together with the present year/month/day/time (step S229). Accordingly, the position of the agricultural machine 100 can be perceived in a substantially real-time manner at predetermined time intervals.

Next, the agricultural machine 100 determines whether the agricultural machine 100 has reached the target position (step S162: task start position, step S170: task end position, step S180: storage position) (step S230). This determination is made according to whether the present position obtained in step S228 matches the target position. With respect to this determination of whether these positions match, ranges may be provided according to the precision in identifying the position. That is, the agricultural machine 100 may determine that these position match, as long as the longitude and latitude of the present position are within a certain range.

Here, when the target position and the present position match, the agricultural machine 100 ends this movement process (step S236).

On the other hand, when these positions do not match, the agricultural machine 100 determines whether the present position is the turning position (step S232). Also in this step, these positions may not have to exactly match, but a certain amount of ranges may be provided in the determination. When the agricultural machine 100 determines that the present position is not the turning position, the flow returns to the process of step S202. On the other hand, when the agricultural machine 100 determines that the present position is the turning position, the agricultural machine 100 turns based on route information (step S234). The turning motion is performed as the control device 118 of the agricultural machine 100 operates the main clutch 202 and the variable speed gear 204 to shift the gear to first, and as the control device 118 operates the braking devices 208, 214 to apply the brake to temporarily stop and decelerate the agricultural machine 100. Subsequently, the control device 118 operates the steering device 122 to cause the agricultural machine 100 to turn by advancing or reversing while steering the agricultural machine 100. Note that when the agricultural machine 100 is travelling at a low speed or the agricultural machine 100 can turn at the present speed, the agricultural machine 100 may perform the turning motion without decelerating or stopping. Subsequently, the flow returns to the process of step S202.

FIG. 37A indicates the cases of steps S162 and S180, that is, the operation of step S224 in a case where the agricultural machine 100 reaches a predetermined position without performing a task. When the agricultural machine 100 moves to the task start position or the storage position, that is, in the case of only a simple movement without performing a task, the agricultural machine 100 travels (step S252). In this case, when the position of the agricultural machine 100 identified in the process in the previous stage is shifted from the route, the agricultural machine 100 travels while operating the steering device 122 to return to the original route. Furthermore, the agricultural machine 100 is able to travel along the accurate route while adjusting minute errors that cannot be confirmed by a position perceiving system such as GPS or a position confirming system, such as correcting the trajectory when the agricultural machine 100 is travelling along a route shifted from a ridge, by using images captured by the stereo camera device 110. Also in the "travelling" operations that have been described above or to be described below, similarly, processes of returning the trajectory of the agricultural machine 100 to the route or adjusting minute positional shifts are performed. Note that the travelling may not only be advancing, but may also be reversing. Furthermore, the agricultural machine 100 may decelerate when approaching near the task start position, the storage position, or the turning position. In this case, the control device 118 operates the main clutch 202, the variable speed gear 204, and the braking devices 208, 214, and the agricultural machine 100 performs a decelerating operation.

FIG. 37B is a flowchart indicating a process operation of step S224 by the agricultural machine 100 in the case where the agricultural machine 100 continuously (or intermittently) performs tasks while traveling in step S170, instead of performing a task for an individual crop. These tasks include seeding, ground making, tilling, usual water spraying, and fertilizer application. In this case, when the task flow is started (step S260), the agricultural machine 100 performs a predetermined task while travelling (step S262). This task is the task set in FIG. 32 or FIG. 33. This task is a task that is continuously or uniformly performed in a set task place (area), regardless of individual statuses of the crop, the soil, the task position, etc. The task may be performed intermittently. The task is usually performed by the task device 106 of the agricultural machine 100. Next, the agricultural machine 100 confirms the task resource (step S264). A task resource is, for example, the remaining amount of fertilizer when the type of task is fertilizer application, the remaining amount of water in the case water spraying, and the remaining amount of seeds in the case of seeding. When the amount of this resource becomes less than or equal to a predetermined amount or less than a predetermined amount, the operation shifts to the operation indicated in FIG. 49 described below. Then, the first cycle of the travelling and the task ends (step S266), and the flow proceeds to processes of the travelling and the task of the next time and onward.

<Leveling task>

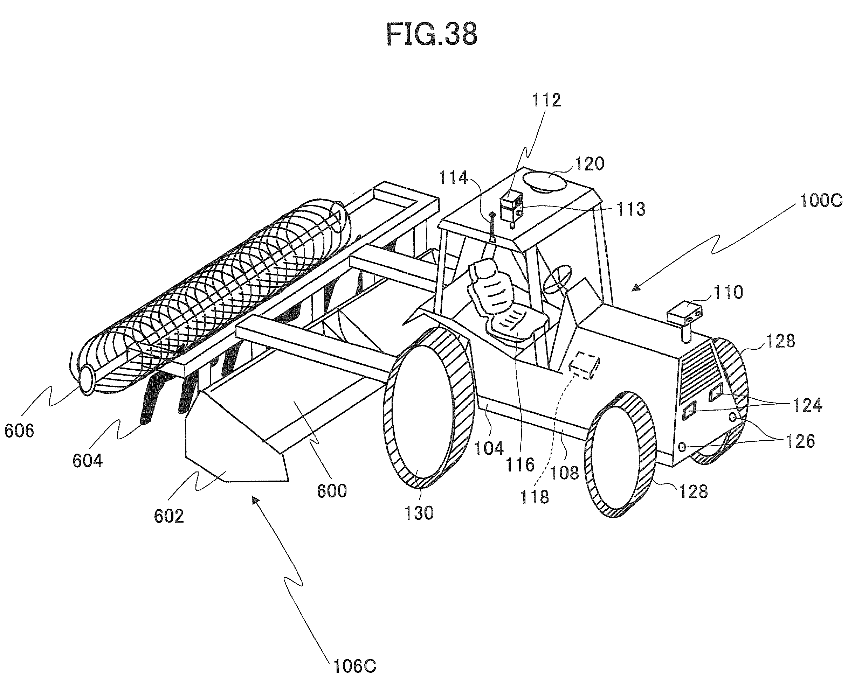

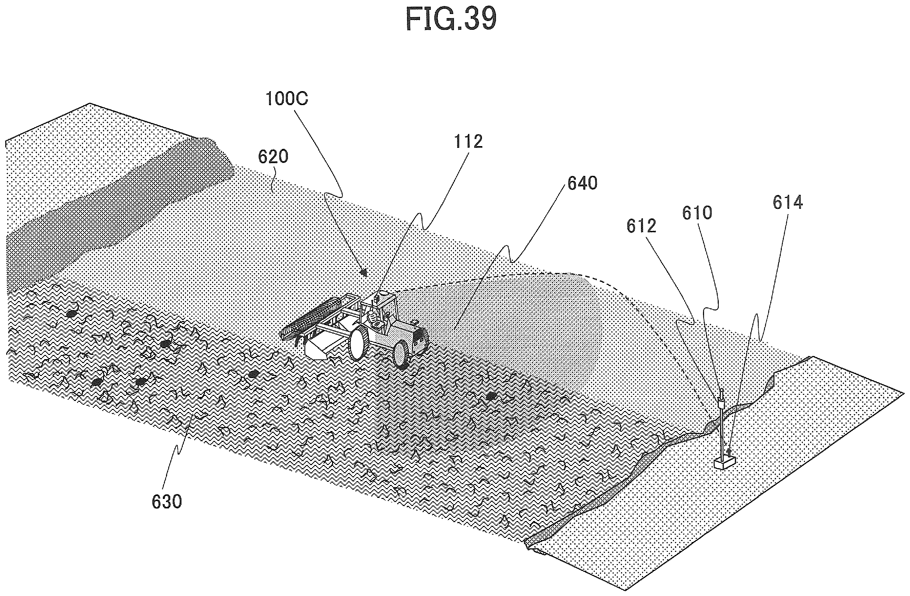

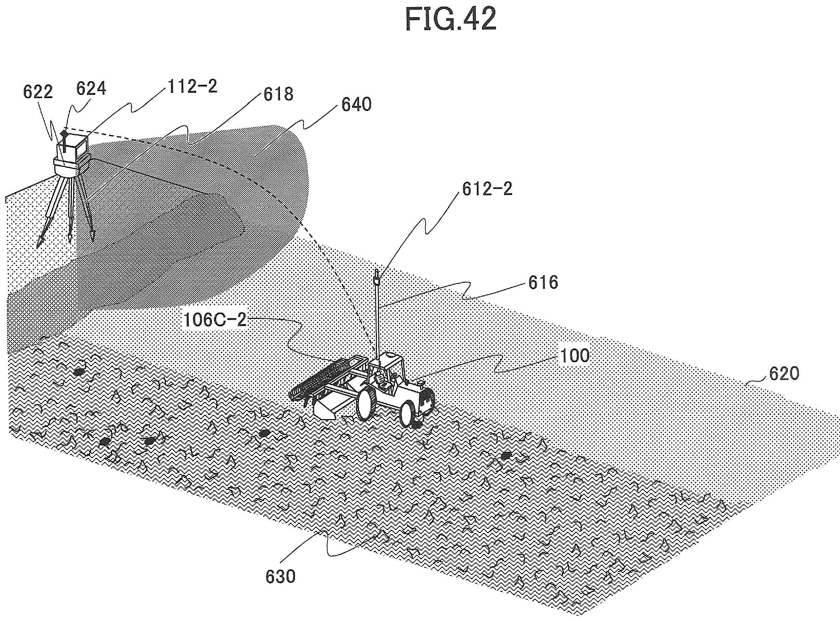

As an example of the process indicated in FIG. 37B, a description is given of a leveling task in the farm land using the laser radar device 112, by using FIGS. 38 through 42 (note that in this example, the process of confirming the task resource of step S264 is unnecessary and is therefore omitted). The leveling task requires a special device such as a laser reception device (610 in the example of FIG. 39) or a laser emitting device (618 in the example of FIG. 42) in the farm land, in addition to the overall system 1500 described above including the system 1501 in the farm land described with reference to FIG. 1 and the information communication system 1502 described with reference to FIG. 2; however, the basic operations of automatic driving and automatic tasks are the same as the operations described above. This laser radar device 112 is able to emit laser beams in a range of a horizontal angle of view of 60°, and therefore compared to a case of performing ground making by using a regular laser (a case of using a laser leveler), the leveling task can be performed efficiently without time consuming efforts. Furthermore, by rotating the laser radar device 112, it is possible to further reduce the number of times of changing the setting position of the laser receiving device.

FIG. 38 indicates the agricultural machine 100C provided with the task device 106C for performing ground making (leveling). The configuration of the agricultural machine 100C is basically the same as the agricultural machine 100A; however, the different point from the agricultural machine 100A is that the laser radar device 112 (and the multispectral camera device 113) are set on the roof part in the agricultural machine 100C. In the leveling task, the oscillating motor 54 of the laser radar device 112 controls the rotation of the $\varphi$ axis such that the laser beams are emitted horizontally based on instructions from the controller 64 based on signals of a level.

The task device 106C includes a leveling plate 600 for performing tasks of carrying and placing soil, a side plate 602 for preventing soil placed on top of the leveling plate 600 from spilling sideways, a spring tine 604 for performing soil crushing and soil loosening on the surface layer and preventing the soil from becoming too firm, a spiral roller 606 for performing soil crushing and soil packing, and an electric cylinder for moving the leveling plate 600, etc., up and down, according to instructions from the control device 118 of the agricultural machine 100C. Note that the task device 106C may include a control processor that exchanges signals with the control device 118 of the agricultural machine 100, and that controls the up and down movement of the leveling plate 600, etc., by operating the electric cylinder. Furthermore, the cylinder for moving the leveling plate 600, etc., up and down may be any one of a hydraulic water cylinder, a pneumatic cylinder, and a hydraulic oil cylinder.

FIG. 39 indicates an example of how a leveling task is performed by using the agricultural machine 100C. The leveling is performed by using the laser reception device 610 including a laser receiver 612, a wireless communication antenna 614, and a control processor, in addition to the agricultural machine 100C. This laser reception device 610 is set in a ridge. At this time, the laser reception device 610 is set such that the light receiving surface of the laser receiver 612 is parallel to the vertical direction. In this state, the laser receiver 612 has a configuration in which a plurality of light receiving elements are set in the vertical direction and in the horizontal direction, and the position including the height of receiving the laser beam can be determined according to which light receiving element has received the laser beam. In this figure, the reference numeral 620 denotes the area that has been leveled, and the reference numeral 630 denotes the area before being leveled. Furthermore, the reference numeral 640 indicates the laser beam being emitted by the laser radar device 112. This laser beam enters one of the light receiving elements of the laser receiver 612. Furthermore, the dashed line in the figure indicates how wireless communication is being performed by the wireless communication antenna 614 of the laser reception device 610 with the wireless communication antenna 114 of the agricultural machine 100C. The agricultural machine 100C determines, by the information of the height of the received light, whether the agricultural machine 100C is at a higher position than a reference position or a lower position than the reference position or at the reference position.

An overview of operations of the system 1501 described above is given as follows. That is, the agricultural machine 100C uses the laser radar device 112 to emit laser beams toward the laser reception device 610 while one-dimensionally scanning the laser beams. The information of the position (height) at which the light is received at the laser reception device 610, is acquired by the control processor of the laser reception device 610, and the position information is sent to the agricultural machine 100C in a wireless manner by using the wireless communication antenna 614. Based on the received information, the agricultural machine 100C travels while moving the leveling plate 600, etc., of the task device 106C up and down and levels the farm land.

Note that in the present embodiment, the laser radar device 112 is set on the roof of the agricultural machine 100C; however, the laser radar device 112 may be set on the task device 106C. By setting the laser radar device 112 on the task device 106C, the operation of moving up and down the leveling plate 600, etc., for performing the leveling task can be done with less time lag, by using information of the position of receiving the laser beam at the laser receiver 612, and therefore the leveling can be done more precisely. In this case, the laser radar device 112 needs to be set at a high position such that the laser beams from the laser radar device 112 are not blocked by the poles or the roof of the agricultural machine 100C, and the laser beams are controlled to be maintained horizontally during the task.

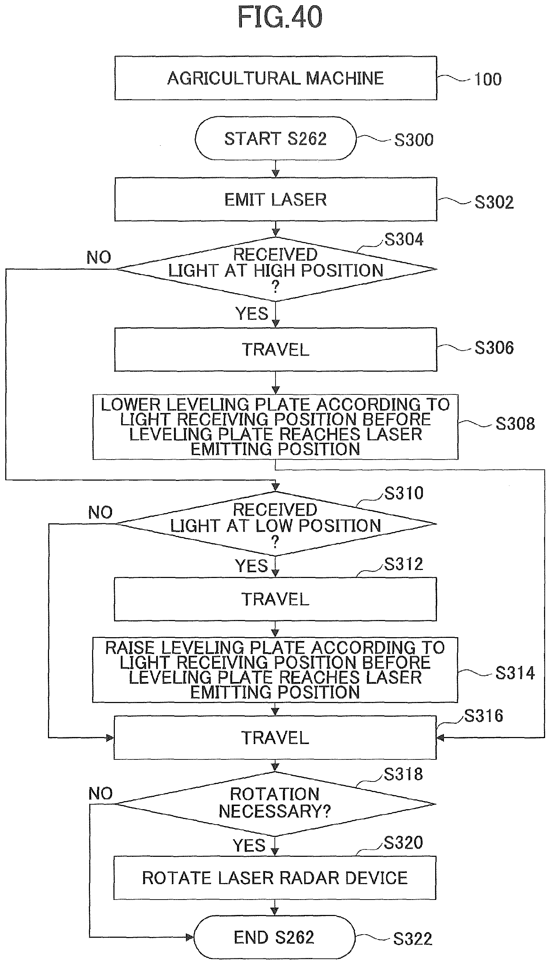

FIG. 40 indicates details of the process of step S262 when performing a leveling task. Before this task, as an initial setting, the laser reception device 610 is set in the ridge such that the height of the standard level of the laser receiver 612 is at the height of the reference position of the leveling plate 600 (average height of farm land after leveling).

When the task is started (step S300), the agricultural machine 100C sets the leveling plate 600, etc., at a height at the reference position, and emits a laser beam from the leveling plate 600 (step S302). This laser beam enters any one of the light receiving elements of the laser receiver 612 of the laser reception device 610. The light reception signal is input to the control processor of the laser reception device 610, and the control processor identifies the position where the light receiving element, which has received the laser beam, is set, and uses the wireless communication antenna 614 to send the light reception position information to the agricultural machine 100C.

The agricultural machine 100C determines, from the received information, whether the laser beam is received at a higher position than the standard position of the laser receiver 612 (step S304). Receiving the laser beam at a higher position than the standard position means that the land is raised at the spot where the agricultural machine 100C is present. In this case, the leveling plate 600, etc., of the task device 106C has to be lowered to level the raised land. Therefore, when the agricultural machine 100C determines that the laser beam is received at a higher position than the standard position in the process of step S304, the agricultural machine 100C slightly advances (step S306), and before the leveling plate 600, etc., comes to the position where the laser beam has been emitted, the agricultural machine 100C sends an instruction to the task device 106C according to the received information, and lowers the leveling plate 600, etc. (step S308). Note that depending on the required precision of leveling, the advancing of step S304 may be omitted. When the light reception position of the laser receiver 612 is considerably higher than the standard position, the agricultural machine 100C lowers the leveling plate 600, etc., considerably, and when the light reception position of the laser receiver 612 is slightly higher than the standard position, the agricultural machine 100C slightly lowers the leveling plate 600, etc. These operations are based on the information received by the agricultural machine 100C from the laser reception device 610. That is, the agricultural machine 100C is able to adjust the amount of raising or lowering the leveling plate 600, etc., according to the light reception position of the laser beam. Subsequently, by advancing the agricultural machine 100C (step S316), the task area is leveled.

On the other hand, when the agricultural machine 100C determines that the laser beam is not received at a higher position than the standard position of the laser receiver 612 in the process of step S304, this time, the agricultural machine 100C determines whether the laser beam is received at a lower position than the standard position of the laser receiver 612, based on the received information (step S310). Receiving the laser beam at a lower position than the standard position means that the agricultural machine 100C is at a lower position than the position to which the land is to be leveled, at the time of laser emission. In this case, the agricultural machine 100C causes the task device 106C to perform an operation of raising the leveling plate 600, etc., to adjust the amount to be leveled by the leveling plate 600, etc. Therefore, when agricultural machine 100C determines that the laser beam is received at a lower position than the standard position in the process of step S310, the agricultural machine 100C slightly advances (step S312), and before the leveling plate 600, etc., comes to the position where the laser beam has been emitted, the agricultural machine 100C sends an instruction to the task device 106C according to the received information, and raises the leveling plate 600, etc. (step S314). Note that depending on the required precision of leveling, the advancing of step S312 may be omitted. When the light reception position of the laser receiver 612 is considerably lower than the standard position, the agricultural machine 100C raises the leveling plate 600, etc., considerably, and when the light reception position of the laser receiver 612 is slightly higher than the standard position, the agricultural machine 100C slightly raises the leveling plate 600, etc. These operations are based on the information received by the agricultural machine 100C from the laser reception device 610. That is, the agricultural machine 100C is able to adjust the amount of raising or lowering the leveling plate 600, etc., according to the light reception position of the laser beam. Subsequently, by advancing the agricultural machine 100C (step S316), the task area is leveled.

On the other hand, when the agricultural machine 100C does not determine that the laser beam is received at a lower position than the standard position in the determination of step S310, the agricultural machine 100C is at the height of the standard position at the time point of emitting the laser beam, and therefore the agricultural machine 100C travels without changing the height of the leveling plate 600, etc. (step S316).

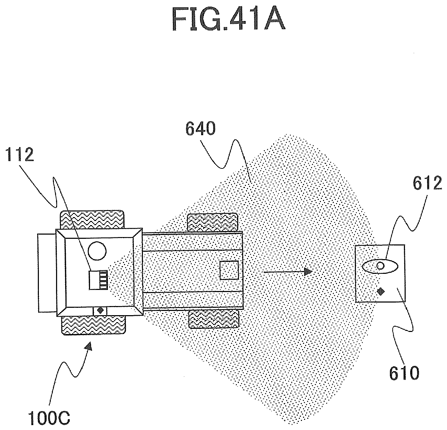

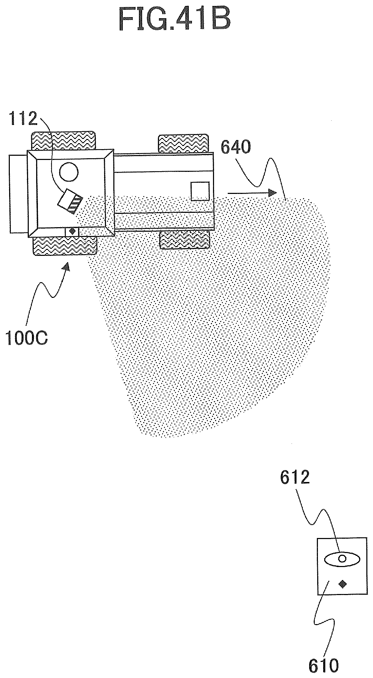

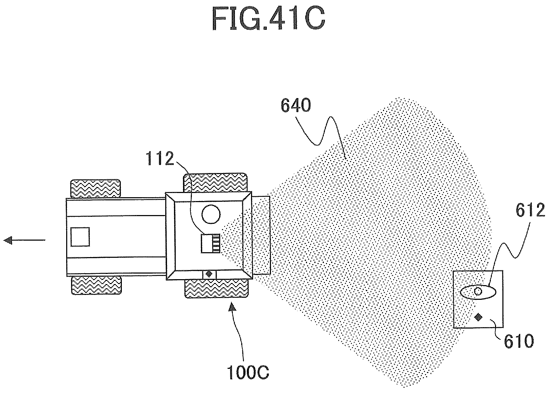

Next, the agricultural machine 100C determines whether the laser radar device 112 needs to be rotated (step S318). This process is described by FIG. 41.

FIG. 41 is a diagram of a bird's-eye view of the agricultural machine 100C and the laser reception device 610. The arrow in the figure indicates the travelling direction of the agricultural machine 100C. Note that as a matter of simplification of descriptions, the task device 106C connected to the agricultural machine 100C is omitted. FIG. 41A indicates a case where the laser reception device 610 is positioned along the travelling direction of the agricultural machine 100C. In this case, the laser beam is to be emitted by the laser radar device 112 in the travelling direction, and accordingly, the laser receiver 612 receives the laser beam in the farm land in which the task is being performed. On the other hand, as indicated in FIG. 41B, when a laser beam is emitted in the travelling direction from the travelling direction of the agricultural machine 100C, but the laser reception device 610 is at a shifted position that the laser beam cannot be received, the agricultural machine 100C rotates the laser radar device 112 such that the laser beam can be received at the laser receiver 612. Furthermore, as indicated in FIG. 41C, when the travelling direction of the agricultural machine 100C becomes the opposite direction from the laser reception device 610, the agricultural machine 100C further rotates the laser radar device 112 (for example, rotated by 180 degrees with respect to the position in FIG. 41A), and emits a laser beam. The agricultural machine 100C determines whether the laser radar device 112 needs to be rotated according to the laser beam reception position of the laser receiver 612. For example, when the light beam cannot be received on the surface facing the farm land in which the task is being performed, but the light beam can only be received on the side surface, the laser receiver 612 is rotated, etc. Alternatively, when the light beam is received at a particular position, this information may be obtained and the laser radar device 112 may be rotated. Note that the horizontal position of the laser radar device 112 or the emission angle of the laser beam with respect to the horizontal plane do not change by rotating the laser radar device 112.

Then, in the process of step S318, when the agricultural machine 100C determines that the laser radar device 112 needs to be rotated, the agricultural machine 100C rotates the laser radar device 112 (step S320). The laser radar device 112 is rotated at this time by a rotation angle set in advance; however, the rotation angle is not so limited, and the rotation angle may be changed according to the light reception position. Note that even while the agricultural machine 100C is turning, a laser beam is constantly or periodically emitted to the laser receiver 612, and the agricultural machine 100C receives feedback of the light reception position, and rotates the laser radar device 112 such that the laser beam reaches the laser receiver 612.

In the process of step S318, when the agricultural machine 100C determines that the laser radar device 112 does not need to be rotated, or when the laser radar device 112 is rotated in the process of step S318, the task (of the first cycle) is ended (step S322). Note that as indicated in FIGS. 34, 35A, 36, and 37B, the task of FIG. 40 is repeated a number of times while the agricultural machine 100C moves from the task start position to the task end position. Accordingly, the entire task place can be efficiently levelled. Note that the processes of steps S318 and S320 may be performed before step S316, and the processes after steps S308 and S314 and the process performed after a negative determination is made in step S310 may be performed at step S318.

FIG. 42 indicates another example of performing a leveling task by using the agricultural machine 100. The laser beam used for the leveling task is emitted from a laser emission device 618 including the laser radar device 112-2. The laser emission device 618 includes a stage 622 for rotating the laser radar device 112-2 along a horizontal direction by electric power, a tripod, whose length and angle are adjustable, for supporting this stage 622, an antenna 624 performing wireless communication with the agricultural machine 100, and a control processor. The laser radar device 112 of the laser emission device 618 does not need to be rotated around a φ axis, and therefore a mechanism for this purpose (oscillating motor 54) may be omitted. Alternatively, the laser radar device 112 may be fixed so as not to rotate around the φ axis. The laser emission device 618 is set by the tripod such that a laser beam is emitted horizontally to the ridge. To the agricultural machine 100, the task device 106C-2 including a laser reception instrument 616 is connected, and performs the leveling task. On the laser reception instrument 616, the laser receiver 612-2 is set at the top part of a pole extending in the vertical direction. The laser receiver 612-2 includes a plurality of light receiving elements in the vertical direction and in the horizontal direction. A plurality of light receiving elements in the horizontal direction are arranged along the circumference of the laser receiver 612-2. The information of the height of the laser beam detected by the laser reception instrument 616 is input to the control device 118 of the agricultural machine 100. The task device 106C-2 includes an electric cylinder that moves the leveling plate, etc., up and down, based on instructions from the control device 118 of the agricultural machine 100, according to the position of the laser beam received by the laser receiver 612-2. Note that the laser reception instrument 616 may include a control processor that operates the electric cylinder according to the position of the light receiving element that detected the laser beam, to move the leveling plate, etc., up and down. Note that the dashed line in the figure indicates wireless communication between the laser emission device 618 and the agricultural machine 100.

In the system 1501 as described above, the leveling task is performed as follows. First, as an initial setting, the tripod of the laser emission device 618 to be set in the ridge is adjusted such that laser beams are emitted to the standard position of the laser receiver 612-2 in a state where the laser beam emitted from the laser radar device 112-2 becomes horizontal and the leveling plate of the task device 106C-2 is set at the height of the land to be the reference height. Next, a laser beam is emitted toward the laser receiver 612-2. The agricultural machine 100 determines whether the light beams is received at a higher position or at a lower position with respect to the standard position, based on the position of the light receiving element that has received the light beam, and when the agricultural machine 100 determines that the light beams is received at a higher position with respect to the standard position, this means that the land is raised, and therefore the agricultural machine 100 lowers the leveling plate and travels, and levels the land. On the other hand, when the agricultural machine 100 determines that the light beams is received at a lower position with respect to the standard position, this means that the land is lower than the reference, and therefore the agricultural machine 100 raises the leveling plate and travels, and levels the land. Note that the leveling plate is raised and lowered according to the approximate distance of the light reception position from the standard position. That is, as the distance of the light reception position from the standard position becomes longer, the leveling plate is raised or lowered by a larger amount. Furthermore, when the light beam is received at the standard position, the leveling plate is at the reference height, and therefore the agricultural machine 100 travels without changing the height of the leveling plate. Next, the agricultural machine 100 perceives which light receiving element has received the light beam in the horizontal direction in the laser receiver 612-2. According to the light reception position, the agricultural machine 100 determines whether the laser emitting angle of the laser radar device 112-2 needs to be changed. When there is no need to change the laser emitting angle, the agricultural machine 100 does not perform any communication. On the other hand, when the agricultural machine 100 determines that the angle needs to be changed for receiving laser beams in the next task and onward, the agricultural machine 100 sends, to the laser emission device 618, the information for rotating the stage 622 of the laser emission device 618 according to the light reception position. The control processor of the laser emission device 618 rotates the stage 622 by a predetermined angle based on the received information. Accordingly, regardless of the position in the task area where the agricultural machine 100 is performing a task, the agricultural machine 100 is able to receive a laser beam any time.

By repeating the task as described above, the system 1501 is able to efficiently level the task area. To describe the operations of this example by FIG. 40, step S302 is an operation that is performed by the laser emission device 618, instead of by the agricultural machine 100. Furthermore, the rotation of the laser radar device of step S320 is an operation that is performed by the laser emission device 618, instead of by the agricultural machine 100.

Note that when ground making is to be performed to create a predetermined tilt in the farm land, the $\varphi$ axis in the laser radar device 112 or 112-2 is to be rotated by a predetermined angle from the angle at which laser beams are horizontally emitted.

<Individual tasks>

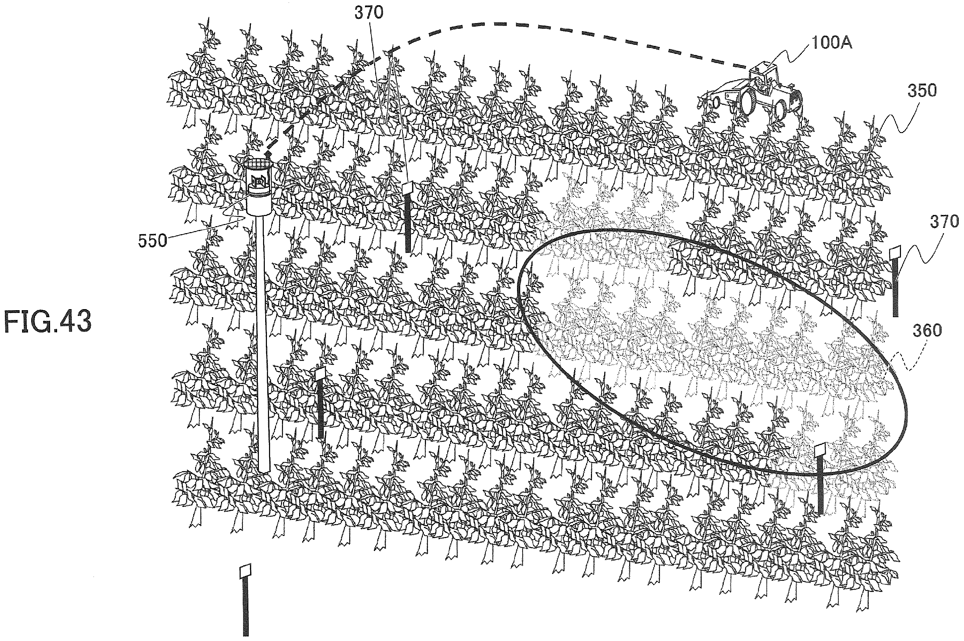

By determining the need for a task for each task target such as a crop, and performing the task with respect to the task target only when necessary, it is possible to increase the efficiency in the overall tasks. By using FIGS. 43 through 47, this time, a description is given on the operations of tasks that are individually performed according to the status of the crop, etc., that can be performed according to automatic control by the overall system 1500 including the system 1501 in the farm land and the information communication system 1502 described by FIG. 2. Note that the tasks that are individually performed include fertilizer application, seeding, transplanting, harvesting, weeding, agricultural chemical scattering/atomization, water spraying, and reaping, etc.; however, fertilizer application is mainly given as an example to describe how the task is performed. Note that the operations of the system 1501 may also be applied to tasks that are individually performed for each of the crops, etc., other than fertilizer application.

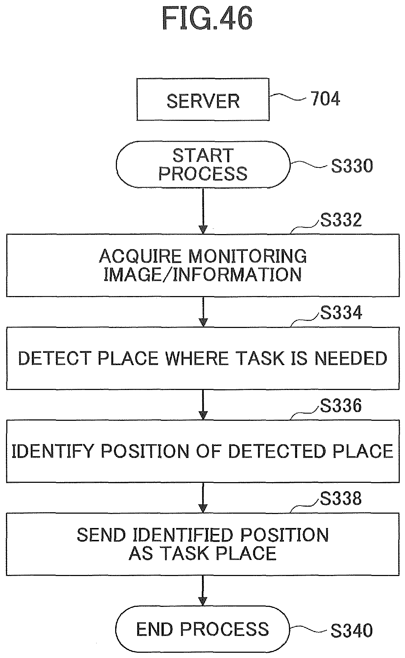

FIG. 43 is a diagram indicating how a fertilizer application task is being performed by using the overall system 1500 according to the present embodiment. The agricultural machine 100 is automatically travelling while automatically performing a task (fertilizer application) only for a crop 360 that has a growth insufficiency (low degree of activity), in a farm land in which a crop 350 that is normally growing (high degree of activity) indicated by a solid line and the crop 360 that has a growth insufficiency (low degree of activity) indicated by a dashed line are cultivated. Furthermore, in the farm land, the state monitoring device 550 provided with a multispectral camera (or a colorimetric camera) for monitoring the growth status of the plant from a high position is set, and the state monitoring device 550 is performing wireless communication with the agricultural machine 100. Furthermore, in the overall system 1500, a plurality of signs 370 are provided for identifying a predetermined position in a captured image that is captured by the farm land monitoring device 500, 555, and the state monitoring device 550, etc. These signs 370 have different numbers, characters, colors, patterns, figures, and shapes (or different combination of these items) applied, and the positions where these signs 370 are provided are already known by the system 1501. In the description of FIG. 32, the task place where the task is to be performed is identified based on data from the user terminal 710, 712; however, the server 704 is also able to identify the task place based on information from the state monitoring device 550. This operation is described below by using FIG. 46. Note that FIG. 43 indicates that the crops 360 having a growth insufficiency are concentrated in the place surrounded by a circle.

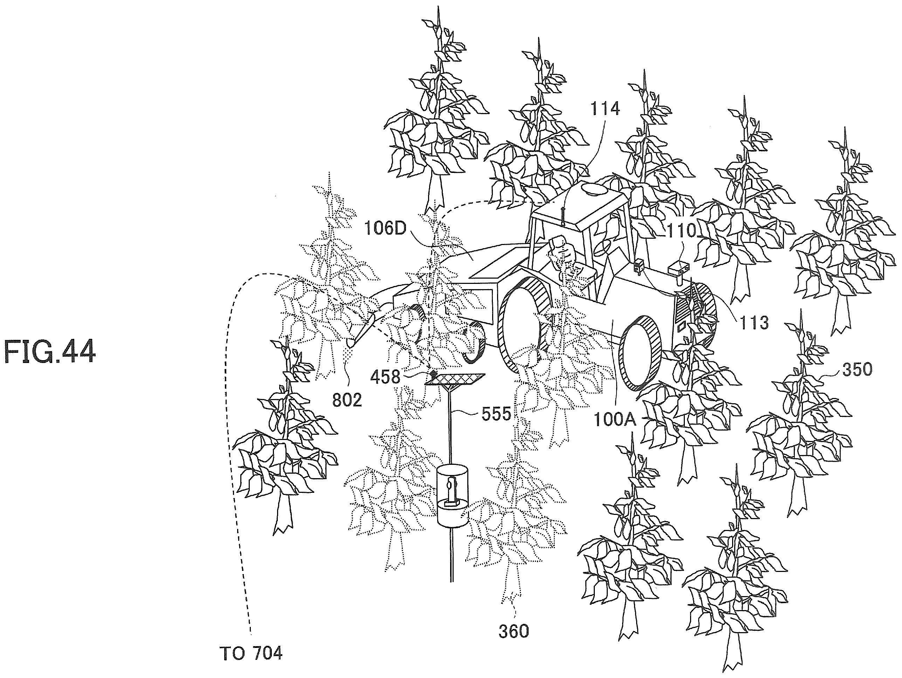

FIG. 44 is a diagram indicating the task status of the agricultural machine 100 in the system 1501. This agricultural machine 100 has the task device (fertilizer application machine) 106D for applying a fertilizer, attached to the main body of the agricultural machine 100. The agricultural machine 100 confirms the growth status of the crops 350, 360 with the multispectral camera device 113, and scatters a fertilizer 802 near the crop 360 that is determined as having a growth insufficiency according to the confirmation result. The agricultural machine 100 uses the wireless communication antenna 114 to send the information of the fertilizer application or the information of the plant status, and the information is relayed by the farm land monitoring device 555 to be sent to the server 704 (indicated by a dotted line in the figure). Note that when there is the wireless access point 700 within a range where wireless communication can be reached, the agricultural machine 100 may send the information to the server 704 without being relayed by the farm land monitoring device 555, etc. Furthermore, the information may be transmitted by being relayed by another wireless access point, etc.

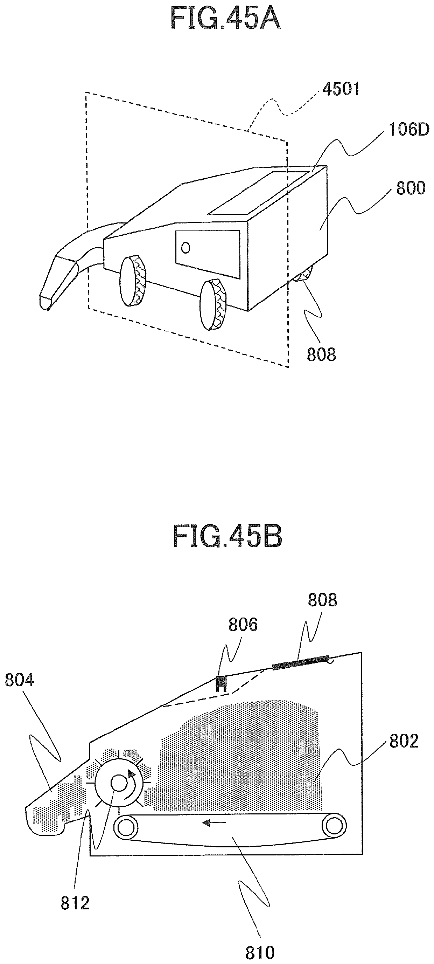

FIG. 45 indicates the main parts part of the task device (fertilizer application machine) 106D for supplying fertilizer to plants. FIG. 45A indicates an external view of the fertilizer application machine, and the main body of the agricultural machine 100 and the connection part, etc., are omitted. FIG. 45B is a cross-sectional view cut along a plane indicated by a dotted line 4501 in FIG. 45A. This fertilizer application machine 106D includes a housing case 800 made of metal, a fertilizer sending device 810, a loosening body 812, a scattering unit 804, an infrared ray sensor 806, a fertilizer input opening 808, and the fertilizer 802 in the main body. The fertilizer 802 is input inside the housing case 800 from the fertilizer input opening. The agricultural machine 100 drives the fertilizer sending device 810 and the loosening body by the driving force of the PTO shaft 222 controlled by instructions from the control device 118 of the agricultural machine 100 or by the current from the power source 228, to send the fertilizer 802 to the scattering unit 804 while loosening the fertilizer 802, and scatter the fertilizer 802 from a scattering opening. Furthermore, the infrared ray sensor 806 detects the remaining amount of the fertilizer. The information of the detected remaining amount of fertilizer is transmitted to the control device 118. Note that the scattering unit 804 may be flexibly bent, and the scattering opening may be set on the right side, the left side, or the back side with respect to the travelling direction of the agricultural machine 100.

FIG. 46 is a flowchart indicating the operations performed by the server 704 for identifying the task place based on the information from the state monitoring device 550, etc. Based on this diagram, a description is given of the operations performed by the server 704 for identifying the task place based on the information from the state monitoring device 550, etc. By performing this process, it is possible to identify the task place in advance in a vast area, and therefore the efficiency and the speed of the task can be increased.

When the process is started (step S330), first, the server 704 acquires image information obtained by capturing an image of an area including the farm land with the state monitoring device 550 and additional information other than the image information (information indicating the growth state of the plant (NDVI, etc.), information of diseases and pest, information of frost, color change information caused by pest, etc., soil information, and sugar content information, etc.) (step S332). Note that the server 704 may acquire, for example, information of the spectral reflectance before information processing from the state monitoring device 550, and process the acquired information to obtain information (NDVI, etc.,) indicating the growth state of a plant.

The server 704 detects the place where there are plants that require a task such as water spraying, fertilizer scattering, and weeding, from the image and additional information (step S334). For example, this is performed by identifying a place where the NDVI is less than or equal to a predetermined value or below a predetermined value, in the spectral image. Other than NDVI, the server 704 may identify a place where the spectral reflectance is less than or equal to a predetermined value or below a predetermined value in the spectral image, with respect to a wavelength (for example, 660 nm) of a visible red region. Note that the server 704 may detect the place where a task is needed by acquiring information detected by the farm land monitoring device 500, 555, etc., instead of the state monitoring device 550 or together with the state monitoring device 550.

Next, the server 704 identifies the position of the detected place (step S336). For this identification, first, the server 704 performs an image recognition process similar to the process of step S208, and recognizes the plurality of signs 370 present in the captured image. The server 704 obtains the positions of the plurality of signs 370 that have been recognized. Then, the server 704 identifies the position of the place that requires a task, from the positional relationship between plurality of signs 370 that have been recognized and the place that requires a task.

Then, the server 704 sends the identified position as the task place to the agricultural machine 100 and the user terminal 710, 712 (step S338), and ends the process (S340). Accordingly, the agricultural machine 100 does not have to measure the growth status and other states of each and every one of the crops 350, 360 across the entire area where the task is possible, and therefore the task can be efficiently performed. Accordingly, the task time can be reduced. The user is also able to perceive the place where a task is needed.

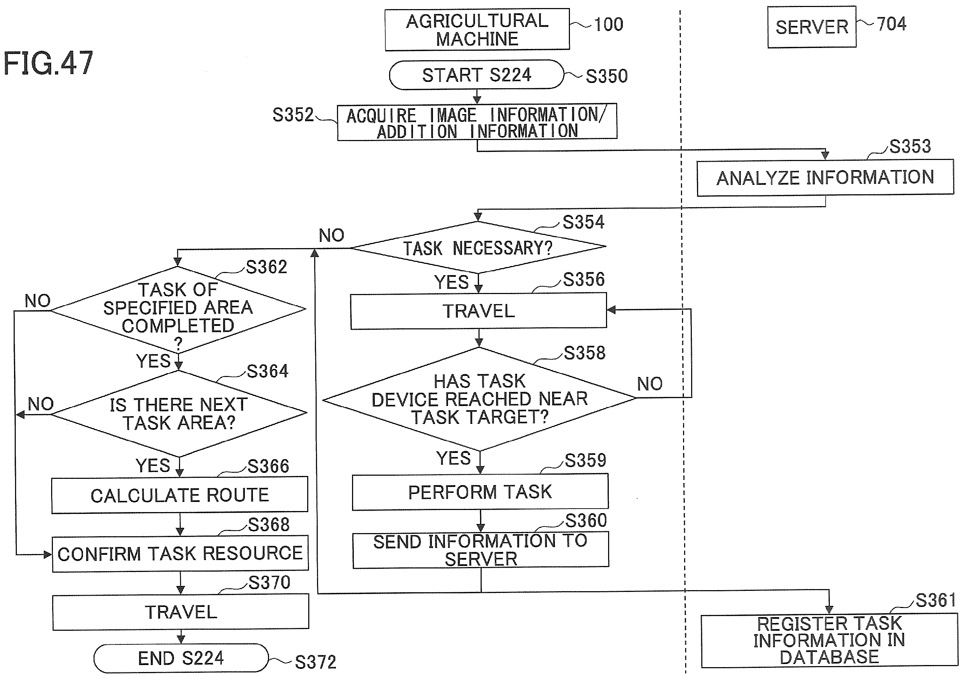

Next, by using FIG. 47, a description is given of the operations of a case where a task is individually performed while confirming the status of each crop that is a task target as described above. FIG. 47 is for describing in detail the process of step S224 in FIG. 35A when individually performing a task for each target.

When the process is started (step S350), the agricultural machine 100 acquires the image information and the additional information, and sends the acquired information to the server 704 (step S352). At this time, the travelling of the agricultural machine 100 may be temporarily stopped. This process may be for acquiring captured image information obtained by the stereo camera device 110 and/or the multispectral camera device 113 that is an image sensing device included in the agricultural machine 100 and additional information other than image information obtained from these devices (a parallax value or distance information in the case of the stereo camera device 110, and spectral reflectance information of each wavelength or information calculated by using the spectral reflectance in the case of the multispectral camera device 113), or for acquiring additional information other than image information, such as distance information and shape information obtained by the laser radar device 112 in addition to the captured image information and the additional information other than the image information described above. Furthermore, the agricultural machine 100 may acquire an image that is captured by the state monitoring device 550 or the farm land monitoring device 500, 555 in response to a request from any one of the agricultural machine 100, the server 704, and the user terminal 710, 712, or an image that is autonomously captured by the state monitoring device 550 or the farm land monitoring device 500, 555 and the spectral reflectance information of each wavelength, or information calculated by using the spectral reflectance (state monitoring device 550) or information such as polarization information and information of the an insolation area (farm land monitoring device 500, 555), and send the acquired information to the server 704. Furthermore, information (for example, the temperature and humidity acquired from an environment monitoring device, and the weather forecast and insolation time acquired via the Internet 702) other than image information acquired from a device other than the image sensing device (the stereo camera device 110, the multispectral camera device 113, and the celestial sphere camera device 501) may be sent to the server 704. In this case, the process of step S352 may be performed by the farm land monitoring device 500, 555, the state monitoring device 550 and/or the server 704, instead of the agricultural machine 100. The information that is acquired and sent in this process differs according to what task will be performed by the agricultural machine 100. For example, in the case of a task of scattering fertilizer, in order to check the growth state of the plant to be the target and/or the soil state, a spectral image captured by the multispectral camera device 113 and spectral reflectance information (information acquired by the multispectral camera device 113 of the agricultural machine 100 or information acquired by the multispectral camera device 113 of the state monitoring device 550) are appropriate. In the case of a task of removing weeds, in order to accurately distinguish the type of plant, a polarization image captured by a polarization stereo camera device and distance information of the distance to the object are appropriate. Furthermore, in the case of a task of harvesting fruit, in order to perceive the size, the color, and the sugar content of the fruit, in addition to a spectral image captured by the multispectral camera device 113 and spectral reflectance information, as information for moving the fruit cutting holding arm of a harvesting robot that is the task device 106 to be reliably moved to a predetermined position around the fruit, image information captured by the stereo camera device 110 and distance information to the fruit are required (alternatively, distance information measured by the laser radar device 112, instead of by the stereo camera device 110 may be used. The laser radar device 112 is situated near the multispectral camera device 113, and therefore the position with respect to the target fruit can be precisely detected). Furthermore, in the case of a watering task, for example, in order to check the degree of plant activity, in addition to information such as an image acquired by the multispectral camera device 113 and spectral reflectance information, in order to determine the necessity of water spraying, the weather forecast (precipitation forecast) is also acquired via the Internet 702. Note that the tasks are not limited to the above, and fertilizer application, seeding, transplanting, harvesting, weeding, agricultural chemical scattering/atomization, water spraying, and reaping, etc., which are tasks that are performed in certain units such as by crop, etc., are all applicable. In this case, image information and additional information other than image information are to be acquired.

The server 704 that has received the information analyzes the information, generates information necessary for the task, and sends the generated information to the agricultural machine 100 (step S353). This information analysis also differs according to the task to be performed. For example, in the case of a task of fertilizer scattering, the server 704 performs image recognition similar to the case described for the process of step S208 of FIG. 35A, and checks the NDVI (degree of plant activity) for each of the recognized leaves and checks the spectral distribution of the soil. As a result, the server 704 determines whether the fertilizer needs to be scattered. In the case of a task of removing weeds, the server performs image recognition (same as process of step S208), determines whether the target is a weed, and when the server 704 determines that the target is a weed, the server 704 obtains the distance to the weed in order to bring an arm, which is for scattering herbicides or picking up the weed, to the position of the weed. In the case of a task of harvesting fruit, the server 704 analyzes the size, the color, and the sugar content of the fruit, and determines whether to harvest the fruit. When the server 704 determines to harvest the fruit, in order to enable a fruit cutting holding robot arm to reach a predetermined position around the fruit, the server 704 calculates the distance to the predetermined position. Furthermore, the server 704 may determine whether a water spraying task is necessary from the degree of plant activity and the precipitation forecast. Note that the process of step S353 may be performed by the agricultural machine 100.

Based on the information by which the determination result is obtained by the server 704, the agricultural machine 100 determines whether to perform the task (step S354).

In the process of step S354, when the agricultural machine 100 determines to perform the task, the agricultural machine 100 travels until the task target is within the task area of the task device 106 (step S356).

The agricultural machine 100 determines whether the task-possible-area of the task device 106 has reached an area near the task target such as the crop that is determined to require a task (step S358). Here, this determination is made by determining whether the agricultural machine 100 has moved a known distance from the spot where imaging, etc., has been performed, to the task area and the device that has performed the imaging. The agricultural machine 100 proceeds while the stereo camera device 110 is measuring the distance ahead, or the distance is accurately measured from the rotational frequency of the wheels. These measurements are made because there are cases where the task is hindered or the task is unsuccessful due to even a slight shift in the position, depending on the content of the task.

Furthermore, when the information acquisition of step S352 is done by the state monitoring device 550, the server 704 identifies the position of the agricultural machine 100 from the plurality of signs 370, and calculates the distance to be travelled. This distance information is sent to the agricultural machine 100, and the agricultural machine 100 is moved by the corresponding distance.

Note that when the identification of the position described in step S156 can be accurately performed such that the task is not hampered, the determination may be made by comparing the positions identified before and after travelling.

Note that when there is an image sensing device (the stereo camera device 110, the multispectral camera device 113, and the celestial sphere camera device 501) and the laser radar device 112 near the task device 106, and the task can be performed at the spot where the image information, etc., is acquired, the process of step S356 is omitted.

The determination of step S358 and the travelling of step S356 are repeated until the task target is in the task-possible area of the task device 106. When the agricultural machine 100 travels past the task target too much, the agricultural machine 100 may reverse in the process of step S356.

When the agricultural machine 100 determines that the task-possible area of the task device 106 has reached an area near the task target such as a crop that is determined to require a task, the agricultural machine 100 performs the task (step S359).

When the task is ended, the agricultural machine 100 sends, to the server 704, task information including the task position (task target), the task content, whether the task is successful/unsuccessful, and the task time (step S360). The task information to be sent differs according to the type of task. For example, when the task is harvesting, the task position, the task content, whether the task is successful/unsuccessful, and the task time are sent. When the task is water spraying, the task position, the task content, the water spraying amount, and the task time are sent. When the server 704 receives these information items, the server 704 stores these information items in the database 708 (step S361). As described above, the overall system 1500 stores the information of the task for each task position and task target, and therefore the overall system 1500 is able to use this information for a charging process, compare the task condition with the growth condition and identify a task condition appropriate for the task target, and store data for forecasting future harvesting. The server 704 may compile the task information for each task target within a certain period (for example, a month, a year, or for elapsed days from the start of cultivation), and may provide the complied task information (task content) to the user terminal 710, 712 in a format such that the information can be displayed at these terminals. Furthermore, the task information can be used as treasure data, and therefore the task information may be independently used as a target of business transactions, for example, the task information may be sold to a system user.

On the other hand, when the agricultural machine 100 determines that the task is unnecessary in the process of step S354, the flow proceeds to step S362.

In step S362, the agricultural machine 100 determines whether the task in the area, which is specified as the task place by the user terminal 710, 712 (example of FIG. 32) or the state monitoring device 550 (example of FIG. 46), has been completed. This determination is done by comparing the final position in the task place and the present position. The method of identifying the position is the same as the method described in the process of step S156 of FIG. 34 and the comparison is the same as the comparison described in the process of step S230 in FIG. 36.

When the agricultural machine 100 determines that the present position is at the task completion position, the agricultural machine 100 determines whether there is a next task place (step S364). This determination is made from information sent from the server 704 (step S130 of FIG. 33 and step S338 of FIG. 46).

As a result, when the agricultural machine 100 determines that there is a next task place, the agricultural machine 100 calculates the route to the task place (step S366). The shortest route is calculated by the same method of the processes of steps S160 and S178 in FIG. 34.

Next, the agricultural machine 100 confirms the task resource (step S368). The task resource is the resource necessary for performing the task; for example, a fertilizer and water when the task is fertilizer application and watering, a space for storing the harvest when the task is harvesting, and seeds when the task is seeding. Step S370 is also performed as a subsequent process when a negative determination is made in steps S362 and S364. The operations of the system 1501 in a case where the agricultural machine 100 determines that the task resource is insufficient, is described in detail by using FIG. 49.

After confirming the task resource, the agricultural machine 100 travels toward the next task position in the same task area or to the next task area (task place) (step S370), and ends the first cycle of the task (step S372). Note that the travelling in step S370 may not only be advancing, but also reversing. In step S370, the agricultural machine 100 travels up to a position where the agricultural machine 100 can acquire an image, etc., of the next target of individual determination. This position may be perceived by the agricultural machine 100 and the server 704 in advance, or may be identified based on an image acquired by the stereo camera device 110 or the multispectral camera device 113 of the agricultural machine 100.

Furthermore, the order of performing the processes of steps S368 and S370 may be interchanged. In this case, after a negative determination is made in the processes of steps S362 and S364, the subsequent process is step S370.

By performing the above operations, the movement, the individual task based on the state of the target, and the movement in the route need to be performed only once, and therefore the task can be completed efficiently.

Note that in this example, a description is given of an example where a task such as fertilizer application is performed individually while measuring the status (degree of plant activity, etc.) of an individual task target; however, the task is not so limited, and it is possible to individually perform a task such as fertilizer application in areas in all of the task places that may be task targets such as the crops 350 and 360, etc., without measuring the individual statuses. Furthermore, it is possible to perform a detailed task of controlling the amount of the task resource (for example, the fertilizer) according to the status of the individual task target such as the measured growth status.

<Task interruption process>

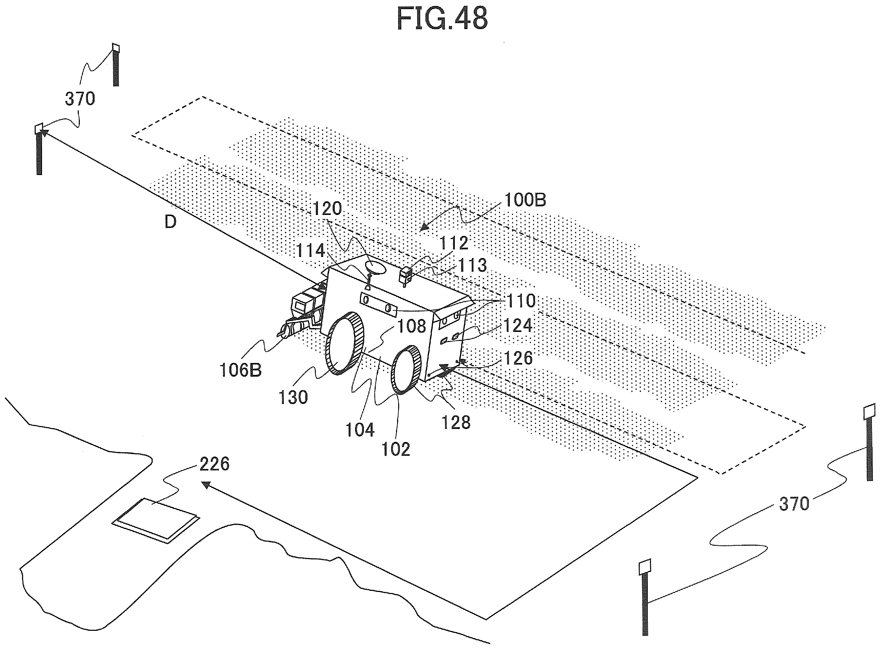

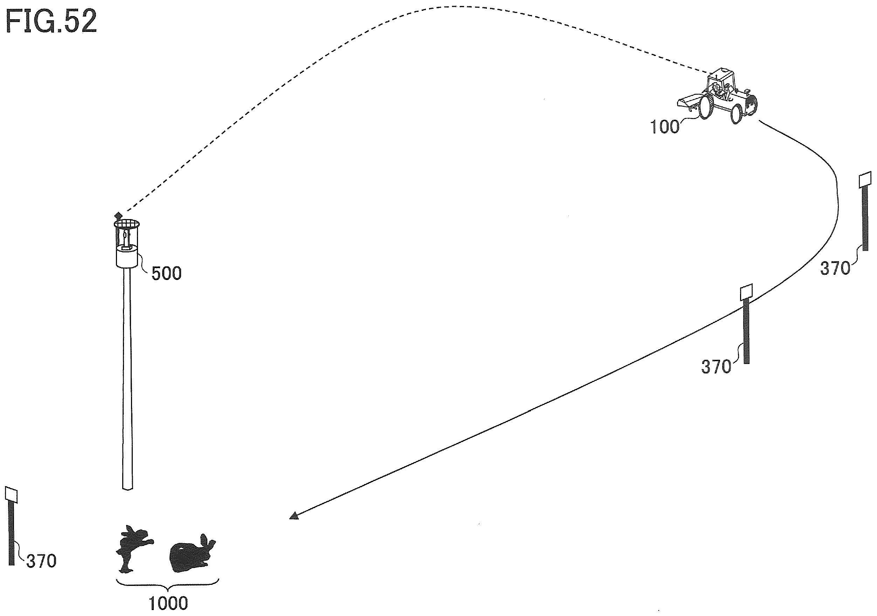

When moving and performing a task by automatic control, it is preferable to automatically respond to a case when the movement and task are interrupted. Particularly, it is preferable to take a measure before the agricultural machine 100 falls into a state where the agricultural machine 100 can only be recovered manually, by forecasting an interruption before the occurrence of a factor of interruption, such as not being able to move due to a shortage in fuel. By using FIGS. 48 through 51, a description is given of a process of interrupting a task, when the remaining amount of fuel (battery) of the agricultural machine 100 becomes low or when the amount of the task resource such as a fertilizer becomes low. Note that by using FIGS. 52 through 56, a detailed description is given of a special case in which the task is interrupted due to a reason other than the fuel, the battery, or the task resource, such as some kind of abnormality is detected by the farm land monitoring device 500, 555.

FIG. 48 is a diagram indicating procedures when the electrically driven agricultural machine 100B interrupts a task and charges the battery, when the remaining amount of battery power is low. The agricultural machine 100B is an electrically driven type agricultural machine, and includes the transmission device 104-2 indicated in FIG. 6. The agricultural machine 100B is provided with a seeding device as the task device 106B, and the agricultural machine 100B travels along a predetermined route in a task place and plants seeds. The dashed line in the figure indicates the path along which the agricultural machine 100B has performed a task, and the agricultural machine 100B has planted seeds in the areas indicated by dotted lines. Around this farm land, there are a plurality of signs 370. At present, the remaining amount of battery power of the agricultural machine 100B is low at the position in the figure, and the agricultural machine 100B determines that it is not possible to complete the task. In this case, the interruption position is stored, and furthermore, the stereo camera device 110 measures and stores a distance D between the stereo camera device 110 and the nearest sign 370. This distance D is to be used for accurately identifying the position where the task is to be resumed after charging the battery. Subsequently, the agricultural machine 100B travels along the route indicated by a solid line, and goes to the external power source 226 (non-contact power transmission device) to charge the battery. Then, after the charging is completed, the agricultural machine 100B moves to the task interruption position, and resumes the task from the accurate interruption position. As described above, according to the overall system 1500, the fuel, the battery, and the task resource can be replenished by automatic control as much as possible, and the efficiency of the task can be increased.

A detailed description of the above operations is indicated in FIG. 49. FIG. 49 is operation flowchart of an operation when the task (or movement) is interrupted. FIG. 49 is also described as being a task (another task when a task is interrupted) of the process of step S224 in FIG. 35A.

It is assumed that this operation flow is started when the agricultural machine 100 recognizes that the remaining amount of the fuel (internal combustion engine type agricultural machine) or the battery power (electrically driven type agricultural machine) has become less than a predetermined amount or less than or equal to a predetermined amount in the process of step S223 in FIG. 35A, or the agricultural machine 100 recognizes that the amount of the task resource such as the fertilizer and seeds has become less than a predetermined amount or less than or equal to a predetermined amount in the process of step S368 in FIG. 47 (step S400).

First, the agricultural machine 100 determines whether the target operation (electrical charging or filling and securing a task resource) has been completed (step S402). Immediately after this process starts, a determination is made that the target operation is not completed, and therefore subsequently, the agricultural machine 100 determines whether the task interruption information (the information of step S416) such as the task interruption year/month/day/time, the interruption position, and the distance to the identified target, etc., or the travel interruption information of step S418 has already been sent to the server 704 (step S405). Immediately after this process starts, also in this step, a determination is made that the information has not been sent, and therefore subsequently, the agricultural machine 100 determines whether the agricultural machine 100 is performing some kind of task (for example, fertilizer application, ground making, and harvesting, etc.) (step S408). Here, when the agricultural machine 100 determines that the agricultural machine 100 is performing some kind of task, the agricultural machine 100 interrupts the task (step S410). That is, according to the control device 118, the agricultural machine 100 stops traveling and also stops the task performed by the task device 106. Subsequently, the agricultural machine 100 confirms the present position by using the same method as the method described in the process of step S156 of FIG. 34, and stores the present position in the control device 118 (step S412).

Then, the stereo camera device 110 is used to measure the distance from a particular target such as the sign 370, etc., and stores the distance in the control device (step S414). To perform this process, first, the target needs to be recognized. As this recognition, there is a method of identifying some kind of object that is positioned ahead by the same method as identifying an obstacle as described in the processes of steps S202 and S204 of FIG. 35A, or a method of detecting a particular target by performing the image recognition process described in the process of step S208 of FIG. 35A. The former method can be performed more quickly than the latter method; however, the precision of the former method is lower than the precision of the latter method. Next, the agricultural machine 100 measures the distance to the position of the identified target. This position is assumed to be the center of the target; however, the position is not so limited, for example, the position may be a place of an edge.

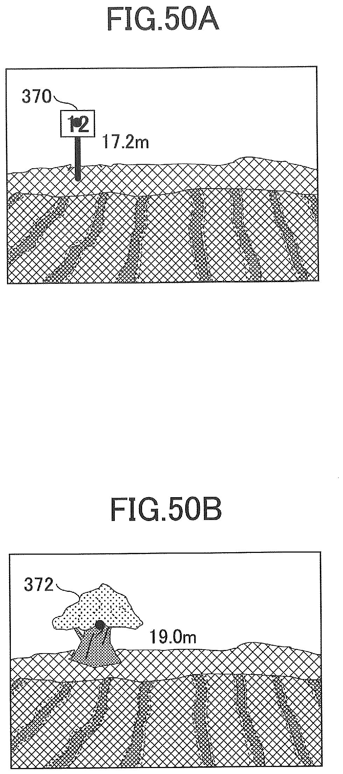

FIG. 50 indicates examples of captured images including the target and measured distances. The target may be an artificial object such as the sign 370 (this sign indicates number "12") as indicated in FIG. 50A, or a natural object such as a tree 372 in FIG. 50B. FIG. 50A indicates that the distance from the agricultural machine 100 (stereo camera device 110) to the sign 370 (center part indicated by a black circle) is 17.2 m. FIG. 50B indicates that the distance from the agricultural machine 100 (stereo camera device 110) to (the tip of a branch of) the tree 372 is 19.0 m. Note that the distances to a plurality of spots included in the captured image may be measured. Furthermore, when the agricultural machine 100 includes a plurality of stereo camera devices 110, the distance to one or more spots may be measured in images captured by two or more stereo camera devices 110. Accordingly, the agricultural machine 100 can be positioned at the starting position more accurately when resuming the task. Subsequently, the agricultural machine 100 sends, to the server 704, task interruption information including the task interruption year/month/day/time, the interruption position, and the distance to the identified target (step S416).

When the server 704 receives this information, the server 704 sends the task interruption information to the user terminal 710, 712. Accordingly, the user is able to perceive that the task has been interrupted. Furthermore, the server 704 stores the task interruption information in the database 708. This storing is done to record a task log and to accurately perform the charging process described below.

Next, the agricultural machine 100 calculates the route to the position where the target operation (electrical charging or filling and securing a task resource) is to be performed (step S419). This route calculation may be done by the server 704. Note that the position for performing the target operation is given by the server 704 in which the position is stored in advance; however, the position is not so limited, and the agricultural machine 100 may store the position. Furthermore, the position may be specified by a user via the user terminal 710, 712. In this calculation, the shortest route is basically calculated, similar to the calculation described in the processes of steps S160 and S178 of FIG. 34. Furthermore, when the agricultural machine 100 determines that the agricultural machine 100 is not performing a task in step S408 (for example, when the agricultural machine 100 is travelling toward a task position), the agricultural machine 100 confirms the present position by the same method as the method in the process of step S412, sends the present position information and the travel interruption information to the server (step S418), and calculates the route from the present position to the position where the target operation is to be performed by the same method as above (step S419). Note that in this case also, the server 704 may calculate the route.

Then, the agricultural machine 100 travels along the route (step S420). Note that this traveling includes both advancing and reversing. Note that when the agricultural machine 100 determines that the agricultural machine 100 has already sent the task interruption information in the process of step S405, the flow proceeds to the process of step S420, and the agricultural machine 100 travels.

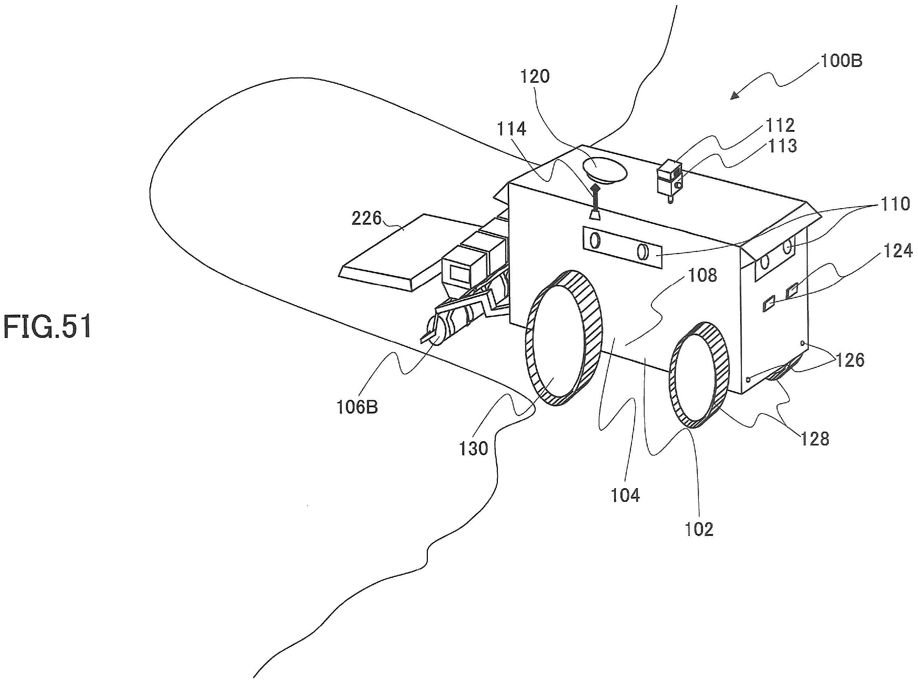

Next, after a predetermined time (for example, one second) passes, the agricultural machine 100 determines whether the agricultural machine 100 has arrived at the position for performing the target operation (step S422). This determination is made by the method as described in the processes of steps S230 and S232 of FIG. 36. Note that the determination of step S422 may be made every time the agricultural machine 100 has travelled a predetermined distance (for example, 50 cm), instead of when a predetermined time passes. When the agricultural machine 100 determines that the agricultural machine 100 has not arrived at the position, the agricultural machine 100 temporarily ends the task interruption process, performs the series of operations of FIG. 35A and FIG. 36, and resumes the process of step S400 again. On the other hand, when the agricultural machine 100 determines that the agricultural machine 100 has arrived at the position for performing the target operation in the process of step S422, the agricultural machine 100 performs the target operation (step S424). This operation may be automatically performed unmanned, as in the system 1501 indicated in FIG. 48, or may be performed manually. For example, diesel oil or gasoline may be manually supplied in the fuel tank of the agricultural machine 100, or a fertilizer may be manually replenished in the task device. This operation is monitored in step S426, and is performed until the target operation is completed. For example, when a sensor of the agricultural machine 100 detects that a predetermined amount of battery power has been charged, greater than or equal to a predetermined amount of fertilizer has been supplied, or harvest has been removed from a harvest storage space, the agricultural machine 100 detects that the target operation has been completed, and determines as operation completed. FIG. 51 indicates a state immediately after the battery 224-2 of the agricultural machine 100B has been charged by the external power source (non-contact power transmission device) 226.

Subsequently, the agricultural machine 100 sends, to the server 704, operation end information including the target operation end year/month/day/time and the target operation content (how much the battery power, the fuel, the fertilizer, etc., has been supplied), etc., and furthermore, the agricultural machine 100 calculates the route to the task interruption position or the route to the task start position or the storage position (step S427). The server 704 sends the operation end information to the user terminal 710, 712, and stores the information in the database 708. The method of calculating the route is the same as the method described above (step S419, etc.), and the calculation may be performed by the server 704.

Then, the agricultural machine 100 travels (advances or reverses) (step S430). For example, as indicated in FIG. 52, when electric power is sufficiently charged in the battery 224-2, in order to resume the task, the agricultural machine 100 starts traveling to the task interruption position. Note that after completing the target operation, in the process of step S402 in the second operation loop and onward in FIG. 49, when the agricultural machine 100 determines that the target operation has been completed, the process of step S430 follows.

Then, after a predetermined period passes, the agricultural machine 100 determines whether the task has been interrupted (step S431). When the agricultural machine 100 does not determine that the task has been interrupted, the flow proceeds to step S444, and this process is temporarily ended.

On the other hand, when the agricultural machine 100 determines that the task has been interrupted, the agricultural machine 100 determines whether the agricultural machine 100 has arrived near the task interruption position (step S432). This determination is basically made by the same method as the method of step S422; however, it may be determined whether the agricultural machine 100 is near the task interruption position by increasing the range in determining whether the positions match.

Next, the agricultural machine 100 uses the stereo camera device 110 to identify the target corresponding to the target for which the distance has been measured in step S414, by the same method as the method of step S414, and measures the distance to the identified target (step S434).

The agricultural machine 100 determines whether the distance to the target measured in step S434 and the distance measured and stored in step S414 are equal (step S436). Note that in step S414, when a single stereo camera device 110 has measured the distances to a plurality of spots or a plurality of stereo camera devices 110 have measured the distances a plurality of spots, the distances to all of the corresponding positions are measured in step S434 also, and the agricultural machine 100 determines whether all of the distances match. Note that the precision of matching may be determined according to the precision of ranging by the stereo camera device 110.

Then, when the agricultural machine 100 determines that the distances do not match in step S436, the control device 118 of the agricultural machine 100 operates the steering device 122 and the transmission device 104 to move the agricultural machine 100 back and forth and left to right, such that the distances match (step S438). When the distances match after measuring the distance again for one or more times, the agricultural machine 100 determines that the task interruption position and the task resume position match, and sends the task resume information together with the task resume year/month/day/time to the server 704 (step S440), and starts the travelling task (step S442). The server 704 sends the task resume information and the start time to the user terminal 710, 712, and furthermore, stores this information in the database 708. On the other hand, when the agricultural machine 100 determines that the distances match in the process of step S436, the flow proceeds to step S440. As described above, by matching the distances to the target, even when there is a slight deviation in the position information, it is possible to precisely match the task interruption position and the resume position. Accordingly, for example, the task can be performed without duplications or gaps where the task is not performed.

When the task is resumed as described above, the operation flow indicated in FGI. 49 is ended, and processes are performed in the loop of the task of FIG. 40 and FIG. 47.

<Operation when abnormality is detected>

As the farm land becomes increasingly extensive, it becomes more troublesome to resolve an abnormality that has occurred, for example, manually chasing off a destructive animal that has come in the farm land. Therefore, it is preferable to automatically respond to an abnormality in such a case. By using FIGS. 52 through 56, a description is given of operations in a case where the occurrence of an abnormality is detected in the farm land. FIG. 52 indicates how the automatically controlled agricultural machine 100 is used to observe an abnormality source 1000 and an action is taken with respect to the abnormality source 1000, when an abnormality event is detected through the farm land monitoring device 500 (in the present example, when the abnormality source (mainly a so-called destructive animal) 1000 that may harm the crop is detected). The dashed line in the figure indicates the transmission and the reception of information by wireless communication. In this example, information is exchanged between the farm land monitoring device 500 and the agricultural machine 100; however, the exchange of information is not so limited, and the information may be exchanged via the server 704. Furthermore, the content of the abnormality is not limited to the entrance of a destructive animal in the farmland, but the abnormality may include all abnormal matters that may be caused by humans or by the force of nature. For example, a fire or an unlawful entry of an unknown person may be an abnormality.

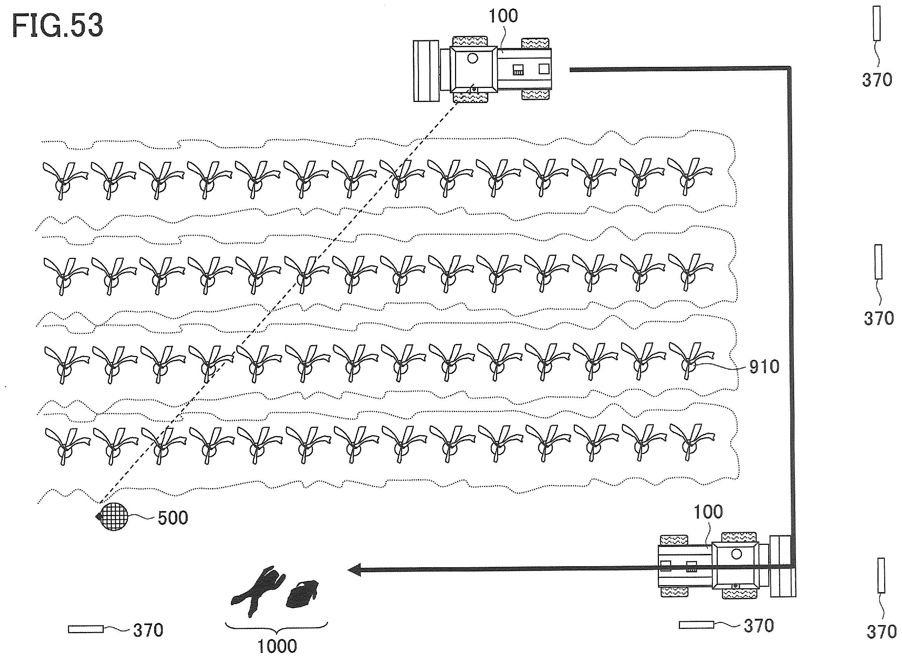

FIG. 53 is a diagram for describing the operation by the agricultural machine 100 of FIG. 52 in more detail, and FIG. 53 is a view of the farm land of FIG. 52 from above. As indicated in the figure, the agricultural machine 100 performs an operation of approaching the abnormality source 1000 by the shortest route, while avoiding an area in which a crop 910 is cultivated.

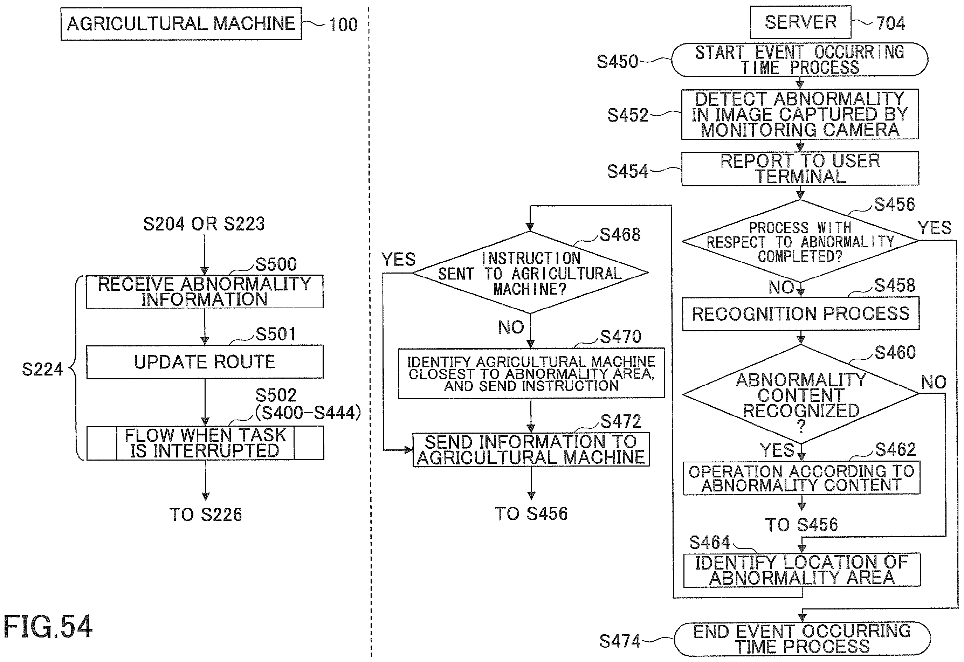

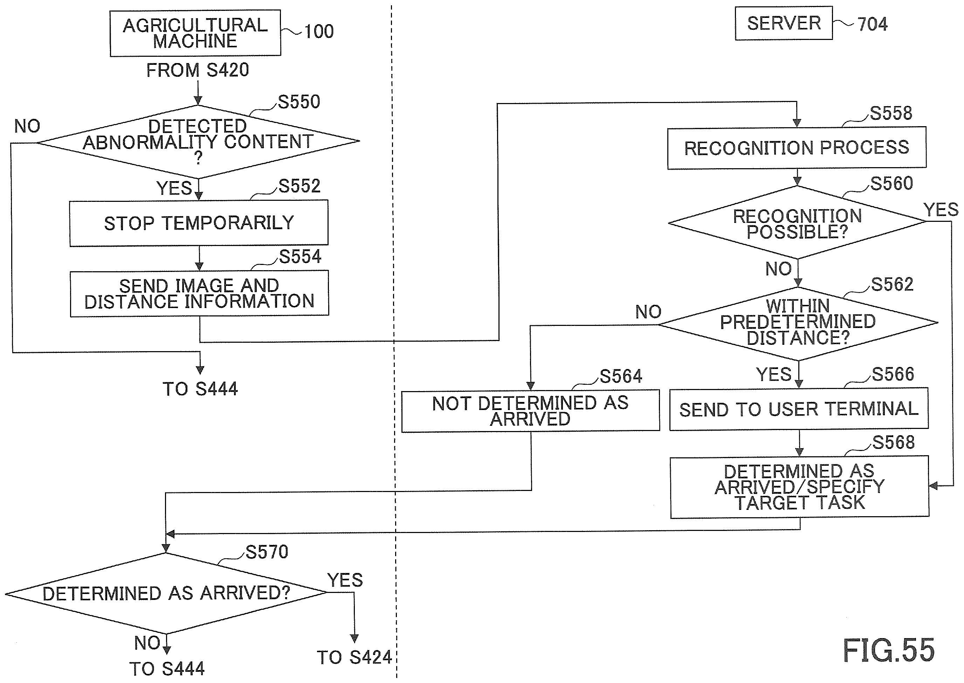

FIGS. 54 and 55 indicate the operations of the overall system 1500 according to the present embodiment when this abnormality event has occurred, and mainly describes the operations of the server 704 and the agricultural machine 100. FIG. 54 is for describing the operations from when an abnormality event occurs to when an action to respond to the abnormality is completed. On the other hand, FIG. 55 is for describing the details of operations of step S422 in the process of step S502 of FIG. 54 (same operations as steps S400 through S444 in FIG. 49).

The flow when an abnormality event occurs is started when an abnormality is detected in an image captured by the farm land monitoring device 500 (steps S450, S452). This is an operation that is executed as the farm land monitoring device 500 sends the captured image to the server 704 and the server 704 analyzes the image. The server 704 performs image recognition by the same method as the method of the process of step S208 of FIG. 35A, and for example, the server 704 detects that an abnormality has occurred when something other than the agricultural machine 100, the crop 910, and the system user is included in the image captured by the farm land monitoring device 500. Note that the abnormality may be detected from an image captured from another device such as the state monitoring device 550 and the farm land monitoring device 555.

When the server 704 detects this abnormality, the server 704 sends a report indicating that an abnormality has been detected, the image capturing the abnormality state, and the year/month/day/time, etc., to the user terminal 710, 712 (step S454). Then, the server 704 stores the same information as the information sent to the user terminal 710, 712, in the database 708.

Next, the server 704 determines whether the process for responding to the abnormality that has occurred is completed (step S456). Immediately after an abnormality event occurs, usually, the process is not completed, and therefore the flow proceeds to the recognition process of the next step S458. In the recognition process, image recognition is performed with respect to the place where the abnormality is detected, by a method similar to the process of step S208 of FIG. 35A (step S458). This recognition process is performed by obtaining the feature amount of the place of the abnormality, and comparing the feature amount with a standard pattern stored in the database 706, etc. This process is an operation that includes both a case where the server 704 itself completes the process and a case where the agricultural machine 100 completes the process (the operation end report of step S428 performed in the process of step S502) and the server 704 receives this information and the server 704 determines that the process has been completed.

As a result of the recognition process of step S458, the server 704 determines whether the abnormality content has been recognized (step S460). Then, when the abnormality content has been recognized, the server 704 performs an operation according to the abnormality content (step S462). This operation is defined for each abnormality content; for example, the operation is ignore, cause the agricultural machine 100 that is positioned nearest to the abnormality to approach the abnormality and intimidate the abnormality by using an alarm whistle, and spray water at the abnormality, etc. Then, subsequently, the flow returns to the process of step S456, and when the server 704 determines that the process to respond to the abnormality has been completed, the process when an abnormality event occurs is ended (step S474).

On the other hand, in the process of step S460, when the server 704 cannot confirm the content of the abnormality, the server 704 identifies the location of the abnormality area from the plurality of signs 370, etc., whose positions are known and which are included in an image captured by the farm land monitoring device 500, etc. (step S464).

Then, the server 704 determines whether an instruction to confirm the abnormality content has already been given to the agricultural machine 100 (step S468). When the server 704 determines that an instruction has not been given yet, the server 704 identifies the agricultural machine 100 that is nearest to the abnormality place (abnormality area) by using the information stored in the database 708, and gives an instruction to confirm the content of the abnormality (step S470). Note that the agricultural machine 100 may not be the nearest one to the abnormality place by a straight-line distance; the agricultural machine 100 that is nearest to the abnormality place through a route may be identified.

The server 704 sends position information of the abnormality place to the identified agricultural machine 100 to which an instruction to confirm the abnormality content has been given (step S472).

On the other hand, in the process of step S468, when the server 704 determines that an instruction to confirm the abnormality content has already been given to the agricultural machine 100, the server 704 proceeds to the process of step S472, and sends the position information of the abnormality place identified in step S464. Then, the server 704 returns to the process of step S456.

On the other hand, the agricultural machine 100 operates as follows. Steps S500, S501, and S502 described here indicate the process of step S224 in FIG. 35A when an abnormality event occurs. When the flow proceeds from the process of step S204 or step S223 to the process of step S224, the agricultural machine 100 receives the instruction of the process of step S470 (for interrupting the task only at the beginning and to confirm the abnormality content) and the position information of the abnormality place of step S472 (step S500). Then, the agricultural machine 100 recalculates the traveling route in accordance with the position information of the abnormality place (step S501). The abnormality place may not always be fixed at a predetermined place, such as when a destructive animal enters, and therefore agricultural machine 100 receives the position information of the abnormality place every time at the process of step S500. Then, when the position changes, in the process of step S501, the agricultural machine 100 updates the travelling route. The agricultural machine 100 interrupts the primary task, and performs the process, which is performed when the task is interrupted, defined in steps S400 through S444 (step S502). Then, when the process of step S502 ends, the flow proceeds to the process of step S226.

Note that the above operations are described as a process executed by the server 704 based on an image captured by the farm land monitoring device 500, etc.; however, the processes described with respect to steps S450 through S472 may be performed at the farm land monitoring device 500, 555 and the state monitoring device 550.

Furthermore, the process that is performed when an abnormality occurs is started based on an image captured by the farm land monitoring device 500; however, the process that is performed when an abnormality occurs may be started when the stereo camera device 110 and the multispectral camera device 113, etc., set in the agricultural machine 100 detects an abnormality. In this case, the agricultural machine 100 that has captured an image of the abnormality content performs the process.

FIG. 55 is for describing the details of the operations of the process of step S422 (determination of whether the agricultural machine 100 has arrived at the target position) when an abnormality event occurs in the process of step S502. This process is executed by the cooperation between the agricultural machine 100 and the server 704.

When the process of step S402 is ended, the stereo camera device 110 (or the multispectral camera device 113) installed in the agricultural machine 100 determines whether an abnormality content is detected (step S550). Specifically, the agricultural machine 100 determines whether some kind of object is detected near the position of the abnormality place sent from the server 704, etc. As this determination method, the method described with respect to steps S202 and S203 of FIG. 35A is used.

Then, when an abnormality content is not detected, the flow proceeds to the process of step S444. On the other hand, when an abnormality content is detected, the agricultural machine 100 stops travelling (step S552). Then, the agricultural machine 100 sends, to the server 704, an image including the abnormality content captured by the stereo camera device 110, etc., the distance information, and the present position (step S554).

The server 704 performs an image recognition process with respect to the abnormality content (step S558). As the image recognition process, the same method as the method used in the process of step S208 of FIG. 35A is used. Then, the server 704 determines whether the image is recognized (step S560).

When the server 704 determines that the image cannot be recognized, the server 704 determines whether the agricultural machine 100 is within a predetermined distance (for example, with 3.5 m) or at a shorter distance than a predetermined distance to the abnormality content, based on the distance information sent from the agricultural machine 100 (step S562). That is, the server 704 determines whether the agricultural machine 100 is sufficiently near the abnormality content such that the agricultural machine 100 is able to recognize the abnormality content. Note that this operation may be performed by determining whether the length between edges (that is, the size of the object) identified by the image recognition process is greater than or equal to a predetermined length or longer than a predetermined length.

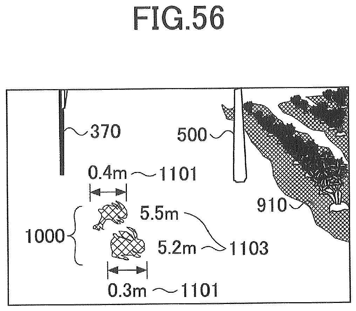

Then, when the server 704 determines that the agricultural machine 100 is within a predetermined distance (at a shorter distance than a predetermined distance) in the process of step S562, the server 704 sends, to the user terminal 710, 712, a report indicating that an abnormality that cannot be recognized has occurred, together with the image indicating the abnormality content (step S566). An example of an image displayed at the user terminal 710, 712 at this time is indicated in FIG. 56.

FIG. 56 indicates an image that is captured by the agricultural machine 100 by using the stereo camera device 110 from a bottom right position in FIG. 53. As indicated in FIG. 56, at the user terminal 710, 712, the abnormality content (abnormality source) 1000 in the image captured by the stereo camera device 110 is displayed, and additional information such as a distance 1103 to the abnormality source 1000 and a size 1101 of the abnormality content is displayed. The user looks at the image and the displayed additional information from the user terminal 710, 712 and recognizes the abnormality content, identifies the abnormality content, and selects a response method (target operation). Then, as the user sends this information to the server 704 by using the user terminal 710 or 712, the server 704 determines that the agricultural machine 100 has arrived at the target operation position, and specifies the target operation (step S568). Furthermore, the server 704 registers the abnormality content, a relevant image, the feature pattern, and the response method, in the database 706. Accordingly, when the same or a similar abnormality content occurs in the future, the agricultural machine 100 is able to respond to the abnormality content. Note that also when the server 704 determines that the image is recognized in the process of step S560, the server 704 determines that the agricultural machine 100 has arrived at the position of the target operation, and specifies a target operation (further approach the abnormality content and intimidate the abnormality content by an alarm whistle or by lighting the lamps 124, ignore the abnormality content, travel to the abnormality content, and discharge water at the abnormality content, etc.) according to the recognized abnormality content (step S568). The server 704 sends a report indicating the determination of arrival and the target operation to the agricultural machine 100.

In the process of step S562, when the server 704 does not determine that the agricultural machine 100 is within a predetermined distance (or at a shorter distance than a predetermined distance), the server 704 does not determine that the agricultural machine 100 has arrived (step S564). The server 704 sends a report of this determination of not arriving to the agricultural machine 100. Accordingly, the agricultural machine 100 further approaches the abnormality content.

Then, the agricultural machine 100, which has received the determination result by the server 704 in the process of step S568 or S564, determines whether the server 704 has determined that the agricultural machine 100 has arrived at the position for performing the target operation (step S570). Then, when the agricultural machine 100 determines that the server 704 has determined that the agricultural machine 100 has arrived at the position, the flow proceeds to the process of step S424, and when the agricultural machine 100 determines that the server 704 has not determined that the agricultural machine 100 has arrived at the position, the flow proceeds to the process of step S444.

Note that the operations performed by the server 704 (steps S556 through S568) may be performed by the agricultural machine 100.

As described above, when the occurrence of an abnormality is detected, the overall system 1500 is able to efficiently perform an appropriate process for responding to the abnormality.

Note that in the present embodiment, a description is given of an example where the server 704 mainly performs the recognition process and other image processing on an image acquired by the stereo camera device 110 and the multispectral camera device 113 set in the agricultural machine 100, the farm land monitoring device 500, 555, and the state monitoring device 550, etc.; however, the processes are not so limited, and the agricultural machine 100, a camera device, and the farm land monitoring device 500, etc., may perform the image processing. Accordingly, it is possible to reduce the data amount communicated by wireless communication, suppress the communication data amount of the overall system, and increase the performance of the overall system 1500 (accelerate the processing time). On the other hand, by performing the image processing at the server 704 as described in the above example, the amount of electric power used at the agricultural machine 100, etc., can be generally suppressed, and particularly in the case of using an electrically driven agricultural machine, a task that takes a long time may be performed by charging the battery once.

The above description is about a task that is performed by using one agricultural machine 100; however, a plurality of agricultural machines 100 may cooperate with each other by wireless communication or wired communication and the respective agricultural machines may perform the task. For example, a leading agricultural machine may cultivate a farm land, and the next agricultural machine may perform fertilizer application and seeding. In this case also, basically, the leading agricultural machine performs the operations as described above, and the following agricultural machine performs a task according to instructions from the leading agricultural machine.

Furthermore, the operations described above may be separately performed by a plurality of agricultural machines such that the respective agricultural machines perform operations in cooperation with each other.

[Another example of agricultural machine]

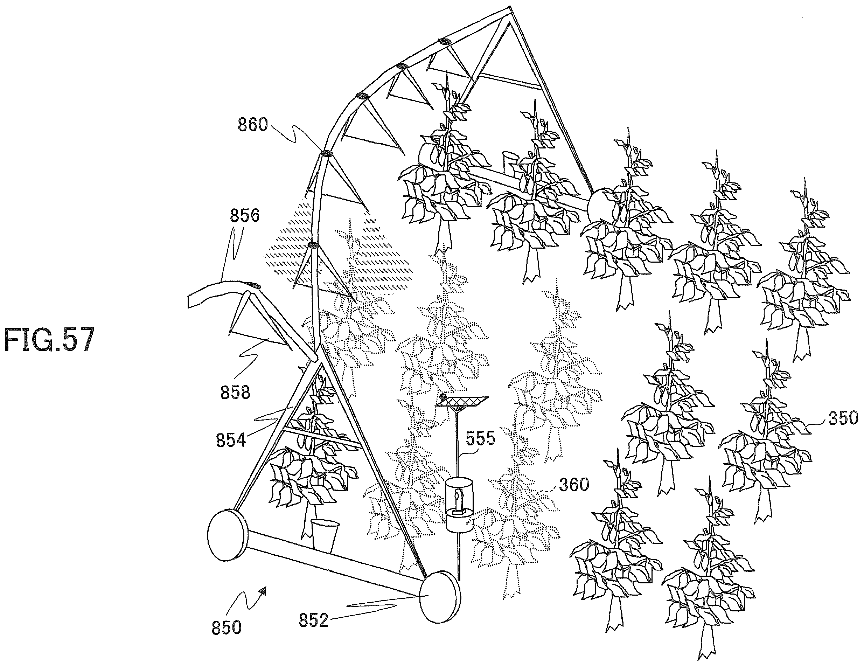

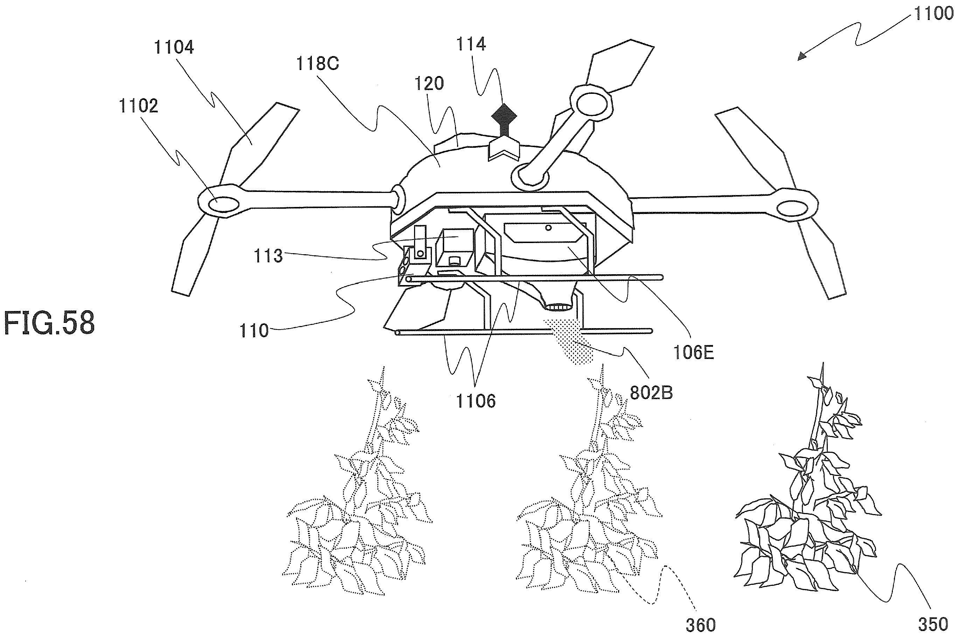

The agricultural machine 100 described above is mainly an example of a tractor; however, FIGS. 57 and 58 indicate other examples of the agricultural machine 100 according to the present embodiment. FIG. 57 indicates a mobile sprinkler performing a water spraying task, and FIG. 58 indicates a helicopter (quadcopter) performing a fertilizer scattering task.

<Sprinkler>

The technology indicated in FIG. 57 is center pivot irrigation using a sprinkler 850 as the agricultural machine 100. The sprinkler 850 includes a plurality of water spray bars 856 made of aluminum that are interconnected, and the water spray bars 856 are mounted on towers 854 having a triangular structure (truss structure), and water is sprayed while moving these towers 854 with wheels 852. At each of the water spray bars 856, a water spray opening 858 and an electronic valve 860 for controlling the supply of water to each opening 858 are provided. It is more efficient to water the crop near the crops 350 and 360 while preventing loss of water due to evaporation. Thus, a drop type water spray opening 858, which is branched downward from the water spray bar 856, is used; however, the water spray opening 858 is not so limited. This sprinkler 850 moves so as to draw a circle, centering around one end. Furthermore, the sprinkler 850 supplies underground water, which has been drawn from underground from the side that is the center.

This sprinkler 850 also includes a GPS receiver, a wireless communication antenna, and a control device, similar to the agricultural machine 100. This control device also controls the opening and closing of each electronic valve 860. Furthermore, the sprinkler 850 is connected to the information communication system 1502 indicated in FIG. 2, and forms the overall system 1500. The sprinkler 850 receives an instruction from the server 704 based on image information and additional information from the farm land monitoring device 555 set in the farm land, and sprays water from only the water spray opening 858 that is passing near an area above the crop 360 whose degree of plant activity is low. Note that the multispectral camera device 113, etc., may be set on the sprinkler 850 itself, the server or the sprinkler 850 may determine the degree of plant activity based on a spectral image and spectral information obtained from the multispectral camera device 113, and the water spraying may be controlled based on this determination. Accordingly, compared to a case of spraying water to the entire farm land, the water can be efficiently used. Note that a liquid fertilizer may be added to the underground water to be sprayed. Furthermore, instead of spraying underground water, the sprinkler 850 may perform a task of scattering a liquid agricultural chemical. In this case, for example, the sprinkler 850 may acquire information of pest from the farm land monitoring device 555 provided with a polarizing filter, and may scatter the agricultural chemical only to the crop where there is pest. Note that a polarization camera device may be set on the sprinkler 850, and based on a polarization image obtained from the polarization camera device, the server 704 or the sprinkler 850 may detect pest.

This sprinkler 850 performs a task according to operations described by using FIGS. 32, 33, 34, 35A, 36, 37, 46, and 47. However, the route of movement of the sprinkler 850 is determined, and therefore there is no need for complex calculations for determining the route. Furthermore, there is no need to confirm the traveling direction (step S202) in FIG. 35A, or to change the route according to this determination (steps S208 through S222), etc., or to perform a turning operation (steps S232, S234), and therefore these processes may be omitted. Furthermore, when a task is interrupted, there is no need to resume the task from an accurate task interruption position, and therefore the operations for matching the position of the agricultural machine such as steps S414, S434, and S438 of FIG. 49 may be omitted.

Note that the agricultural machine is not limited to a center pivot method; for example, irrigation may be performed by a parallel movement method.

As described above, the overall system 1500 can perform a task such as water spraying only for a target that needs the task, and therefore the resource can be efficiently used.

<Helicopter>

FIG. 58 indicates a task of scattering a liquid fertilizer 802B by using a helicopter (quadcopter) 1100 as the agricultural machine 100. The helicopter 1100 includes four rotor heads 1102 that are set near the leading ends of arms extending from the main body of the helicopter 1100, and four rotors 1104 that are rotatably connected to the rotor heads 1102, and the helicopter 1100 flies by rotating the rotors 1104. This helicopter 1100 also includes at least the GPS antenna 120, the wireless communication antenna 114, the control device 118C for controlling the helicopter 1100 including the rotation of the rotors 1104, the stereo camera device 110, the multispectral camera device 113, the task device 106E that scatters the agricultural chemical according to the control of the control device 118C, and a landing gear 1106 that contacts the ground such as the surface that is the landing site when landing. The stereo camera device 110 is set on the helicopter 1100 so as to be rotated by the control device 118C in a direction orthogonal to the vertical direction when the helicopter 1100 is on a level flight pattern. Furthermore, the helicopter 1100 is able to confirm the status of the crop, etc., and measure the distance between the ground and the stereo camera device 110 to identify the altitude, by directing the stereo camera device 110 toward the ground. The altitude is an example of second digital information or fourth digital information.

Furthermore, the helicopter 1100 is able to confirm whether there is an obstacle (for example, an artificial object such as the farm land monitoring device 500, 555 and the state monitoring device 550, or a natural object such as a high tree other than the crop) in the travelling direction, by directing the stereo camera device 110 in the travelling direction. Note that the altitude may be measured by an altimeter that identifies the altitude at which the helicopter 1100 is flying based on pressure changes. This helicopter 1100 detects the present position by a GPS signal by the method described above, and performs wireless communication with the information communication system 1502 of FIG. 2.

The helicopter 1100 or the server 704 perceives the status of a plant such as the degree of plant activity based on a spectral image and the spectral reflectance obtained by the multispectral camera device 113, and only when the status of a plant is less than or equal to a predetermined value, the helicopter 1100 causes the task device 106E to operate and scatter the fertilizer 802B to the crop 360. As a matter of course, the helicopter 1100 may perform a different task (for example, a water spraying task and an agricultural chemical scattering task) by using the same or a different task device 106, based on the above information or information other than the above information. Furthermore, by using a polarization camera, which can observe the surface of an object substantially without being affected by colors or shadows, the helicopter 1100 is able to find pest, etc., having a cryptic color adhering to the surface of a plant such as a leaf, and scatter an agricultural chemical only to the plant where there is pest (or the pest), in a pinpoint manner.

This helicopter 1100 basically performs a task according the same flow as the flow of the operations described by using FIGS. 32, 33, 34, 35A, 36, 37, 46, 47, 54, and 55. However, in steps S114 through S116 of FIG. 32, etc., the altitude at which the helicopter 1100 flies is also set. Furthermore, the helicopter 1100 is able to fly over the crop, etc., and therefore the travelling route can be calculated more easily compared to calculating the travelling route of the agricultural machine 100.

Furthermore, the travelling in these operations is done by flying.

Note that the agricultural machine to be used is not limited to a helicopter (quadcopter). Other types of flying machines may be used, such as a multicopter such as an octocopter, etc., having eight rotors, etc., a balloon type, an airplane type, and a glider type, etc.

As described above, according to the overall system 1500, the task can be performed efficiently

[Remote operation]

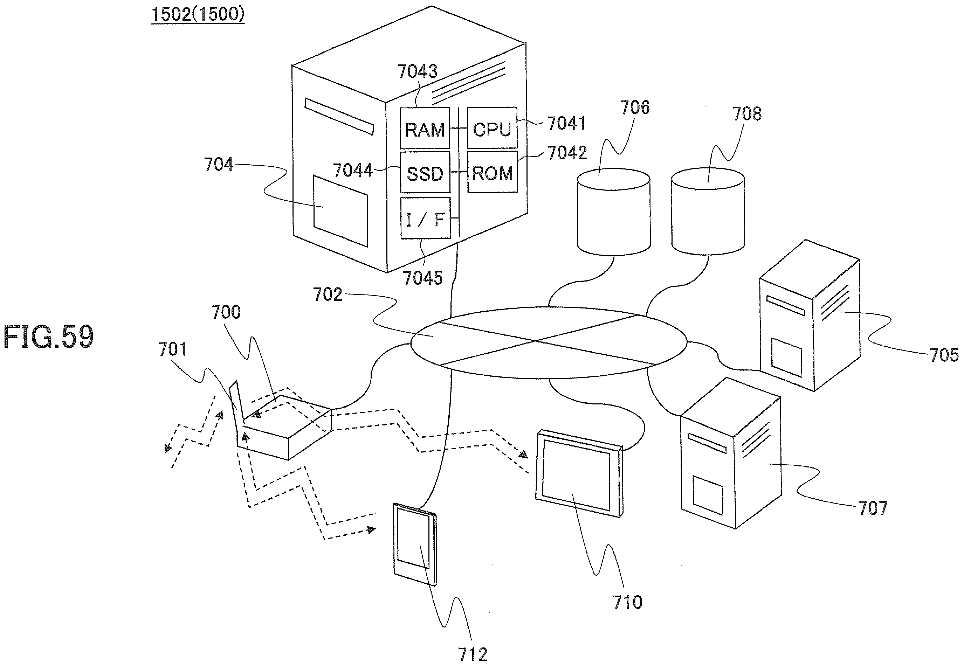

In the above examples, the travelling and tasks by the agricultural machine 100, the sprinkler 850, and the helicopter 1100, etc., are automatically controlled by the overall system 1500 according to the present embodiment, without manual operation. On the other hand, there is demand that the system user wants to move the agricultural machine 100 and perform a task by the agricultural machine 100 by viewing the operations with his own eyes. Particularly, there are cases where the system user wants to control an elaborate task and detailed movements that are difficult to be controlled automatically. By applying the overall system 1500, the system user can operate the agricultural machine 100, etc., by remote operation. FIG. 59 indicates an example of the information communication system 1502 for performing this remote operation. The remote operation means that the user operates the agricultural machine 100 by using the user terminal 710, 712. A case where the user operates the user terminal 710, 712 while riding the agricultural machine 100, or a case where the user operates the agricultural machine 100 near the agricultural machine 100 is also included in the remote operation.

When performing a remote operation, the image captured by the agricultural machine 100, etc., and additional information are to be sent via the server 704 to be displayed on the screen of the user terminal 710, 712. In this case, the additional information (distance information, etc.) is displayed by being superimposed on the image. However, in the overall system 1500, this image is sent as video (moving picture) information. Therefore, the task load on the server 704 becomes high, and actually, in the information communication system 1502 indicated in FIG. 2, a video server 705, which exclusively used for handling video information, is separately provided by being connected to the Internet 702 (see FIG. 59). The video is sent and received as video data that complies with H.264 SVC that can adjust the compression ratio of the video information communicated according to the status, etc., of the communication line. Therefore, the video is rarely paused. Note that the agricultural machine 100, etc., may send the data in a format other than H.264 SVC, such as in a format complying with H.265. Furthermore, the agricultural machine 100, etc., may not send video information, but may continuously or intermittently send still image information in a JPEG format and PING format.

An example of a screen displayed on the user terminal 710, 712 is an image captured by the stereo camera device 110, as indicated in FIGS. 50 and 56. Furthermore, a spectral image that is captured by the multispectral camera device 113 (for example, an image expressing the spectral reflectance by the luminance and the darkness of a color) may be displayed. Furthermore, the user instructs the travelling direction, a turning operation, and the speed to operate the agricultural machine 100 while viewing the screen, and can also perform the task by the task device 106E. As a matter of course, one of operating the agricultural machine 100, etc., and performing the task by the task device 106E may be done automatically, and the user may only operate the other one. Furthermore, the image captured by the farm land monitoring device 500, 555 and the state monitoring device 550 may also be displayed, and for example, it is possible to display the position where the agricultural machine 100, etc., being remotely operated is situated in the farm land. Furthermore, a map of the farm land and the position where the agricultural machine 100 is situated in the map may be displayed. In this remote operation, the instruction from the user needs to be quickly applied to the agricultural machine 100, etc., and therefore, actually, an operation management server 707 for operation management is provided in the information communication system 1502 indicated in FIG. 2 (see FIG. 59).

The operation management server 707 gives an operation instruction to the agricultural machine 100, etc., based on information input to the user terminal 710, 712, and remotely controls the agricultural machine 100, etc. The information input to the user terminal 710, 712 may be input manually by operating a touch panel, a keyboard, and a mouse, or may be input by voice sound and gestures. The operation management server 707 recognizes the information by using a program for recognizing the information, and sends an operation instruction according to the recognition result to the agricultural machine 100, etc.

Furthermore, in the overall system 1500, images sent from a plurality of agricultural machines 100, etc., and images captured by a plurality of imaging elements may be displayed at once or may be displayed by being switched, on the screen of the user terminal 710, 712.

As described above, the system user is able cause the agricultural machine 100 to move and perform a task while displaying information other than the image captured by the agricultural machine 100 on the user terminal 710, 712, and therefore even by remote operations, the user is able to cause the agricultural machine 100 to perform elaborate tasks and to make detailed movements.

The remote operation is executed as a separate mode from the automatic control mode described by FIGS.

32 through 56; however, the remote operation may also be performed during the automatic control. In order to do so, in the operations described by FIGS. 32 through 56, the images captured by the agricultural machine 100 are constantly sent to the user terminal 710, 712 via the video server 705. Furthermore, the remote operation from the user terminal 710 or 712 is realized as the instruction from the user cuts into the operations described by FIGS. 32 through 56 to perform the operations by remote control. In this case, when there is no instruction from the user, the overall system 1500 may return to the automatic control as described by FIGS. 32 through 56 and execute process operations.

Note that in a case where the remote operation is performed or the agricultural machine 100 is directly manually operated, information of task start/end/interrupt/resume and information of the position of the agricultural machine 100 and the task position are sent from the agricultural machine 100 to the server 704, and the server 704 stores the received information in the database 708. Accordingly, a future task and a charging process described below can be smoothly performed.

[Charging process]

As described above, the server 704 (or a charge management server; the same applies hereinafter) also performs a charging process (billing process). By appropriately collecting an appropriate system usage fee, the system provider is able to continue the business, develop a new service, and improve the present service, and therefore an issue to be addressed is to automatically, accurately, and efficiently perform a charging process by technology. The charging method has various modes, and the user of the overall system 1500 according to the present embodiment is able to select the mode. Examples of a charging mode of fixed charging are as follows.

   I. The usage fee of the information communication system 1502 indicated in FIG. 2 or FIG. 59.
   II. The rental rate (100 dollars/month per device, 200 dollars/month per agricultural machine, etc.) of the system (the farm land monitoring device 500, 555, the state monitoring device 550, and the agricultural machine 100, etc.) 1501 in the farm land indicated in FIG. 1.
   III. The rental rate of the land (farm land) (15 dollars per square meter, etc.).

The mode of charging, for which an agreement has been made by the system provider and the user at the time of starting to use the system, is registered in the database 708. The server 704 sends a bill for a fee corresponding to each of, or a combination of a plurality of the charging modes I through III registered in the database 708, to the user terminal 710, 712 periodically (for example, monthly).

The charging modes at a metered rate include each of and/or a combination of a plurality of i. a type of task, ii. a task time, iii. a size of the task place, iv. an agricultural machine that performed a task, v. analysis implemented by the server 704, vi. a harvest date forecast implementation, vii. acquiring demand of the market, and viii. information communication amount in the system. The information of i. through viii. above (or information for generating i. through viii.) is recorded in the database 708 in the server 704 as described above. For example, the server 704 generates a fee of a total of 100 dollars for the type of task (harvest: 5 dollars/hour) and the task time (20 hours), with respect to a combination of i. and ii., or generates a fee of a total of 200 dollars for the type of task (ground making: 0.2 dollars/square meter) and the size of the task place (1000 square meters), with respect to a combination of i. and iii. As described above, according to the overall system 1500, it is possible to easily identify the task content (type of task, task time, size of task place, and agricultural machine used for performing the task, etc.) in a predetermined period (for example, one month), and a fee can be charged according to the task content. Furthermore, in addition to a combination of i. and ii., etc., the server 704 is able to generate, for example, a fee of a total of 50 dollars for the number of times (5 times) of implementing vi. harvest date forecast (10 dollars per forecast). With respect to these modes i. through viii., the server 704 calculates the fee based on information registered in the database 708 for each task, and sends a bill to the user terminal 710, 712 at every fixed period (for example, 6 months). Note that when the task time is used, the time during which the task is interrupted is subtracted, and the fee is calculated based on the actual task time.

Furthermore, the overall system 1500 also provides charging modes of a contingent fee type. Examples are i. charge a certain ratio (for example, 20%) with respect to the sales of the crop harvested by using the overall system 1500, ii. charge a certain ratio (for example, 50%) with respect to the sales corresponding to the harvested amount that has increased when the overall system 1500 has been used to cultivate the crop, and iii. set a fee by adding the market price of the harvested crop to the charged fee (for example, when the market price rises suddenly by higher than or equal to a certain price with respect to a reference price, the ratios of i. and ii. are increased; while the ratios of i. and ii. are decreased when the market price decreases sharply). The information for calculating i. through iii is recorded in the database 708. The server 704 calculates these fees based on data stored in the database 708, and sends a bill to the user terminal 710, 712 at every fixed period (for example, 6 months).

On the other hand, the fee may be discounted when the user satisfies a certain condition. For example, when the user gives beneficial information to the overall system 1500 (for example, the information described in the process of step S214 of FIG. 35A), three dollars may be discounted each time, while setting a predetermined number of times (10 times/month) as the upper limit. A predetermined amount may be the upper limit. In this case also, the information is recorded in the database 708, and therefore the server 704 refers to the stored information and makes a discount. Accordingly, the provider of the overall system 1500 can acquire the data necessary for efficiently operating the overall system 1500 in the future, and the user can receive a discount in the system usage fee, and therefore there are advantages for both parties.

Furthermore, when the user manually operates the agricultural machine 100 at the agricultural machine or remotely operates the agricultural machine 100 to perform a task, the system usage fee may be reduced compared to the case of automatic control (automatic operation). In this case, as the fee setting, the fee is set to be higher as the quality provided by the overall system 1500 increases (automatic control, remote operation, and manual operation in a descending order of quality). Furthermore, the manual operation of the agricultural machine 100 by using the manual operation unit 116 may be free of charge. The server 704 acquires information for discounting from data stored in the databases 706, 708 and the SSD in the server 704, calculates the discount fee, subtracts the calculated fee, and sends a bill to the user terminal 710, 712. The server 704 is able to charge the fee of fixed charging, the fee at a metered rate, and the contingent fee, independently or in combination. At this time, the above discount is also applied. As described above, the overall system 1500 is able to automatically acquire and automatically compile the information from when the task is started to when the task is completed, and furthermore, to retail selling the crop after being harvested, and therefore the overall system 1500 is able to perform an accurate and efficient charging process.

Note that the user of the overall system 1500 is able to use the user terminal 710, 712, etc., to use a credit card, a debit card, and other kinds of electronic money and pay the fee by electronic payment. Alternatively, the user may pay the fee by bank transfer. When the server 704 cannot confirm the payment of the fee within a predetermined period from when a bill is sent to the user terminal 710, 712, the server 704 may send a reminder to the user terminal 710, 712 or by other means such as by post. When the server 704 cannot confirm the payment of the fee within a predetermined period from when the reminder is sent, the server 704 may prevent the user from using part of or the entire overall system 1500. Accordingly, it is possible to restrict the usage of the overall system 1500 by a user who does not pay the fee.

[Application example of overall system]

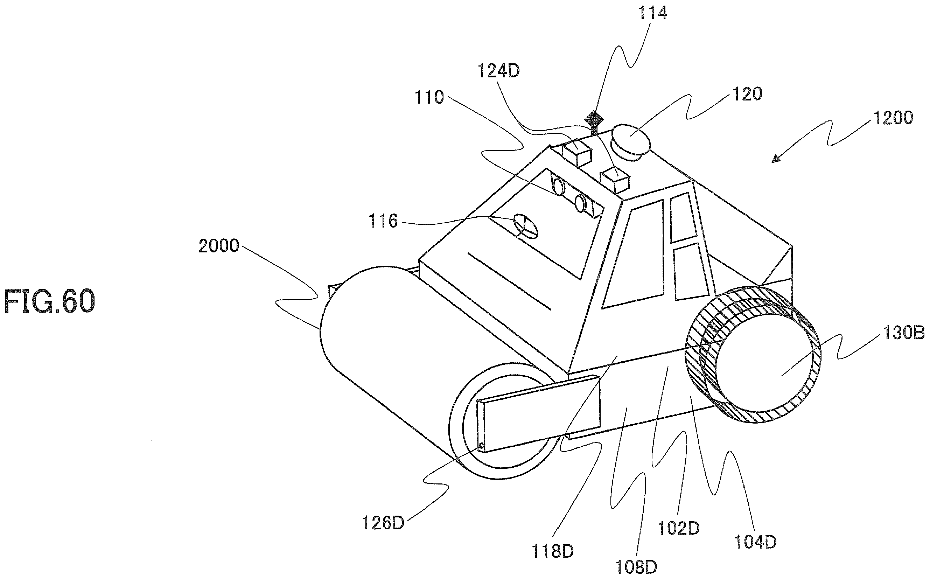

FIG. 60 indicates a construction task machine (road roller) 1200, as another example of a movable body (task body) according to an application of the embodiment of the present embodiment. The construction task machine 1200 has a heavy weight, and includes a wheel (roller) 2000 having a large ground contact area, and the construction task machine 1200 travels while performing a task of applying pressure on the road by the weight of the wheel, to solidify the soft ground. The construction task machine 1200 further includes the motor 102D that is an internal combustion engine, the transmission device 104D, the support device 108D, the stereo camera device 110, the wireless communication antenna 114, the manual operation unit 116, the control device 118D, the GPS antenna 120, the steering device 116, the pair of lamps 124D, the set of ultrasonic sonar devices 126D, and the set of the rear wheels 130B. This construction task machine 1200 is connected to the same information communication system 1502 as indicated in FIG. 2 or FIG. 59 by wireless communication.

The construction task machine 1200 detects the irregularities on the ground by detecting obstacles ahead and by ranging, based on information acquired by the agricultural machine 100, and the construction task machine 1200 can perform the task only in an area having a more than or equal to certain amount of irregularities, as an area that is not yet solidified.

Although the type of task and the task device are different from those of the tasks in the farm land by the agricultural machine 100, etc., the construction task machine 1200 basically performs the same operations as the operations described in the above embodiment.

Note that the area in which the construction task machine performs a task is usually not a farm land, but a construction site, and therefore the operations are performed in the construction site instead of in the farm land.

Note that the application of the overall system 1500 that automatically controls a movable body described in the present embodiment is not limited to the construction task machine; the application may be made with respect to a device and a machine that moves and performs a task. That is, the overall system 1500 according to the present embodiment is applicable to a system that can move based on a plurality of kinds of information and that can perform a task based on a plurality of kinds of information (for example, electromagnetic waves having different frequencies). The moving is basically controlled such that the machine proceeds along a route set in advance or on a corrected route, while observing position information. The determination of the route and the correction of the trajectory when moving are executed by using GPS signals that are wireless signals and wireless signals from a known spot, and additionally, corrections, etc., of positional shifts are executed and movements are made by using image information and distance information (or a parallax value) acquired by the stereo camera device 110. Furthermore, while the machine is moving, the laser radar device 112 may be used instead of or together with the stereo camera device 110 to confirm the shape of the route in the traveling direction and the distance. The task is performed based on information of a surface acquired by a camera device mainly including a lens and imaging elements, and information relevant to information of the surface. For example, in the case of a stereo camera device, the acquired information is a captured image (information of a surface) and distance information (relevant information) in the captured image. In the case of a multispectral camera device, the acquired information is a captured image (information of a surface) and the spectral reflectance information (relevant information) in the captured image. In the case of a combination of a multispectral camera device and a laser radar device, the acquired information is a captured spectral image (information of a surface) and the spectral reflectance information in the captured image and the distance in the image (relevant information). In the case of a combination of a polarization camera and a laser radar device or in the case of a polarization stereo camera device, the acquired information is a high contrast polarization captured image (information of a surface) and the distance in the captured image (relevant information). In the case of a laser radar device that can emit laser beams two-dimensionally, the acquired information is shape information of the target (information of a surface) and the distance information in the shape (relevant information). Furthermore, by combining these camera devices, for example, the movement and the task may be controlled according to the captured image, the distance information, and the spectral reflectance information (combination of stereo camera device and multispectral camera device), and the movement and the task may be controlled according to the captured image, the distance information, and the polarization image information (polarization stereo camera). Furthermore, the overall system 1500 may perform a task by using a composition of these images.

Note that in the present embodiment, the movement and the task by the machine is controlled by using radio waves of electromagnetic waves, light (images), and information relevant to images; however, the information is not so limited, and the system may receive other electromagnetic waves (terahertz waves), elastic waves (sound waves), information superimposed on these waves, and other environmental information, and use the received information to control the movement and the task.

Furthermore, in the case of providing a camera device on a movable body such as an agricultural machine and a construction task machine and capturing images with the camera device, particularly when images are captured while moving, the captured image is highly likely to be blurred. A blurred image can be prevented by decreasing the movement speed (traveling speed, flying speed, and submerging speed, etc.) while capturing images, increasing the shutter speed, and setting a blur correction mechanism in the lens and the imaging sensor. Furthermore, a plurality of captured images may be used to correct the image.

Furthermore, in the present embodiment, a description is given of a method of moving a movable body and a task body basically along a route; however, the method is not so limited. That is, when the user identifies a certain task area or a task place by the user terminal 710, 712, the movable body or the task body autonomously moves in the area or the place and performs a task while moving, while perceiving the environment around the movable body or the task body by various image sensors (camera device), the laser device (laser radar device), an ultrasonic sonar device, and wireless communication. In this case, the movable body and the task body include complex algorithms for autonomous control, and the control device controls the machine such as the movable body and the task body based on the algorithm. In this case, the control device may be provided inside the machine, or may be provided outside the machine and control the machine by wireless communication. This algorithm is for performing autonomous control with respect to the movement when the machine moves, and this algorithm is for performing autonomous control with respect to the operation of an object when performing the task.

Furthermore, the information communicated in the overall system 1500, can also be used as treasure data having quality by itself, and therefore the information is basically securely managed as described above.

{Invention based on present embodiment]

The present embodiment and application example described above include at least the following inventions.

(1) A machine that moves and performs a task with respect to a target without manual operation. The machine moves based on a plurality of kinds of information and performs the task based on a plurality of kinds of information. This machine includes all kinds of machines including an agricultural machine, a construction machine, and a flying machine (the same applies hereinafter). The plurality of kinds of information for controlling the movement without manual operation (based on automatic control) is information for identifying a position by wireless communication, image information and distance information acquired by a stereo camera device and other ranging devices, or image information acquired by a camera device such as a monitoring camera set at a certain location and distance information based on the image information. The plurality of kinds of information for controlling the task without manual operation (based on automatic control) is image information and spectral image information acquired by an imaging element, distance information, reflectance information (spectral reflectance information), polarization image information, and shape information and distance information acquired by a laser device. As described above, the plurality of kinds of information for controlling the movement without manual operation and the plurality of kinds of information for controlling the task without manual operation both include at least information (of a surface) expressed two-dimensionally. In the machine of (1), one of the information items for moving may be image information, or information relevant to the shape. Furthermore, in the machine of (1), one of the information items for performing the task may be image information, or information relevant to the shape. Note that when these machines have a stereo camera device, both the movement and the task can be controlled by using distance information acquired by the stereo camera device. The movement and the task with respect to a target by this machine without manual operation are usually performed alternately or at the same time (the same applies hereinafter).

(2) A machine that moves without manual operation. The machine controls the movement according to a route identified by a plurality of kinds of information. The route for controlling the movement without manual operation is identified by information for identifying a position by wireless communication, distance information acquired by a stereo camera device and other ranging devices, or distance information based on image information acquired by a camera device such as a monitoring camera that can be set at a certain location. This machine described in (2) can perform the task based on the plurality of kinds of information. In the machine of (2), one of the information items for moving may be image information.

(3) A machine that performs a task with respect to a plurality of targets without manual operation. The machine determines whether to execute the task for each target according to the state of each target acquired by the machine. Here, executing a task does not only mean performing the task or not, but also includes the degree of the task (the amount of water spraying and the amount of fertilizer). For example, the machine performs, by automatic control, a task (water spraying, fertilizer application, and agricultural chemical scattering, etc.) on each crop, based information of each crop including the degree of plant activity, the spectral reflectance with respect to a particular wavelength, and whether there pest is included. Furthermore, the machine performs, by automatic control, a task of solidifying the ground according to the status of the road in each area.

(4) A control device for controlling the movement of a machine and a task performed by the machine without manual operation. The control device controls the movement of the machine and the task, based on image information acquired by the machine and information relevant to the image information. In this case, the control device may be part of the machine or may be provided separately from the machine (for example, a server).

(5) A control device for controlling the movement of a machine without manual operation. The control device controls the movement of the machine, based on image information acquired by a device other than the machine and information relevant to the image information. In this case, the control device may be part of the machine or may be provided separately from the machine (for example, a server).

(6) A control device for controlling a task performed by the machine without manual operation. The control device determines whether to execute the task according to the state of each target acquired by the machine. Here, executing a task does not only mean performing the task or not, but also includes the degree of the task (the amount of water spraying and the amount of fertilizer).

(7) A machine including a device for performing a task of leveling the surface and a device for emitting light that is emitted at a predetermined angle with a width. The machine controls the device for leveling the surface according to a position where the light is received by another light receiver provided separately from the machine.

(8) A system including a task machine including a device for performing a task of leveling the surface and a light receiving device for receiving light, and a light emitting device for emitting light that is emitted at a predetermined angle with a width. The task machine controls the device for leveling the surface according to a position of receiving the light that is emitted by the light emitting device.

(9) A machine that moves and performs a task with respect to a target without manual operation. When the machine interrupts the task, the machine moves to another location, and when resuming the interrupted task, the machine returns to the position where the task has been interrupted, and resumes the task. The machine determines whether the machine has returned to the position where the task has been interrupted, by using a plurality of kinds of information.

(10) A machine that moves and performs a task with respect to a target without manual operation. When the task is interrupted due to a task interruption reason that requires movement to another position, and when the task interruption reason is resolved, the machine returns to the position at which the task has been interrupted, and resumes the task.

(11) A system including a machine that performs at least one of moving and performing a task with respect to a target, and a control device that acquires information from the machine by wireless communication and controls the machine, without manual operation. The information obtained from the machine is input to the control device via a plurality of wireless relay devices, and the information output from the control device is input to the machine via a plurality of wireless relay devices.

(12) A machine that moves and performs a task with respect to a target without manual operation. When the machine detects an abnormality, the machine interrupts the task and performs an operation with respect to the abnormality according to the content of the abnormality.

(13) A system that includes a machine that can move and a terminal that can display an image captured by the machine and cause a user to operate the machine. The system also causes the terminal to display information relevant to the image.

(14) A system that includes a machine that performs a task and a control device that instructs the machine to perform the task by using information acquired by the machine. The system stores the target on which that task has been performed and the content of the task. The control device is able to set the stored information as information to be used for determining the content of a future task.

(15) A machine that performs a task with respect to a target without manual operation. The machine acquires information of each target according to the type of task, and determines whether to perform the task based on the acquired information. For example, when the type of task is water spraying, the machine acquires the state of the crop (degree of plant activity, etc.) that is the target by using a multispectral camera, and determines whether to spray water to the crop that is the target based on the acquired state, and when the type of task is to remove pest, the machine determines whether pest is adhering to the surface of the crop that is the target based on an image captured by a polarization camera, and scatters an agricultural chemical only when pest is adhering to the crop.

(16) A control device for instructing a machine, which can perform a task with respect to a target without manual operation, to perform the task. When the task has been performed, the control device calculates a usage fee according to the task.

(17) A machine that can move without manual operation. When there is an obstacle that cannot be recognized by the machine in the travelling direction of the machine, the machine further approaches the obstacle and performs a recognition process.

(18) A control device that controls the movement of a machine that can move without manual operation. When there is an obstacle that cannot be recognized in the travelling direction of the machine, the control device causes the machine to further approach the obstacle, and performs a recognition process.

(19) A machine that acquires visible and invisible electromagnetic waves, recognizes the information included in the electromagnetic waves, and repeats moving and performing a task without manual operation based on the recognized information. As the visible electromagnetic wave, there is visible light, and the machine acquires an image from the visible light. The invisible electromagnetic wave is a wireless radio wave or an invisible light.

(20) A method of performing at least one of moving and performing a task without manual operation. The method includes acquiring a plurality of electromagnetic waves having different frequencies, recognizing information included in the acquired plurality of electromagnetic waves, and performing at least one of moving and performing a task based on the recognized information. The electromagnetic waves include light (visible light and invisible light) and wireless radio waves.

(21) A machine that includes an imaging device, and that performs at least one of moving and performing a task without manual operation based on information other than an image included in each of the small areas in the captured image.

(22) A machine that identifies a position according to a received signal and that moves without manual operation. The machine includes a distance information acquiring unit that acquires information relevant to a distance to a certain spot, and the machine corrects the movement based on the information relevant to the distance acquired by the distance information acquiring unit.

(23) A machine that moves along a route determined in advance. When a reason for changing the route is detected in the route, the machine changes the route, and moves along the changed route.

(24) A machine including an obstacle detecting means for detecting an obstacle in the travelling direction, a recognizing means for recognizing the obstacle when the obstacle detecting means detects the obstacle, and a control means for taking an action according to the recognition result, when the recognizing means recognizes the obstacle. The control means controls the machine to move by avoiding the obstacle, when the recognizing means cannot recognize the obstacle.

(25) A system including a device for identifying an area in which a task is to be performed, and a machine performs the task, without manual operation. The machine moves to the area identified by the device, determines whether the task is necessary for each target in the area, and performs the task only for the target for which the task is determined as necessary.

(26) A machine includes a plurality of sensor devices for acquiring images. A first sensor device acquires an image and distance information in the acquired image. A second sensor device acquires an image and color information in the acquired image. The movement of the machine can be controlled based on the distance information. The task with respect to a target is performed by the machine based on the color information. Alternatively, the machine can perform the task with respect to a target based on the distance and color information.

(27) A machine that performs a task with respect to a target without manual operation. The machine performs a task with respect to a target based on information obtained from the target and information obtained from content information of the Internet.

(28) A system that includes a machine including a task device for performing a task on a target and a computerization device for computerizing a phenomenon of the target, and a control device including a recognizing means for recognizing the phenomenon computerized by the computerization device and a determining means for making a determination according to the phenomenon recognized by the recognizing means. The task device of the machine performs a task with respect to the target without manual operation, according to a determination result by the control device. Here, an example of the computerization device is a sensor device such as various camera devices and the radar laser device, etc., described in the present embodiment. Particularly, by using a sensor device that can acquire information of two dimensions or more, it is possible to increase the range of the phenomena that can be perceived.

(29) A system including a machine that performs a task with respect to a target without manual operation, and a control device that controls the task of the machine. The machine may include an acquiring device that acquires at least part of the target, and the control device obtains tracking information of the target acquired by the acquiring device, and controls the task respect to the target by the machine based on the tracking information. Here, an example of the acquiring device is the harvesting device of the task device 106 described in the present embodiment. In this case, a certain fruit that is a part of the crop and the crop itself is harvested. Even after this fruit and crop are shipped, it is possible to track this fruit and crop by using barcode information, etc., and analyze the shipment status and the status of demand and supply. Accordingly, it is possible to provide feedback for the task of cultivating the same crop.

(30) A machine that moves and performs a task without manual operation, based on information acquired by a non-contact sensor device. The non-contact sensor device is a camera device that can acquire image information and information associated with the image information.

(31) A machine that includes a moving task device that performs a task while moving or that repeats the moving and the task, a task information generating device that generates information relevant to the task, and a transmission device that sends the information generated at the task information generating device to a control device that stores received information and that identifies the task content in a predetermined period based on the stored information. In this case, the information relevant to the task may include information relevant to the start and the end of the task. Furthermore, the information relevant to the task may include information relevant to the interrupting and the resuming of the task.

(32) The machine of (31) further includes a state identifying unit that identifies the state of the task target, and a determining unit that determines whether to perform the task with respect to the task target according to the state identified by the state identifying unit. The information relevant to the task includes the determination result by the determining unit.

(33) In the machine of (31) or (32), the task by the moving task device is performed without manual operation.

(34) A system that includes a machine that performs a task with respect to a task target without manual operation and a control device that identifies the task content based on information acquired from the machine. The machine moves and performs the task, and sends the information relevant to the task to the control device. The control device stores the received information relevant to the task, and identifies and presents the task content within a predetermined period based on the stored information.

In this case, the information relevant to the task may include information relevant to the start and the end of the task. Furthermore, the information relevant to the task may include information relevant to interrupting and the resuming of the task.

Furthermore, the control device may present the task content without identifying the task content while the task is interrupted.

In these cases, the task target is crop, and in the system, the control device makes an analysis with respect to the harvesting of the crop based on the stored information, and presents the analysis result. Furthermore, the analysis by the control device may be performed also by using environment information acquired from outside the system, in addition to the information relevant to the task.

(35) A method of performing a task with respect to a task target and producing task information for identifying the task content. The method of producing task information includes a process of performing the task while moving or repeating the moving and the performing of the task, a process of generating information relevant to the task, a process of storing the information generated in the generating process, a process of identifying the task content within a predetermined period based on the stored information, and a process of outputting the identified task content.

(36) A program for causing a computer to execute processes, or a computer-readable recording medium recording the program, the processes including a process of performing the task while moving or repeating the moving and the performing of the task, a process of generating information relevant to the task, a process of storing the information generated in the generating process, and a process of identifying the task content within a predetermined period based on the stored information

(37) A system that includes a detecting device that can detect information for identifying a state of a crop, and a management device for acquiring the information detected by the detecting device. The detecting device includes a sensor for detecting information for identifying the state of the crop in a non-contact manner and a sending means for sending the information detected by the sensor to the management device. The management device includes an identifying means for identifying the state of the crop from the information sent from the state detecting device and a forecast means for making a forecast relevant to the harvesting of the crop based on the result of identification by the identifying means.

In this case, the detecting device includes a moving means for moving, and may detect the information for determining the state of the crop, while moving in the area in which the crop is cultivated. Furthermore, the detecting device includes a control means for operating the moving means without manual operation.

In the above system, the identifying means includes a recording device for recording the result of the identification, and the forecast means may forecast the harvesting of the crop based on a result of identification to be recorded in the recording device and a result of identification recorded in the past in the recording device. Alternatively, the sending means in the detection device may also send, to the management device, information relevant to the task performed with respect to the crop for which the state is identified, and the forecast means may forecast the harvesting of the crop by also using the information relevant to the task.

(38) A method of producing forecast data that includes a detecting process of detecting information for identifying the state of a crop by a sensor in a non-contact manner, an identifying process of identifying the state of the crop from the information detected in the detecting process, a forecast process for making a forecast relevant to the harvesting of the crop based on the state of the crop identified in the identifying process, and a process of outputting the result of forecast in the forecast process. In this case, the method includes a recording process of recording the state of the crop identified in the identifying process, and the forecast process may include forecasting the harvesting of the crop based on the state of the crop identified in the identifying process and the state of the crop recorded in the past.

(39) A program for causing a computer to execute processes, or a computer-readable recording medium recording the program, the processes including an identifying process of identifying the state of the crop from the information detected in a non-contact manner by using a sensor with respect to the crop, a forecast process for making a forecast relevant to the harvesting off the crop based on the state of the crop identified in the identifying process, and a process of displaying the result of forecast in the forecast process.

(40) A machine that moves and performs a task with respect to a target without manual operation. The machine includes a moving means for moving along a predetermined path, a recognizing means for recognizing a task target by moving by the moving means, a detecting means for detecting the state of the task target recognized by the recognizing means, and a determining means for determining whether to perform the task with respect to the task target based on the detection result by the detecting means. When the determining means determines to perform the task, the task is performed with respect to the task target, and when the determining means determines not to perform the task, the machine moves by the moving means and recognizes the next task target by the recognizing means, without performing the task by the task means.

In this case, when the determining means determines to perform the task, the machine may move to a position near the task target by the moving means and perform the task with respect to the task target.

Furthermore, the machine may further include a measuring means for measuring the remaining amount of fuel or power used for moving. When the remaining amount becomes less than a predetermined value or becomes less than or equal to a predetermined value, the machine may interrupt the task, move to a position for supplying fuel or power, and return to the position where the task has been interrupted after the supply is completed, and resume the task. Furthermore, the machine may further include a confirming means for confirming the remaining amount of a task resource for performing the task. When the remaining amount becomes less than a predetermined value or becomes less than or equal to a predetermined value, the machine may interrupt the task, move to a position for supplying the task resource, and return to the position where the task has been interrupted after the supply is completed, and resume the task.

(41) A system that includes the machine of (40) above and an identifying device for identifying an area where there is a task target that requires a task. The identifying device includes a wide area recognizing means for recognizing a plurality of task targets in an area wider than an area that can be recognized by the machine, and a wide area determining means for determining whether a task target requiring a task is included among the plurality of task targets recognized by the wide area recognizing means. When the wide area determining means determines that there is a task target requiring a task, the machine moves to the area where the task target requiring a task is located by the moving means, and the recognizing means starts the recognizing.

(42) A system includes a machine that moves and performs a task without manual operation and a control device for controlling the task. The machine includes a moving means for moving along a predetermined path, a detecting means for detecting a task target by moving by the moving means, a sending means for sending information relevant to the task target detected by the detecting means to the control device, and a task means for performing the task with respect to the task target according to an instruction from the control device. The control device includes a receiving means for receiving the information sent from the machine, a recognizing means for recognizing the task target by using the information relevant to the task target received by the receiving means, a detecting means for detecting the state of the task target recognized by the recognizing means, a determining means for determining whether to perform the task with respect to the task target based on the detection result by the detecting means, and a control means for instructing the machine to perform the task with respect to the task target when the determining means determines to perform the task and for instructing the machine to move by the moving means and detect the next task target by the detecting means without performing the task by the task means when the when the determining means determines not to perform the task.

In this case, the system further includes an identifying device for identifying an area where there is a task target that requires a task. The identifying device includes a wide area detecting means for detecting a plurality of task targets in an area wider than an area that can be detected by the machine, and a sending means for sending information of the detected plurality of task targets to the control device. The control device includes a receiving means for receiving the information sent from the identifying device, and a wide area determining means for determining whether a task target requiring a task is included among the plurality of task targets based on the information of the plurality of task targets received by the receiving means. When the wide area determining means determines that a task target requiring a task is included, the machine moves to the area where the task target requiring a task is located by the moving means, and the detecting means starts the detecting.

(43) A task method that includes a moving process of moving a task device along a predetermined route, a recognizing process of recognizing a task target by the task device by moving by the moving process, a detecting process of detecting the state of the recognized task target, and a determining process of determining whether to perform the task with respect to the task target based on the detection result. When it is determined in the determining process to perform the task, a task process of performing the task with respect to the task target by the task device is performed, and when it is determined in the determining process not to perform the task, a process of recognizing the next task target while moving by the moving process is performed, without performing the task by the task process.

(44) A program for causing a computer to execute processes, or a computer-readable recording medium recording the program, the processes including a moving process of moving a task device along a predetermined route, a recognizing process of recognizing a task target by the task device by moving by the moving process, a detecting process of detecting the state of the recognized task target, and a determining process of determining whether to perform the task with respect to the task target based on the detection result. When it is determined in the determining process to perform the task, a task process of performing the task with respect to the task target by the task device is performed, and when it is determined in the determining process not to perform the task, a process of recognizing the next task target while moving by the moving process is performed, without performing the task by the task process.

(45) A machine includes a present position acquiring device for acquiring the present position, a sensor device for acquiring image information, a transmission device for transmitting motive energy generated by a motive energy source and moving, and a control device for controlling the movement by the transmission device. The control device controls the movement by the transmission device based on the present position acquired by the present position acquiring means, and corrects the movement based on image information acquired by the sensor device. In this case, the correction of the movement may be done based on information relevant to the distance obtained from the image information. Furthermore, the information relevant to the distance may be information relevant to the distance to the ground surface. Furthermore, the control device may recognize an object present in the travelling direction of the machine based on image information and correct the movement according to the recognition result. Furthermore, the when the object cannot be recognized, the control device may prompt the user to identify the type of the object, or correct the movement so as to avoid the object.

(46) A system that includes a machine including a present position acquiring device for acquiring the present position, a sensor device for acquiring image information, and a transmission device for transmitting motive energy generated by a motive energy source and moving, and a control device for controlling the movement by the machine. The machine sends the present position acquired by the present position acquiring device and the image information acquired by the sensor device to the control device. The control device controls the movement by the machine based on the acquired present position, and corrects the movement of the machine based on the acquired image information.

(47) A method for moving a machine without manual operation, that includes a present position acquiring process of acquiring the present position, an image information acquiring process of acquiring image information, a moving process of transmitting motive energy generated by a motive energy source and moving, a process of moving based on the present position acquired in the present position acquiring process, and a process of correcting the movement based on the image information acquired in the image information acquiring process.

(48) A program for causing a computer to execute processes, or a computer-readable recording medium recording the program, the processes including a present position acquiring process of acquiring the present position, an image information acquiring process of acquiring image information, a moving process of transmitting motive energy generated by a motive energy source and moving, a process of moving based on the present position acquired in the present position acquiring process, and a process of correcting the movement based on the image information acquired in the image information acquiring process.

Note that the present application claims the benefit of priority of Japanese Patent Application No. 2014-146163 filed on July 16, 2014, the contents of which are incorporated herein in their entirety.

The agricultural machine and a system in the farm land are described in the above embodiments; however, the present invention is not limited to the specific embodiments described above, and variations and modifications may be made without departing from the scope of the present invention.

**Claims**

1. A system comprising:

   a first operation device configured to perform an operation with respect to a first target;
   at least one sensor configured to acquire analog information from the first target; and
   a control device configured to identify the first target based on at least one type of first digital information among a plurality of types of digital information relating to the first target acquired from the analog information acquired by the at least one sensor, and control the operation by the first operation device with respect to the first target identified based on at least one type of second digital information different from the first digital information among the plurality of types of the digital information.

2. The system according to claim 1, wherein
   the first operation device is a transmission device configured to transmit motive energy for performing a movement, the motive energy being generated at a motive energy generation source.

3. The system according to claim 2, wherein
   the at least one sensor is a stereo camera including two imaging elements for acquiring a light reflected by the first target, and
   the control device acquires digital image information of the first target as the first digital information and acquires information relating to a distance to the first target as the second digital information, identifies the first target by the digital image information of the first target, and controls the movement by the transmission device with respect to the first target identified based on the information relating to the distance to the first target.

4. The system according to claim 1, wherein
   the second digital information is information identifying a state of the first target,
   the first operation device is a task device configured to perform a task with respect to the first target, and
   the control device controls the task by the task device with respect to the identified first target based on the information identifying the state of the first target.

5. The system according to claim 4, wherein
   the sensor acquires information by separating a light reflected by the first target into a P polarization component and an S polarization component,
   the information identifying the state of the first target is information acquired from digital image information of at least one of the digital image information according to the P polarization component of the first target and the digital image information according to the S polarization component of the first target, and
   the control device causes the task device to perform the task with respect to the identified first target, based on the information acquired from at least one of the digital image information.

**6.** The system according to claim 4, wherein
the sensor is a multispectral camera configured to acquire a light reflected by the first target as spectral light,
the information identifying the state of the first target is information relating to a spectral reflectance of the first target, and
the control device makes a determination regarding the task to be performed by the task device with respect to the identified first target, based on the information relating to the spectral reflectance of the first target.

**7.** The system according to claim 2 or 3, further comprising:

a second operation device configured to perform an operation with respect to a second target that is different from the first target, wherein
the control device identifies the second target based on at least one type of third digital information among the plurality of types of the digital information, and controls the operation by the second operation device with respect to the identified second target based on at least one type of fourth digital information different from the third digital information among the plurality of types of the digital information.

**8.** The system according to claim 7, wherein
the fourth digital information is information identifying a state of the second target,
the second operation device is a task device configured to perform a task with respect to the second target, and
the control device controls the task by the task device with respect to the identified second target based on the information identifying the state of the second target.

**9.** The system according to claim 8, wherein
the sensor acquires information by separating a light reflected by the second target into a P polarization component and an S polarization component,
the information identifying the state of the second target is information acquired from digital image information of at least one of the digital image information according to the P polarization component of the second target and the digital image information according to the S polarization component of the second target, and
the control device causes the task device to perform the task with respect to the identified second target, based on the information acquired from at least one of the digital image information.

**10.** The system according to claim 8, wherein
the sensor is a multispectral camera configured to acquire a light reflected by the first target as spectral light,
the information identifying the state of the second target is information relating to a spectral reflectance of the second target, and
the control device makes a determination regarding the task to be performed by the task device with respect to the identified second target, based on the information relating to the spectral reflectance of the second target.

**11.** A machine including the system according to any one of claims 2, 3, 7, 8, 9, and 10, wherein
the machine is configured to perform the movement according to the transmission device, and
the control device controls the movement by the transmission device such that the movement is performed by avoiding the identified first target.

**12.** The machine according to any one of claims 4 through 6, wherein
the control device controls the task by the task device such that the task is performed with respect to the identified first target according to the state of the first target.

**13.** The machine according to any one of claims 8 through 10, wherein
the control device controls the task by the task device such that the task is performed with respect to the identified second target according to the state of the second target.

**14.** A control method for controlling an operation according to a target based on information acquired with a sensor, the control method comprising:

a step of acquiring a plurality of types of digital information relating to the target, from analog information relating to the target acquired by the sensor; and
a step of identifying the target based on at least one type of the digital information among the plurality of types of the digital information relating to the target acquired by the above step, and controlling an operation with respect to the identified target based on at least one of another type of the digital information.

**15.** A program for causing a computer to execute:

a step of acquiring a plurality of types of digital information relating to a target, from analog information relating to the target acquired by a sensor; and
a step of identifying the target based on at least one type of the digital information among the plurality of types of the digital information relating to the target acquired by the above step, and controlling an operation with respect to the identified target based on at least one of another type of the digital information.

**16.** A computer-readable recording medium storing the program according to claim 15.

FIG.1

# FIG.2

1502(1500)

# FIG.3

EP 3 171 241 A1

# FIG.4

FIG.5

106, 110, 112, 113,
114, 116, 120, 122,
124, 126

106, 110, 112, 113,
114, 116, 120, 122,
124, 126

104-2

130

118

208

210

228

206

224-2

102-2

216

214

226

130

FIG.6

EP 3 171 241 A1

FIG.7

110

2

10a

10b

FIG.8

EP 3 171 241 A1

# FIG.9

# FIG.10

71

## FIG.11A

## FIG.11B

## FIG.11C

# FIG.12A

p(x,y)

# FIG.12B

q(x+d,y)

d

# FIG.13

# FIG.14

# FIG.15

# FIG.16

# FIG.17

113

400

402

# FIG.18

EP 3 171 241 A1

# FIG.19

— 409

— 410

FIG.20

## FIG.21

430

## FIG.22

SPECTRAL REFLECTANCE

WAVELENGTH

# FIG.23A

409

430

430c

430a 430b

# FIG.23B

409

440

440a 440b

# FIG.24

EP 3 171 241 A1

# FIG.25

# FIG.26

# FIG.27

501

B

A

502

# FIG.28

# FIG.29

# FIG.30A

# FIG.30B

# FIG.30C

# FIG.31

AGRICULTURAL MACHINE ~100

SERVER ~704

USER TERMINAL ~710, 712

( START INITIAL SETTING ) ~S100

S102 — PROMPT TO SEND DATA FOR IDENTIFYING FARM LAND

S104

SEND FARM LAND DATA

S106 — IDENTIFY FARM LAND

S108 — PROMPT TO SEND DATA FOR IDENTIFYING PLACE TO PERFORM TASK

S110

SEND DATA OF PLACE TO PERFORM TASK

S112 — IDENTIFY TASK PLACE

S114 — PROMPT TO SEND DATA FOR IDENTIFYING TYPE OF TASK, AGRICULTURAL MACHINE TO PERFORM TASK, AND TRAVELLING METHOD

S116

SEND DATA OF TYPE OF TASK, AGRICULTURAL MACHINE, AND TRAVELLING METHOD

S118 — IDENTIFY TYPE OF TASK, AGRICULTURAL MACHINE, AND TRAVELLING METHOD

S120 — SEND TASK DATA TO USER TERMINAL, AND PROMPT CONFIRMATION

S122

SEND CONFIRMATION ITEMS

S124 — TO BE CHANGED? — YES → TO S126

NO ↓
TO S130

FIG.32

EP 3 171 241 A1

FIG.33

EP 3 171 241 A1

EP 3 171 241 A1

```
┌──────────────────────┐                ┌──────────────┐              ┌──────────────┐
│   AGRICULTURAL       │~100            │ SERVER ~704  │              │    USER      │~710, 712
│     MACHINE          │                └──────────────┘              │  TERMINAL    │
└──────────────────────┘                                              └──────────────┘
                                                                  S150~( START TASK )
                                                                              │          ~S152
        ┌──────────────────────────┐                              ┌──────────────────────┐
S156~   │ CONFIRM PRESENT POSITION │                              │ SEND INSTRUCTION TO  │
        └──────────────────────────┘                              │     START TASK       │
                                                                  └──────────────────────┘
        ┌──────────────────────────┐          S154~
S158~   │  CONFIRM DIRECTION OF     │        ┌──────────────────────────┐
        │  AGRICULTURAL MACHINE     │        │ CONFIRM INSTRUCTION TO   │
        └──────────────────────────┘        │      START TASK          │
        ┌──────────────────────────┐        └──────────────────────────┘
        │ CALCULATE ROUTE FROM     │
        │ PRESENT POSITION TO TASK │
S160~   │ START POSITION ACCORDING │
        │    TO TYPE OF TASK       │
        └──────────────────────────┘
        ┌──────────────────────────┐
        │    MOVE TO TASK          │
S162~   │  START POSITION BY       │
        │  CALCULATED ROUTE        │
        └──────────────────────────┘
        ┌──────────────────────────┐          ~S166
S164~   │ SEND REPORT OF REACHING  │        ┌──────────────────────────┐                 ~S168
        │  TASK START POSITION     │        │ RECORD TASK START TIME   │        ┌──────────────────────────┐
        └──────────────────────────┘        └──────────────────────────┘        │ RECEIVE REPORT OF TASK   │
        ┌──────────────────────────┐                                            │        START             │
S170~   │      PERFORM TASK        │                                            └──────────────────────────┘
        └──────────────────────────┘
        ┌──────────────────────────┐          ~S174
S172~   │ SEND REPORT THAT TASK IS │        ┌──────────────────────────┐                 ~S176
        │        ENDED             │        │  RECORD TASK END TIME    │        ┌──────────────────────────┐
        └──────────────────────────┘        └──────────────────────────┘        │ RECEIVE REPORT OF TASK   │
        ┌──────────────────────────┐                                            │         END              │
S178~   │ CALCULATE ROUTE TO       │                                            └──────────────────────────┘
        │  STORAGE POSITION        │
        └──────────────────────────┘
        ┌──────────────────────────┐
        │   MOVE TO STORAGE        │
S180~   │    POSITION BY           │
        │  CALCULATED ROUTE        │
        └──────────────────────────┘
S182~ ( COMPLETE  TASK )
```

FIG.34

FIG.35A

# FIG.35B

# FIG.36

# FIG.37A

AGRICULTURAL MACHINE —100

START S224 —S250

↓

TRAVEL —S252

↓

END S224 —S254

# FIG.37B

AGRICULTURAL MACHINE —100

START S224 —S260

↓

TRAVEL/TASK —S262

↓

CONFIRM TASK RESOURCE —S264

↓

END S224 —S266

# FIG.38

EP 3 171 241 A1

# FIG.39

EP 3 171 241 A1

# FIG.40

| AGRICULTURAL MACHINE | — 100 |

START S262 — S300

EMIT LASER — S302

RECEIVED LIGHT AT HIGH POSITION ? — S304
NO / YES

TRAVEL — S306

LOWER LEVELING PLATE ACCORDING TO LIGHT RECEIVING POSITION BEFORE LEVELING PLATE REACHES LASER EMITTING POSITION — S308

RECEIVED LIGHT AT LOW POSITION ? — S310
NO / YES

TRAVEL — S312

RAISE LEVELING PLATE ACCORDING TO LIGHT RECEIVING POSITION BEFORE LEVELING PLATE REACHES LASER EMITTING POSITION — S314

TRAVEL — S316

ROTATION NECESSARY? — S318
NO / YES

ROTATE LASER RADAR DEVICE — S320

END S262 — S322

# FIG.41A

# FIG.41B

# FIG.41C

# FIG.42

EP 3 171 241 A1

FIG.43

FIG.44

# FIG.45A

# FIG.45B

# FIG.46

SERVER — 704

START PROCESS — S330

S332
ACQUIRE MONITORING IMAGE/INFORMATION

S334
DETECT PLACE WHERE TASK IS NEEDED

S336
IDENTIFY POSITION OF DETECTED PLACE

S338
SEND IDENTIFIED POSITION AS TASK PLACE

END PROCESS — S340

# FIG.47

AGRICULTURAL MACHINE ~100

START S224 ~S350

S352~ ACQUIRE IMAGE INFORMATION/ ADDITION INFORMATION

SERVER ~704

S353

ANALYZE INFORMATION

S354

TASK NECESSARY? — NO

YES ↓ S356

TRAVEL

S358

HAS TASK DEVICE REACHED NEAR TASK TARGET? — NO

YES ↓ S359

PERFORM TASK

S360

SEND INFORMATION TO SERVER

S362

TASK OF SPECIFIED AREA COMPLETED ? — NO

YES ↓ S364

IS THERE NEXT TASK AREA? — NO

YES ↓ S366

CALCULATE ROUTE

S368

CONFIRM TASK RESOURCE

S370

TRAVEL

END S224 ~S372

S361

REGISTER TASK INFORMATION IN DATABASE

FIG.48

# FIG.49

AGRICULTURAL MACHINE ~100

START S224 ~S400

S402 TARGET OPERATION COMPLETED? —YES→

NO ↓

S405 INFORMATION SENT? —YES→

NO ↓

S408 DURING TASK? —YES→

NO ↓

S418 CONFIRM/SEND PRESENT POSITION

↓ S419

CALCULATE ROUTE

↓ S420

TRAVEL

↓ S422

ARRIVED? —YES→

NO ↓

S410 INTERRUPT TASK

↓ S412

STORE PRESENT POSITION

↓ S414

IDENTIFY TARGET AND PERFORM RANGING

↓ S416

SEND INFORMATION

S424 TARGET OPERATION

↓ S426

OPERATION COMPLETED? —NO→

YES ↓

S427 SEND OPERATION END INFORMATION, CALCULATE ROUTE

S430 TRAVEL

↓ S431

TASK INTERRUPTED? —NO→

YES ↓

S432 ARRIVED NEAR TASK INTERRUPTION POSITION? —NO→

YES ↓

S434 MEASURE DISTANCE WITH TARGET

↓ S436

DISTANCES MATCH? —YES→

NO ↓

S438 MAKE DISTANCES MATCH

↓ S440

SEND TASK RESUME INFORMATION

↓ S442

RESUME TRAVELLING/TASK

S444 END S224

EP 3 171 241 A1

# FIG.50A

370

1[2] 17.2m

# FIG.50B

372

19.0m

FIG.51

EP 3 171 241 A1

FIG.52

100

500

370

370

370

1000

EP 3 171 241 A1

FIG.53

EP 3 171 241 A1

AGRICULTURAL MACHINE — 100

SERVER — 704

S450 — START EVENT OCCURRING TIME PROCESS

S452 — DETECT ABNORMALITY IN IMAGE CAPTURED BY MONITORING CAMERA

S454 — REPORT TO USER TERMINAL

S456 — PROCESS WITH RESPECT TO ABNORMALITY COMPLETED? — YES

NO — S458

S458 — RECOGNITION PROCESS

S460 — ABNORMALITY CONTENT RECOGNIZED ? — NO

YES — S462

S462 — OPERATION ACCORDING TO ABNORMALITY CONTENT

TO S456

S464 — IDENTIFY LOCATION OF ABNORMALITY AREA

S468 — INSTRUCTION SENT TO AGRICULTURAL MACHINE?

YES

NO — S470

S470 — IDENTIFY AGRICULTURAL MACHINE CLOSEST TO ABNORMALITY AREA, AND SEND INSTRUCTION

S472 — SEND INFORMATION TO AGRICULTURAL MACHINE

TO S456

S204 OR S223

S500 — RECEIVE ABNORMALITY INFORMATION

S501 — UPDATE ROUTE

S224

S502 (S400–S444) — FLOW WHEN TASK IS INTERRUPTED

TO S226

S474 — END EVENT OCCURRING TIME PROCESS

FIG.54

AGRICULTURAL MACHINE ~100

SERVER ~704

FROM S420

DETECTED ABNORMALITY CONTENT ? S550

NO

YES

STOP TEMPORARILY S552

SEND IMAGE AND DISTANCE INFORMATION S554

TO S444

RECOGNITION PROCESS S558

RECOGNITION POSSIBLE? S560

YES

NO

WITHIN PREDETERMINED DISTANCE? S562

NO

YES

NOT DETERMINED AS ARRIVED S564

SEND TO USER TERMINAL S566

DETERMINED AS ARRIVED/SPECIFY TARGET TASK S568

DETERMINED AS ARRIVED? S570

YES

NO

TO S444

TO S424

FIG.55

EP 3 171 241 A1

FIG.56

FIG.57

FIG.58

EP 3 171 241 A1

## FIG.59

1502(1500)

7043

RAM | CPU — 7041

704

7044 | SSD | ROM — 7042

I / F

7045

702

700

701

706

708

705

707

710

712

FIG.60

## INTERNATIONAL SEARCH REPORT

| International application No. |
| --- |
| PCT/JP2015/061542 |

A. CLASSIFICATION OF SUBJECT MATTER
*G05D1/02*(2006.01)i, *A01B69/00*(2006.01)i

According to International Patent Classification (IPC) or to both national classification and IPC

B. FIELDS SEARCHED

Minimum documentation searched (classification system followed by classification symbols)
G05D1/02, A01B69/00

Documentation searched other than minimum documentation to the extent that such documents are included in the fields searched
Jitsuyo Shinan Koho         1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2004-280451 A  (Matsushita Electric Works, Ltd.), 07 October 2004 (07.10.2004), paragraphs [0040] to [0087]; fig. 1 to 27 & US 2006/0184274 A1    & WO 2004/081683 A1 & DE 112004000438 T5    & TWI 242701 B & KR 10-2005-0108396 A | 1-16 |
| Y | JP 3-208105 A  (Tennant Co.), 11 September 1991 (11.09.1991), page 5, lower right column, line 20 to page 6, upper left column, line 14; fig. 3 & US 5020620 A            & EP 420447 A2 | 1-3,7-11, 13-16 |

| ☒ | Further documents are listed in the continuation of Box C. | ☐ | See patent family annex. |

* Special categories of cited documents:
"A" document defining the general state of the art which is not considered    to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 02 July 2015 (02.07.15) | 14 July 2015 (14.07.15) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/061542

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2013-20543 A  (Yamaha Motor Co., Ltd.), 31 January 2013 (31.01.2013), paragraphs [0040] to [0047]; fig. 11 (Family: none) | 3,7-10,13 |
| Y | JP 6-133624 A  (Yanmar Agricultural Equipment Co., Ltd.), 17 May 1994 (17.05.1994), paragraphs [0009] to [0012]; fig. 1, 3 (Family: none) | 1,4-10,12,13 |
| Y | JP 2012-84121 A  (Ricoh Co., Ltd.), 26 April 2012 (26.04.2012), paragraph [0019]; fig. 3 & US 2012/0069181 A1    & EP 2439716 A2 | 5,9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP T2010517567 PCT

- JP 2014146163 A